(19) Europäisches Patentamt

European Patent Office

Office européen des brevets

(11) **EP 4 648 418 A1**

(12) **EUROPEAN PATENT APPLICATION**
published in accordance with Art. 153(4) EPC

(43) Date of publication:
**12.11.2025 Bulletin 2025/46**

(21) Application number: **23913951.2**

(22) Date of filing: **03.01.2023**

(51) International Patent Classification (IPC):
**H04N 19/593** (2014.01)    **H04N 19/176** (2014.01)
**H04N 19/70** (2014.01)

(52) Cooperative Patent Classification (CPC):
**H04N 19/176; H04N 19/593; H04N 19/70**

(86) International application number:
**PCT/CN2023/070230**

(87) International publication number:
**WO 2024/145791 (11.07.2024 Gazette 2024/28)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **ZHANG, Lai**
  **Dongguan, Guangdong 523860 (CN)**
• **WANG, Fan**
  **Dongguan, Guangdong 523860 (CN)**

(74) Representative: **RGTH
Patentanwälte PartGmbB
Neuer Wall 10
20354 Hamburg (DE)**

(54) **DECODING METHOD, CODING METHOD, DECODERS, AND CODERS**

(57)    Provided in the embodiments of the present application are a decoding method, a coding method, decoders, and coders. The decoding method comprises: on the basis of a code stream, determining a residual block of a current block in a current sequence; on the basis of an intra template matching prediction (Intra TMP) mode, predicting at least one matching block of the current block; on the basis of the at least one matching block, determining a target prediction block of the current block; and on the basis of the residual block of the current block and the target prediction block, obtaining a reconstructed block of the current block. In the embodiments of the present application, a decoder can determine the target prediction block on the basis of a single matching block selected by the IntraTMP mode, and can also determine the target prediction block on the basis of a plurality of matching blocks selected by the IntraTMP mode, which not only improves the prediction flexibility of the current block, but also facilitates the decoder in selecting a suitable number of matching blocks to determine the target prediction block, thereby improving the coding and decoding performance.

300

| Determine a residual block of a current block in a current sequence based on a bitstream | — S310 |
| Predict at least one matching block of the current block based on an Intra Template Matching Prediction (IntraTMP) mode | — S320 |
| Determine a target prediction block of the current block based on the at least one matching block | — S330 |
| Obtain a reconstructed block of the current block based on the residual block of the current block and the target prediction block | — S340 |

FIG. 7

## Description

### TECHNICAL FIELD

Embodiments of this application relate to the field of coding technologies, and more specifically, to a decoding method, an encoding method, a decoder, and an encoder.

### BACKGROUND

The digital video compression technology is mainly used to compress huge digital video data, so as to facilitate transmission, storage, and the like. With the sharp increasing of Internet videos and a growing demand for video definition, although existing digital video compression standards can implement video decompression, a better digital video decompression technology is still needed to improve compression efficiency.

### SUMMARY

Embodiments of this application provide a decoding method, an encoding method, a decoder, and an encoder, which can improve coding performance.

According to a first aspect, an embodiment of this application provides a decoding method, including:

determining a residual block of a current block in a current sequence based on a bitstream;
predicting at least one matching block of the current block based on an intra template matching prediction IntraTMP mode;
determining a target prediction block of the current block based on the at least one matching block; and
obtaining a reconstructed block of the current block based on the residual block of the current block and the target prediction block.

According to a second aspect, an embodiment of this application provides an encoding method, including:

predicting at least one matching block of a current block in a current sequence based on an intra template matching prediction IntraTMP mode;
determining a target prediction block of the current block based on the at least one matching block;
obtaining a residual block of the current block based on the target prediction block and an original block of the current block; and
encoding the residual block of the current block.

According to a third aspect, an embodiment of this application provides a decoder, including:

a residual unit, configured to determine a residual block of a current block in a current sequence based on a bitstream;
a prediction unit, configured to predict at least one matching block of the current block based on an intra template matching prediction IntraTMP mode;
a determining unit, configured to determine a target prediction block of the current block based on the at least one matching block; and
a reconstruction unit, configured to obtain a reconstructed block of the current block based on the residual block of the current block and the target prediction block.

According to a fourth aspect, an embodiment of this application provides an encoder, including:

a prediction unit, configured to predict at least one matching block of a current block in a current sequence based on an intra template matching prediction IntraTMP mode;
a determining unit, configured to determine a target prediction block of the current block based on the at least one matching block;
a residual unit, configured to obtain a residual block of the current block based on the target prediction block and an original block of the current block; and
an encoding unit, configured to encode the residual block of the current block.

According to a fifth aspect, an embodiment of this application provides a decoder, including:

a processor, configured to execute a computer program;
a computer readable storage medium, wherein the computer readable storage medium stores the computer program, and when the computer program is executed by the processor, the method according to first aspect or various implementations thereof.

In an implementation, the processor includes one or more processors, and the memory includes one or more memories.

In an implementation, the computer readable storage medium may be integrated with the processor, or the computer readable storage medium is disposed separately from the processor.

According to a sixth aspect, an embodiment of this application provides an encoder, including:

a processor, configured to execute a computer program;
a computer readable storage medium, wherein the computer readable storage medium stores the computer program, and when the computer program is executed by the processor, the method according to second aspect or various implementations thereof.

In an implementation, the processor includes one or more processors, and the memory includes one or more memories.

In an implementation, the computer readable storage medium may be integrated with the processor, or the computer readable storage medium is disposed separately from the processor.

According to a seventh aspect, an embodiment of this application provides a computer readable storage medium. The computer readable storage medium stores a computer instruction. When the computer instruction is read and executed by a processor of a computer device, the computer device performs the decoding method in the first aspect or the encoding method in the second aspect.

According to an eighth aspect, an embodiment of this application provides a computer program product or a computer program, where the computer program product or the computer program includes a computer instruction, and the computer instruction is stored in a computer readable storage medium. When a processor of a computer device reads the computer instruction from the computer readable storage medium, and executes the computer instruction, the computer device executes the decoding method in the first aspect or the encoding method in the second aspect.

According to a ninth aspect, an embodiment of this application provides a bitstream, where the bitstream is a bitstream involved in the method in the first aspect or is a bitstream generated by the method in the second aspect.

Based on the foregoing technical solutions, the decoder predicts at least one matching block of the current block based on the IntraTMP mode, and further determines a target prediction block of the current block based on the at least one matching block. That is, the decoder may determine the target prediction block based on a single matching block selected in the IntraTMP mode, or may determine the target prediction block based on multiple matching blocks selected in the IntraTMP mode, which can not only improve prediction flexibility for the current block, but also facilitates the decoder to select a proper quantity of matching blocks to determine the target prediction block, thereby improving coding performance.

## BRIEF DESCRIPTION OF DRAWINGS

FIG. 1 is a schematic block diagram of an encoding framework according to an embodiment of this application.
FIG. 2 is a schematic block diagram of a decoding framework according to an embodiment of this application.
FIG. 3 is a schematic diagram of an IntraTMP technology according to an embodiment of this application.
FIG. 4 shows an example of a template error value between a current block and a matching block according to an embodiment of this application.
FIG. 5 shows an example of an IntraTMP adaption for camera-captured content according to an embodiment of this application.
FIG. 6 is a schematic diagram of an area division method for a current block according to an embodiment of this application.
FIG. 7 is a schematic flowchart of a decoding method according to an embodiment of this application.
FIG. 8 shows an example of a pruning and refining process according to an embodiment of this application.
FIG. 9 shows another example of a pruning and refining process according to an embodiment of this application.
FIG. 10 shows an example of determining a target prediction block based on multiple matching blocks according to an embodiment of this application.
FIG. 11 shows an example of a template of a current block according to an embodiment of this application.

FIG. 12 is a schematic flowchart of an encoding method according to an embodiment of this application.

FIG. 13 is a schematic block diagram of a decoder according to an embodiment of this application.

FIG. 14 is a schematic block diagram of an encoder according to an embodiment of this application.

FIG. 15 is a schematic block diagram of an electronic device according to an embodiment of this application.

## DESCRIPTION OF EMBODIMENTS

The following describes the technical solutions in the embodiments of this application with reference to the accompanying drawings.

The solutions provided in the embodiments of this application may be applied to the field of digital video coding technologies. For example, the solutions include but are not limited to: the field of image coding, the field of video coding, the field of hardware video coding, the field of dedicated circuit video coding, and the field of real-time video coding. In addition, the solutions provided in this embodiment of this application may be combined into audio video standard (Audio Video coding Standard, AVS), a second generation AVS standard (AVS2), or a third generation AVS standard (AVS3), for example, including but not limited to: H.264/audio video coding (Audio Video coding, AVC) standard, H.265/high efficiency video coding (High Efficiency Video Coding, HEVC) standard and H.266/versatile video coding (Versatile Video Coding, VVC) standard. In addition, the solution provided in this embodiment of this application may be used to perform lossy compression (lossy compression) on the image, or may be used to perform lossless compression (lossless compression) on the image. The lossless compression may be visual lossless compression (visually lossless compression), or may be mathematical lossless compression (mathematically lossless compression).

The block-based hybrid encoding framework is used for video coding standards. Specifically, each image in the video is segmented into square largest coding units (largest coding unit, LCU) or coding tree units (Coding Tree Unit, CTU) of the same size (e.g., 128x128, 64x64, etc.). Each largest coding unit or coding tree unit may be divided into rectangular coding units (coding unit, CU) according to rules. A coding unit may further be divided into prediction units (prediction unit, PU), transform units (transform unit, TU), and the like. The hybrid encoding framework includes modules such as prediction (prediction), transform (transform), quantization (quantization), entropy coding (entropy coding), and in-loop filtering (in loop filter) block. The prediction module includes intra prediction (intra prediction) and inter prediction (inter prediction). The inter prediction includes motion estimation (motion estimation) and motion compensation (motion compensation). Since there is a strong correlation between adjacent pixels in an image of a video, spatial redundancy between adjacent pixels is eliminated by using an intra prediction method in a video coding technology. The intra prediction predicts the pixel information in the current division block by referring only to the information of the same image. Because of strong similarity between adjacent images in a video, time redundancy between adjacent images is eliminated by using an inter prediction method in a video coding technology, thereby improving encode efficiency. The inter prediction may refer to image information of different frames, and search for motion vector information that best matches the current division block by using the motion estimation. The transform converts the predicted image block into a frequency domain, and redistributes energy. With the quantizing, insensitive information to a human eye can be removed, so as to eliminate visual redundancy. The entropy coding may eliminate character redundancy according to a current context model and probability information of a binary bitstream.

In a digital video coding process, the encoder may first read a black-and-white image or a color image from the original video sequence, and then perform encoding on the black-and-white image or the color image. The black and white image may include pixels of luma component, and the color image may include pixels of chroma component. Optionally, the color image may further include pixels of luma component. A color format of the original video sequence may be a luminance-chrominance (YCbCr, YUV) format, a red-green-blue (Red-Green-Blue, RGB) format, or the like. Specifically, after reading the black-and-white image or the color image, the encoder divides the black-and-white image or the color image into block, generates a prediction block of the current block by using the intra prediction or the inter prediction, subtracts the original block of the current block by the prediction block to obtain the residual block, , obtains the quantize coefficient matrix by transforming and quantizing the residual block , and performs entropy coding on the residual block to output to the bitstream. In the digital video decoding process, the decoding side applies intra prediction or inter prediction on a current block to generate a prediction block for the current block. In addition, the decoding side obtains the quantize coefficient matrix from the bitstream decode, performs inverse quantization and inverse transform on the quantize coefficient matrix to obtain the residual block, and adds the predicted block and the residual block to obtain the reconstructed block. The reconstructed block may be used to form the reconstructed image, where the decoding side performs in-loop filtering on the reconstructed image based on the image or based on the block to obtain a decoded image.

The current block (current block) may be a current coding unit (CU), a current prediction unit (PU), or the like.

It should be noted that the encoding side also needs to obtain the decoded image by using an operation similar to the decoding side. The decoded image may be used as a reference image of the subsequent image inter prediction. The block partitioning information, and mode information or parameter information of prediction, transform, quantization, entropy coding, and in-loop filtering or the like determined by the encoding side may be written into the bitstream if necessary.

The decoding side determines, by parsing and analyzing the existing information, the same block division information and the same mode information or parameter information of prediction, transform, quantization, entropy coding, and in-loop filtering or the like as the encoding side, so as to ensure that the decoded image obtained by the encoding side is the same as the decoded image obtained by the decoding side. The decoded image obtained by the encoding side is generally also referred to as a reconstructed image. During prediction, a current block may be divided into prediction units. During transform, a current block may be divided into transform units. Division of prediction units and transform units may be the same or different. Certainly, the foregoing is only a basic procedure of a video encoder or decoder in the block-based hybrid encoding framework. With development of a technology, some modules of the framework or some steps of the procedure may be optimized. This application is applicable to a basic procedure of a video encoder or decoder in the block-based hybrid encoding framework.

For ease of understanding, the encoding framework provided in this application is first briefly described.

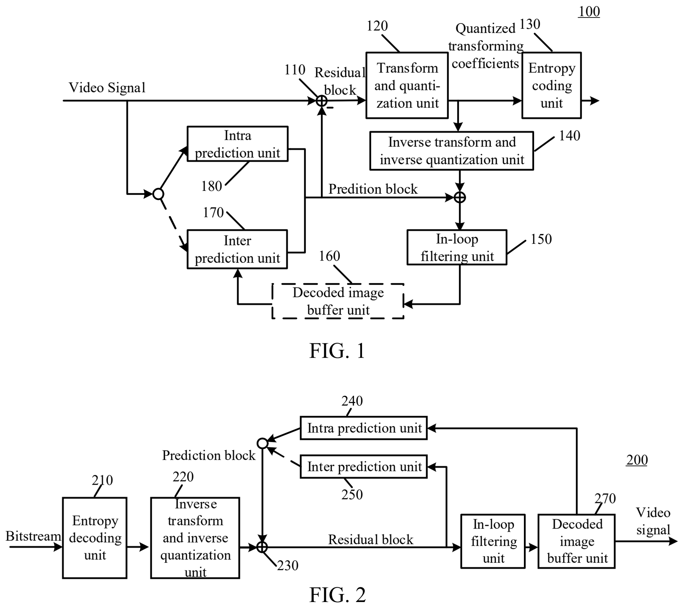

FIG. 1 is a schematic block diagram of an encoding framework 100 according to an embodiment of this application.

As shown in FIG. 1, the encoding framework 100 may include an intra prediction unit 180, an inter prediction unit 170, a residual unit 110, a transform and quantization unit 120, an entropy coding unit 130, an inverse transform and inverse quantization unit 140, and an in-loop filtering unit 150. Optionally, the encoding framework 100 may further include a decoded image buffer unit 160. The encoding framework 100 may also be referred to as a hybrid framework encoding mode.

The intra prediction unit 180 or the inter prediction unit 170 may predict the to-be-encoded image block, so as to output the prediction block. The residual unit 110 may calculate a residual block, that is, a difference between the predicted block and the to-be-encoded image block, based on the predicted block and the to-be-encoded image block. The transform and quantization unit 120 is configured to perform operations such as transforming and quantizing on the residual block to remove insensitive information to the human eye, thereby eliminating visual redundancy. Optionally, the residual block before being processed by the transform and the quantization unit 120 may be referred to as a time domain residual block, and the residual block after being processed by the transform and the quantization unit 120 may be referred to as a frequency residual block or a frequency domain residual block. After receiving the quantized transforming coefficients output by the transform and quantization unit 120, the entropy coding unit 130 may output the bitstream based on the quantized transforming coefficients. For example, the entropy coding unit 130 may eliminate character redundancy according to the target context model and probability information of the binary bitstream. For example, the entropy coding unit 130 may be configured for context-based adaptive binary arithmetic entropy coding (CABAC). The entropy coding unit 130 may also be referred to as header information coding unit. Optionally, in this application, the to-be-encoded image block may also be referred to as an original image block or a target image block, the prediction block may also be referred to as a prediction image block or an image prediction block, may also be referred to as a prediction signal or prediction information, and the reconstructed block may also be referred to as a reconstructed image block or an image reconstructed block, and may also be referred to as a reconstruction signal or reconstruction information. In addition, for the encoding side, the to-be-encoded image block may also be referred to as a encoded block or an encoded image block, and for the decoding side, the to-be-encoded image block may also be referred to as a decoded block or a decoded image block. The to-be-encoded image block may be a CTU or a CU.

The encoding framework 100 calculates a block residual between the predicted block and the to-be-encoded image, which is transformed, quantized, and the like, and transmits the processed residual block to the decoding side. Correspondingly, after receiving the bitstream, the decoding side decodes the bitstream and obtains the residual block by performing steps such as inverse transform and inverse quantization, and add the residual block and the predicted block obtained by the decoding side to obtain the reconstructed block.

It should be noted that the inverse transform and inverse quantization unit 140 in the encoding framework 100, the in-loop filtering unit 150, and the decoded image buffer unit 160 may be configured to form a decoder. This is equivalent to that, the intra prediction unit 180 or the inter prediction unit 170 may predict a to-be-encoded image block based on an existing reconstructed block, thereby ensuring that an understanding of the reference image is consistent between the encoding side and the decoding side. In other words, the encoder can replicate the processing loop of the decoder, which in turn can produce the same prediction as the decoding side. Specifically, the quantized transform coefficient is processed by the inverse transform and inverse quantization unit 140 to obtain the approximate residual block of the decoding side. The approximate residual block added to the predicted block may pass through the in-loop filtering unit 150 to smoothly filter out the block effects due to block processing and quantization. The image block output by the in-loop filtering unit 150 may be stored in the decoded image cache unit 160, so as to be used for subsequent image prediction.

It should be understood that FIG. 1 is only an example of this application, and should not be construed as a limitation of this application.

For example, the in-loop filtering unit 150 in the encoding framework 100 may include a deblocking filter (DeBlocking Filter, DBF) and a sample adaptive offset (Sample Adaptive Offset, SAO) filtering. The DBF is used to remove the block effect, and the SAO is used to remove the ringing effect. In another embodiment of this application, the encoding framework 100 may use a neural network based loop filter algorithm to improve video compression efficiency. Alternatively, the encoding framework 100 may be a video encoding hybrid framework based on a deep learning neural network. In one implementation, based on the deblocking filter and the sample adaptive compensation filter, a convolution neural network based model may be used to calculate a filtered pixel result. Network structures of the in-loop filtering unit 150 for the luma component and the chroma component may be the same or different. Considering that the luma component contains more visual information, the chroma filtering guided by luma component may also be used to improve the reconstruction quality of the chroma component.

The following describes the contents related to intra prediction and inter prediction.

For inter prediction, the inter prediction may refer to image information of different frames, and search for motion vector information that best matches the to-be-encoded image block by using the motion estimation, so as to eliminate time redundancy. A frame used by the inter prediction may be a P frame and/or a B frame. The P frame refers to a forward prediction frame, and the B frame refers to a bidirectional prediction frame.

For the intra prediction, the intra prediction predicts pixel information in the to-be-encoded image block by referring only to information in a same image, so as to eliminate spatial redundancy. The frame used by the intra prediction may be an I frame. For example, the to-be-encoded image block may be predicted according to an encode sequence from left to right and from top to bottom, and the to-be-encoded image block may be predicted by referring to the upper left image block, the upper image block, and the left image block as reference information. The to-be-encoded image block is also used as reference information for a next image block. In this way, an entire image may be predicted. If the input digital video is in a color format, such as a YUV 4:2:0 format, every four pixels of each image frame of the digital video include four Y components and two UV components, and the encoding framework may separately perform encoding on the Y component (that is, luma block) and the UV component (that is, chroma block). Similarly, the decoding side may also perform corresponding decoding according to the format.

For the intra prediction process, the intra prediction may predict the to-be-encoded image block by using an angular prediction mode and a non-angular prediction mode, so as to obtain the prediction block. According to the calculated distortion rate information between the prediction block and the to-be-encoded image block, an optimal prediction mode of the to-be-encoded image block is screened out, and the prediction mode is transmitted to the decoding side by the bitstream. The decoding side obtains the prediction mode by means of parsing, obtains the prediction block of the target decoded block by means of prediction, and adds the prediction block and the time domain residual block obtained from the bitstream, so as to obtain the reconstructed block.

With the development of digital video coding standards, the non-angular prediction modes have remained relatively stable, including a DC mode and a planar mode. The angular prediction mode increases with the evolution of the digital video coding standards. Taking the international digital video coding standard H series as an example, there are only 8 angular prediction modes and 1 non-angular prediction mode in the 264/AVC standard. The H.265/HEVC extends to 33 angular prediction modes and 2 non-angular prediction modes. In the 266/VVC, the intra prediction mode is further extended, and there are 67 conventional prediction modes and a non-conventional prediction mode, i.e., the matrix weighted intra prediction (Matrix weighted intra prediction, MIP) modes for the luma block, where the 67 conventional prediction modes include a planar (planar) mode, a DC (DC) mode, and 65 angular prediction modes. The planar mode is usually used to process a block with aa texture gradient. The DC mode is usually used to process some flat areas as defined by the name of the DC mode. The angular prediction modes are usually used to process blocks with a clear angular texture.

It should be noted that in this application, a current block used for intra prediction may be a square block, or may be a rectangle block.

Further, for a square intra prediction block, each angular prediction mode has the same probability of being used. When the length and width of a current block are not equal to each, for a horizontal block (whose width is greater than height), a probability of using a reference pixel on an upper side is greater than a probability of using a reference pixel on a left side, and for a vertical block (whose height is greater than width). a probability of using a reference pixel on an upper side is less than a probability of using a reference pixel on a left side. When predicting a rectangle block, a traditional angular prediction mode is converted to a wide angular prediction mode. When predicting the rectangle block by using the wide angular prediction mode, a prediction angle range of the current block is greater than a prediction angle range when predicting the rectangle block by using the traditional angular prediction mode. Optionally, when the wide-angle prediction mode is used, a signal may still be sent by using the index of the conventional angular prediction mode. Correspondingly, after receiving the signal, the decoding side may convert the conventional angular prediction mode to the wide-angle prediction mode. Therefore, both a total quantity of intra prediction modes and the encoding methods using the intra prediction modes may remain unchanged.

Further, the to-be-used intra prediction mode may be determined or selected based on a size of the current block. For example, the wide-angle prediction mode may be determined or selected based on the size of the current block to perform intra prediction on the current block. For example, when a current block is a rectangle block (the width and height have different sizes), the wide-angle prediction mode may be used to perform intra prediction on the current block. The aspect ratio of current block may be used to determine an angular prediction mode replaced with a wide-angle prediction mode and the obtained angular prediction mode. For example, when predicting a current block, any intra prediction mode with an angle not exceeding a diagonal of the current block (from the lower left corner to the upper right corner of the current block) may be selected as the replaced angular prediction mode.

FIG. 2 is a schematic block diagram of a decoding framework 200 according to an embodiment of this application.

As shown in FIG. 2, the decoding framework 200 may include an entropy decoding unit 210, an inverse transform and inverse quantization unit 220, a residual unit 230, an intra prediction unit 240, an inter prediction unit 250, an in-loop filtering unit 260, and a decoded image buffer unit 270. After receiving and parsing the bitstream, the entropy decoding unit 210 obtains the prediction block and the frequency domain residual block. For the frequency domain residual block, steps such as inverse transform and inverse quantization may be performed by using the inverse transform and inverse quantization unit 220, and the prediction block predicted by using the intra prediction unit 240 or the inter prediction unit 250 may be added by the residual unit 230 to the time domain residual block obtained by performing inverse transform and inverse quantization by the inverse transform and inverse quantization unit 220, to obtain a reconstructed block.

It should be noted that the decoding method and the encoding method provided in this embodiment of this application affect the intra prediction part in the video coding hybrid framework, and are specifically applied to the IntraTMP part of the intra prediction. The decoding method provided in this embodiment of this application is applied to the intra prediction part of the decoding side, and the encoding method provided in this embodiment of this application is applied to the intra prediction part of the encoding side.

To facilitate understanding of the technical solutions of this application, the following describes related content.

(1) Intra Template Matching Prediction (Intra Template Matching Prediction, IntraTMP) mode.

The IntraTMP mode is a special luma block intra prediction encode tool, which is mainly applied to the screen content encode.

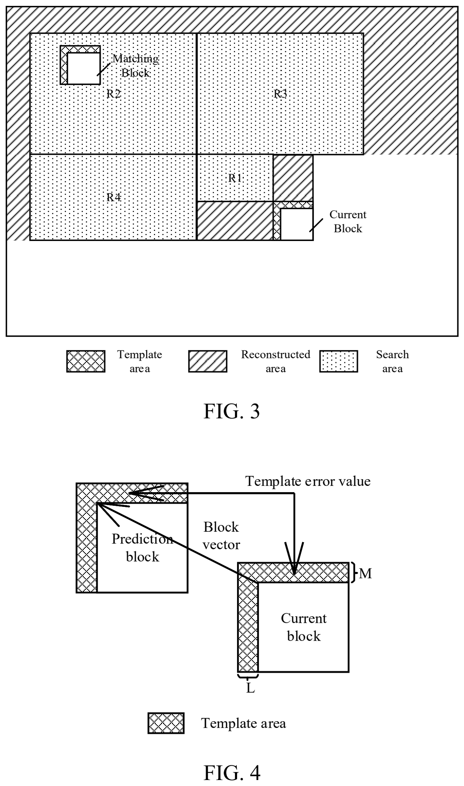

FIG. 3 is a schematic diagram of an IntraTMP mode according to an embodiment of this application.

As shown in FIG. 3, the IntraTMP mode is mainly implemented by using the following processes.

The encoder (or decoder) selects the reconstructed pixels in an L-shaped part adjacent to the current coding block as templates, searches for the most similar template in the reconstructed area of the given current frame, and uses the reconstructed block corresponding to the most similar template as the matching block to serve as the prediction block of the current coding block. For example, R1 to R4 in the figure are available search areas in the IntraTMP mode. For example, matching block may be searched in a raster scan (raster scan) sequence in R1 to R4 in a pixel-wise manner.

FIG. 4 is an example of a template error value between a current block and a matching block according to an embodiment of this application.

As shown in FIG. 4, a template of the current block may include L columns of pixels on a left side of the current block, M columns of pixels on an upper side, and M rows and L columns of pixels on an upper left side of the current block, where both M and L are positive integers, for example, values of both M and L are 4. The matching block of the current block may be represented by a block vector pointing from the current block to the matching block. A similarity degree between the template of the current block and the template of the matching block is represented by a template error value. A smaller template error value indicates a higher similarity degree. For example, a template error value may be calculated by using a sum of absolute difference (Sum of Absolute Difference, SAD). A smaller SAD indicates that a template is more similar.

The encoder uses the flag cu_tmp_flag to indicate whether the current coding block uses the IntraTMP mode. If yes, the same template matching process is performed at the decoding side to obtain the same prediction block at the decoding side. For the IntraTMP mode, no additional block vector information is required to be coded in the bitstream.

(2) IntraTMP adaption for camera-captured content

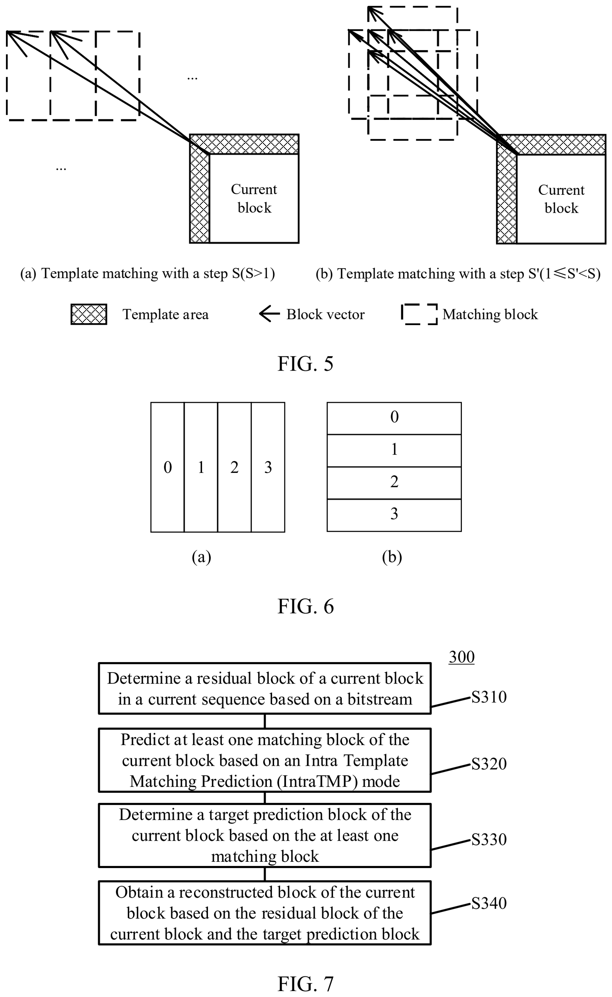

FIG. 5 is an example of IntraTMP adaption for camera-captured content according to an embodiment of this application.

As shown in (a) in FIG. 5, based on the original IntraTMP mode, the IntraTMP adaption for camera-captured content is proposed as performing template matching by using a step S (that is, every S pixels in the vertical direction, S>1). For example, in a search area, a matching block is not searched pixel by pixel by grid scan (raster scan), but is searched every S pixels in a horizontal direction and a vertical direction of the search area. For example, if the block vector used to perform current template matching is $(X_0, Y_0)$, the block vector used to perform next template matching in the horizontal direction should be $(X_0-S, Y_0)$, and the block vector used to perform next template matching in the vertical direction has a vertical ordinate of $Y_0-S$. After template matching is completed, as shown in (b) in FIG. 5, the best matching block is refined within a range (that is, template matching is performed at a smaller step S'). For example, the matching block vector is refined by a method of performing template matching at a smaller step to optimize a matching result. This technology effectively reduces complexity of the IntraTMP mode while maintaining better encoding efficiency.

(3) Template-Based Intra Mode Derivation (TIMD) technology

The TIMD technology uses reconstructed pixels in an L-shaped part of adjacent to a current coding block as a template. Specifically, the encoding side may calculate prediction pixels of template areas in different intra prediction modes by traversing a Most Probable Mode (Most Probable Mode, MPM) list. Further, a template error value between prediction pixels in different intra prediction mode and reconstructed pixels is obtained. For example, the template error value may be represented by a sum of absolute transformed difference (Sum of Absolute Transformed Difference, SATD). Therefore, the encoding side may select the optimal intra prediction mode according to the template error value. In the decoding side, the intra prediction mode is obtained in a same derivation manner, so as to reduce bits for encoding mode information.

(4) Combined Inter and Intra Prediction (CIIP) mode

The CIIP mode combines the intra prediction and the inter prediction, that is, obtains the prediction block of the current coding block by using the weighted combination of the intra prediction block and the inter prediction block. In an enhanced compression reference software test platform (Enhanced Compression Model, ECM), a CIIP mode is combined with a template-based prediction technology, and different weights are designed for different regions to further improve prediction accuracy. Specifically, the intra prediction block pred_intra is obtained in the TIMD mode, and the inter prediction block pred_inter is obtained in the template-based merge (Merge) mode. The encoding side determines the weight values wIntra and wInter according to the derived intra prediction mode and the position of the to-be-predicted pixel. The final prediction block Pred is calculated as follows:

$$Pred = (wIntra * pred\_intra + wInter * pred\_inter + 4) >> 3$$

Pred represents the prediction block of the current block, pred_intra represents the intra prediction block, wIntra represents a weight value of the intra prediction block, wInter represents the inter prediction block, and pred_inter represents a weight value of the inter prediction block.

The wIntra and the wInter may be determined according to the intra prediction mode intra_dir derived from the TIMD. There are 65 types of intra angular prediction mode ($2 \leq$ intra_dir <= 66) in the ECM. When $2 \leq$ intra_dir<34, the current coding block is divided into four equal blocks vertically. When 34<=intra_dir<=66, the current coding block is divided into four equal blocks horizontally. For example, the weight values wIntra and wInter of each region may be determined with reference to Table 1:

Table 1

| Region index | (WIntra, wInter) |
|---|---|
| 0 | (6, 2) |
| 1 | (5, 3) |
| 2 | (3, 5) |
| 3 | (2, 6) |

As shown in Table 1, different region indexes correspond to different wIntra and different wInter. That is, when the region index is 0, wIntra is 6 and wInter is 2, when the region index is 1, wIntra is 5 and wInter is 3, when the region index is 2, wIntra is 3 and wInter is 5, and when the region index is 3, wIntra is 2 and wInter is 6.

FIG. 6 is a schematic diagram of a current block area division method according to an embodiment of this application.

As shown in (a) in FIG. 6, when the current coding block is divided into four equal blocks vertically, the region indexes are respectively 0, 1, 2, and 3 from left to right. As shown in (b) in FIG. 6, when the current coding block is divided into four equal blocks horizontally, the region indexes of the current coding block are respectively 0, 1, 2, and 3 from top to bottom.

It should be noted that when intra_dir is equal to 0 or 1, wIntra and wInter may be obtained in another manner. For example, when intra_dir is equal to 0 or 1, the area is not divided, and wIntra and wInter are selected from (3,1), (2,2), and (1,3) according to encoding types (intra or inter-frame) of two coding block located on a left side and an upper side. For example, if both the encoding types of the two coding blocks are intra coding, the encoding side determines (wIntra, wInter) as (3,1). If the encoding types of one coding block of the two coding blocks are intra coding and the encode type of the other coding block is inter coding, the encoding side determines (wIntra, wInter) as (2,2). If both the encode types of the two coding blocks are inter coding, the encoding side determines (wIntra, wInter) as (3,1).

(5) Intra Block Copy (IBC) technology.

IBC technology is an intra prediction technology of obtaining predicted pixels based on block matching. Similar to inter prediction, prediction is implemented by using a block vector pointing from the current block to the reference block. The difference lies in that the reference block of inter prediction comes from encoded reconstructed frame, while the reference block of IBC comes from a reconstructed part of the current frame. The block vector information needs to be transmitted by the bitstream. Therefore, similar to the inter prediction, the IBC-AMVP mode and the IBC-Merge mode may be applied.

The IBC-AMVP mode obtains the predicted block vector by using the constructed candidate block vector list, and obtains the reference block of the current block and the corresponding final block vector by using a process such as a hash search and a full search. The final block vector is encoded according to prediction block vector to improve encode efficiency.

The IBC-Merge mode performs prediction by using the constructed candidate block vector list, and selects the best block vector in the list as the final block vector by using encode processes such as SATD and RDO. The reconstructed block directed by the final block vector is used as the reference block to complete the prediction. The index of the block vector in the list, rather than the block vector itself, is encoded to improve encode efficiency.

The candidate block vector list may be formed by encoded information of a block vector of an adjacent coding block, a historical block vector, and an average block vector.

Both the IBC technology and the IntraTMP mode are block vector based prediction technologies. Therefore, the technical solution for improving the IntraTMP mode provided in this application may also be applicable to the IBC technology to a certain extent, and a corresponding extension solution of the IBC technology is also within the protection scope of this application. This is not specifically limited in this application.

It should be noted that, based on the foregoing description of the IntraTMP mode, it can be learned that the IntraTMP mode selects an optimal matching block as the prediction block by using the template. However, in this method, a prediction error is generated due to noise generated in a lossy compression process and a limited correlation between the template and the corresponding block. In some cases, an accurate prediction block cannot be obtained, thereby reducing decode performance of the decoder. In addition, the IntraTMP mode performs prediction by means of block compensation. In a scenario such as screen content sequence in which there are many repeated pixels blocks, even if the decoder selects an optimal matching block as the prediction block by using the template based on the IntraTMP mode, decode performance of the decoder can be ensured. However, in a scenario such as a natural content sequence in which there are many noise signals and complex pixel changes, if the decoder still selects an optimal matching block as a prediction block by using a template based on the IntraTMP mode, when a difference between the current block and the optimal matching block selected by using the template based on the IntraTMP mode is relatively large, the IntraTMP mode may reduce decode performance of the decoder. In view of this, embodiments of this application provide a decoding method, an encoding method, a decoder, and an encoder, which can improve encoding and decoding performance.

FIG. 7 is a schematic flowchart of a decoding method 300 according to an embodiment of this application. It should be understood that the decoding method 300 may be executed by a decoder or a decoding framework. For example, it is applied to the decoding framework shown in FIG. 2. For ease of description, the following uses decoder as an example to describe the decoding method 300.

As shown in FIG. 7, the decoding method 300 may include the following steps S310 to S340.

S310. A decoder determines a residual block of a current block in a current sequence based on a bitstream.

For example, the decoder determines the residual block of the current block by using the decode bitstream, where the bitstream decoded by the decoder is the bitstream of the current sequence.

S320. The decoder predicts at least one matching block of the current block based on an Intra Template Matching Prediction (Intra Template Matching Prediction, IntraTMP) mode.

For example, the at least one matching block may be a single matching block.

For example, the at least one matching block may be multiple matching blocks.

S330. The decoder determines a target prediction block of the current block based on the at least one matching block.

For example, when the at least one matching block is a single matching block, the decoder may determine the single matching block as the target prediction block.

For example, when the at least one matching block is multiple matching blocks, the decoder may fuse the multiple matching blocks to obtain the target prediction block.

Certainly, in another alternative embodiment, the decoder may also combine the at least one matching block with a prediction block obtained by using another prediction mode, to obtain the target prediction block. This is not specifically limited in this embodiment of this application. For example, the another prediction mode may be an intra prediction mode, or may be an inter prediction mode.

S340. The decoder obtains a reconstructed block of the current block based on the residual block of the current block and the target prediction block.

For example, the decoder may determine the sum of the residual block of the current block and the target prediction block as the reconstructed block of the current block.

In this embodiment, the decoder predicts at least one matching block of the current block based on the IntraTMP mode, and further determines a target prediction block of the current block based on the at least one matching block. This is equivalent to that, the decoder may determine the target prediction block based on a single matching block selected by the IntraTMP mode, or may determine the target prediction block based on multiple matching blocks selected by the IntraTMP mode, which can not only improve prediction flexibility of the current block, but also help the decoder select a proper quantity of matching blocks to determine the target prediction block, thereby improving decode performance.

With reference to Table 2, the following describes a result obtained after the test sequence required by the JVET is tested in the All Intra condition by the solution provided in this application which is integrated with the ECM6.0 of the IntraTMP adaption for camera-captured content. The End-to-end bit distortion (End-to-End Bit distortion) rate (End-to-End BD-rate) is an indicator for measuring algorithm performance or encode performance, which indicates a change of a bit rate and a PSNR of an encode algorithm provided in this application compared with an original encode algorithm. A negative value indicates that performance is improved. Y, U, and V denote components of a current block.

Table 2

|  | Y (BD-rate) | U (BD-rate) | V (BD-rate) | Encode Performance Improvement (EncT) | Decode Performance Improvement (DecT) |
|---|---|---|---|---|---|
| Category A1 | -0.02% | -0.09% | -0.05% | 101% | 102% |
| Category A2 | -0.18% | -0.16% | -0.29% | 101% | 104% |
| Category B | -0.15% | -0.26% | -0.18% | 101% | 103% |
| Category C | -0.05% | 0.02% | -0.08% | 101% | 102% |
| Category E | -0.30% | -0.14% | -0.24% | 100% | 102% |
| Average value | -0.14% | -0.13% | -0.16% | 101% | 103% |
| Category D | -0.01% | -0.01% | 0.14% | 100% | 102% |
| Category F | 0.02% | 0.15% | -0.04% | 102% | 102% |

As shown in Table 2, it can be learned from the test result that, in the solution provided in this application, performance of all sequence categories is improved, and BD-rate average changes on Y, U, and V components are respectively -0.14%, -0.13%, and -0.16%. It indicates that the present technology improves encode performance with relatively low complexity. In addition, the decoding method provided in this embodiment increases the decoding time by only 3%, and the encoding method corresponding to the decoding method increases the encoding time by only 1% of.

In some embodiments, the S320 may include the following step:
the decoder determines a first flag based on the bitstream; and if the first flag indicates performing fusion prediction by using the IntraTMP mode, the decoder predicts the at least one matching block based on the IntraTMP mode.

For example, the decoder performs decoding on the bitstream to obtain the first flag, and if the first flag indicates performing fusion prediction by using the IntraTMP mode, the decoder predicts the at least one matching block based on the IntraTMP mode. Otherwise, the decoder obtains the target prediction block by using another prediction mode.

For example, if the at least one matching block is a single matching block, the first flag indicates performing fusion prediction by using the IntraTMP mode and another prediction mode, that is, the first flag indicates performing fusion prediction by using the single matching block obtained based on the IntraTMP mode and the prediction block obtained based on the another prediction mode. In other words, the target prediction block is a prediction block obtained by performing fusion on the single matching block obtained based on the IntraTMP mode and the prediction block obtained based on the another prediction mode.

For example, if the at least one matching block is multiple matching blocks, the first flag indicates performing fusion prediction by using the multiple matching blocks obtained by the IntraTMP mode, that is, the target prediction block is a prediction block obtained by performing fusion on the multiple matching blocks obtained in the IntraTMP mode.

For example, if the at least one matching block is multiple matching blocks, the first flag indicates performing fusion prediction by using the IntraTMP mode and another prediction mode, that is, the first flag indicates performing fusion prediction by using the multiple matching blocks obtained based on the IntraTMP mode and the prediction block obtained based on the another prediction mode. In other words, the target prediction block is a prediction block obtained by performing fusion on the multiple matching blocks obtained based on the IntraTMP mode and the prediction block obtained based on the another prediction mode.

It should be noted that another prediction mode used to perform fusion prediction with the IntraTMP mode may be any prediction mode, for example, may be an intra prediction mode, or may be an inter prediction mode, for example, may be an angular prediction mode, or may be a non-angular prediction mode.

For example, the first flag may be a sequence level flag, or may be an image level (that is, a frame level) flag, or may be a slice level flag, or may be an image block level flag.

For example, when the value of the first flag is 0, it indicates that the IntraTMP mode is used for fusion prediction, and when the value of the first flag is 1, it indicates that the IntraTMP mode is not used for fusion prediction. Alternatively, when the value of the first flag is 1, it indicates that the IntraTMP mode is used for fusion prediction; and when the value of the first flag is 0, it indicates that the IntraTMP mode is not used for fusion prediction. Certainly, other values may be used for the indication, which is not limited in this embodiment.

Certainly, the first flag may also implement the indication in another manner, which is not limited in this application.

For example, when the value of the first flag is "true", it indicates that the IntraTMP mode is used for fusion prediction, and when the value of the first flag is "false", it indicates that the IntraTMP mode is not used for fusion prediction.

For example, if the first flag indicates that the IntraTMP mode is not used to perform fusion prediction, the decoder may determine a prediction mode of the current block by further decoding the bitstream. In other words, if the first flag indicates that the IntraTMP mode is not used to perform fusion prediction, the decoder does not need to predict the at least one matching block based on the IntraTMP mode, and does not need to determine the target prediction block based on the at least one matching block.

In some embodiments, the decoder determines a second flag based on the bitstream. If the second flag indicates performing prediction by using the IntraTMP mode, determining the first flag based on the bitstream.

For example, the decoder performs decoding on the bitstream to obtain the second flag, and if the second flag indicates performing prediction by using the IntraTMP mode, the decoder performs decoding on the bitstream to obtain the first flag. Otherwise, the decoder obtains the target prediction block by using another prediction mode.

For example, the second flag may be a sequence level flag, or may be an image level (that is, a frame level) flag, or may be a slice level flag, or may be an image block level flag.

For example, when the value of the second flag is 0, it indicates that the IntraTMP mode is used for prediction, and when the value of the second flag is 1, it indicates that the IntraTMP mode is not used for prediction. Alternatively, when the value of the second flag is 1, it indicates that the IntraTMP mode is used for prediction, and when the value of the second flag is 0, it indicates that the IntraTMP mode is not used for prediction. Certainly, other values may be used for the indication, which is not limited in this embodiment.

Certainly, the second flag may also implement the indication in another manner, which is not limited in this application.

For example, when the value of the second flag is "true", it indicates that the IntraTMP mode is used for prediction, and when the value of the second flag is "false", it indicates that the IntraTMP mode is not used for prediction.

For example, if the second flag indicates that prediction is not performed by using the IntraTMP mode, the decoder may determine the prediction mode of the current block by further decoding the bitstream. In other words, if the second flag indicates that fusion prediction is not performed by using the IntraTMP mode, the decoder does not need to predict the at least one matching block based on the IntraTMP mode, and does not need to determine the target prediction block based on the at least one matching block.

For example, if the second flag indicates that the IntraTMP mode is used for prediction, and the first flag indicates that the IntraTMP mode is not used for fusion prediction, the decoder predicts a best matching block based on the IntraTMP mode, and determines the target prediction block based on the best matching block. For example, the decoder may directly determine the best matching block as the target prediction block.

For example, when the decoder reads the bitstream, the syntax element relating to performing fusion prediction with the IntraTMP may be implemented as shown in Table 3:

Table 3

| Coding_unit (x0, y0, cbWidth, cbHeight, cqtDepth, treeType, modeType) { | |
|---|---|
| ... | |
| If (CuPredMode[chType] [x0] [y0] = = MODE_INTRA ‖ CuPredMode[chType] [x0] [y0] = = MODE_PLT) { | |
| If (treeType = = SINGLE _TREE ‖ treeType == DUAL_TREE_LUMA) { | |
| If **(pred _mode_pit _flag)** | Ae (v) |
| ... | |
| Else { | |
| If (sps_bdpcm_enabled_flag && cbWidth <= MaxTsSize && cbHeight <= MaxTsSize) | |

(continued)

| | |
|---|---|
| **Intra_bdpcm_luma_flag** | Ae (v) |
| If (intra_bdpcm_luma_flag) | |
| ... | |
| Else { | |
| If (sps_tmp_enabled_flag && CbWidth <= MaxTmpSize && cbHeight <= MaxTmpSize) | |
| **Intra_tmp_flag** | Ae (v) |
| If (Intra_tmp_flag) | |
| **Intra_tmp_ fusion flag** | Ae (v) |
| Else { | |
| ... | |
| } | |
| } | |
| } | |
| } | |
| ... | |
| } | |
| ... | |
| } | |

Explanations of the elements in Table 3 are as follows:
Coding_unit: syntax element related to a coding block.

Sps_tmp_enabled_flag: an SPS flag, indicating whether the video sequence can be predicted by using the IntraTMP mode. If the value is 1, the current video sequence can be predicted by using the IntraTMP mode. If the value is 0, the current video sequence cannot be predicted by using the IntraTMP mode. The value of the SPS flag can be set by the user.

MaxTmpSize: an SPS parameter, indicating the size limit of the block that can be predicted by using the IntraTMP mode. If the width or height of the block is greater than MaxTmpSize, the IntraTMP mode cannot be used for prediction. SPS parameters can be set by the user.

Intra_tmp_flag (that is, the second flag described above): a block flag, indicating whether the current block uses the IntraTMP mode for prediction. If the value of intra_tmp_flag is equal to 1, it indicates that current block uses the IntraTMP mode for prediction, that is, decoder is required to decode the flag of intra_tmp_fusion_flag. If the value of intra_tmp_flag is equal to 0, it indicates that the current block does not use the IntraTMP mode for prediction, that is, the decoder does not need to decode the flag intra_tmp_fusion_flag.

Intra_tmp_fusion_flag (that is, the first flag described above): a block flag, indicating whether the current block uses the IntraTMP for fusion prediction. If a value of intra_tmp_fusion_flag is equal to 1, it indicates that current block uses IntraTMP for fusion prediction. If the value of intra_tmp_fusion_flag is equal to 0, it indicates that current block uses IntraTMP to predict a single matching block.

For example, the decoder decodes an input bitstream according to a CTU sequence, and divides a CTU into different blocks according a decoded block division flag, to perform decoding. If the flag sps_tmp_enabled_flag in the SPS is equal to 1, and the current block size meets a limitation MaxTmpSize on the IntraTMP coding block size in the SPS, the decoder may determine the intra_tmp_flag by performing decoding on the bitstream. If intra_tmp_flag is equal to 1, it indicates that current block uses IntraTMP mode for prediction. In this case, the decoder may determine intra_tmp_fusion_flag by further decoding to bitstream. If intra_tmp_flag is equal to 0, it indicates that the current block does not use the IntraTMP mode for prediction. In this case, the decoder does not need to determine the intra_tmp_fusion_flag by decoding bitstream.

In some embodiments, the decoder may determine the first flag in the following manner:

determining a target context index; and

determining the first flag based on the bitstream and using the target context index.

For example, the target context index is used for uniquely identify a context or context model, so that after determining the target context index, the decoder may decode the bitstream by using a context or context model indicated by the target context index, and obtain the first flag.

Certainly, in another alternative embodiment, the decoder may also determine the context index used by the second flag. A method for determining the context index used by the first flag may be the same as or different from the method for determining the context index used by the first flag. This is not specifically limited in this application.

In some embodiments, the decoder determines the target context index based on decoded information of an adjacent decoded block of the current block; and/or the decoder determines the target context index based on a size of the current block.

For example, the decoded information of the adjacent decoded block includes but is not limited to information such as a prediction mode used by the adjacent decoded block, a context index used when decoding a block level flag of the adjacent decoded block, a template of the adjacent decoded block, a location of the adjacent decoded block, and a decoded value of the adjacent decoded block.

For example, the size of the current block includes but is not limited to information such as a height of the current block, a width of the current block, and a quantity of pixels in the current block.

For example, the decoder performs decoding on the first flag by using the target context index CtxIdxInc, where the target context index may be determined according to information such as decoded information of an adjacent decoded block and a size of the current block. For example, the decoder may determine, based on the decoded information of the adjacent decoded block, Q possible values of the target context index, for example, Q is equal to 3 or another value.

In some embodiments, coordinates of the current block are $(x, y)$, and the adjacent decoded block includes a first decoded block whose coordinates are $(x-1, y)$ and a second decoded block whose coordinates are $(x, y-1)$. The decoded information of the first decoded block includes a prediction mode used for the prediction block of the first decoded block, and the decoded information of the second decoded block includes a prediction mode used for the prediction block of the second decoded block. In this case, the decoder may determine the target context index in the following manner. If the prediction mode used for the prediction block of the first decoded block is a mode of performing fusion prediction based on the IntraTMP mode, a first value is assigned to A; otherwise, the first value is assigned to B, where both A and B are integers. If the prediction mode used for the prediction block of the second decoded block is a prediction mode of performing fusion prediction based on the IntraTMP mode, a second value is assigned to C; otherwise, the second value is assigned to D, where both C and D are integers. Then the sum of the first value and the second value is determined as the target context index.

For example, A=1, B=0, C=1, and D=0. That is, it is assumed that coordinates of current block are $(x, y)$; if a decoded block cuLeft exists at coordinates $(x-1, y)$ and intra_tmp_fusion_flag of cuLeft is 1, then CtxIdxInc is 1; otherwise, CtxIdxInc is 0; Then, if a decoded block cuAbove exists at coordinates $(x, y-1)$ and intra_tmp_fusion_flag of cuAbove is 1, then CtxIdxInc is increased by 1, otherwise, CtxIdxInc is increased by 0.

Certainly, in another alternative embodiment, A, B, C, and D may also be other values, which is not specifically limited in this application.

In some embodiments, when predicting at least one matching block of the current block based on the IntraTMP mode, the decoder first performs template matching on the current block based on the IntraTMP mode to obtain X candidate matching blocks. Then, the at least one matching block is determined based on the X candidate matching blocks.

For example, a value of X is greater than or equal to a quantity of at least one matching block.

For example, the X candidate matching blocks are matching blocks obtained by performing template matching on the current block based on the IntraTMP mode by the decoder. The at least one matching block is a matching block used by the decoder to perform fusion. The at least one matching block may be a candidate matching block selected by the decoder from the X candidate matching blocks.

In some embodiments, the decoder first performs intra template matching in a search area of the current block based on the IntraTMP mode, to obtain all candidate matching blocks of the current block. Then, matching blocks whose templet error values are in the first X positions in a sequence in which template error values of the candidate matching blocks are ranked in an ascending order are determined as the X candidate matching blocks.

For example, the decoder may perform intra template matching, to determine reconstructed blocks, in different locations in a search area of the current block, whose templates match a template of the current block, as the candidate matching blocks of the current block. For example, the decoder determines reconstructed blocks, in different locations in a search area of the current block, whose templates match a template of the current block, as the candidate matching blocks of the current block. After completing the template matching process, the decoder ranks all candidate matching blocks of the current block in an ascending order of their template error values, and determines candidate matching blocks in the first X locations as the X candidate matching blocks.

In an alternative embodiment, after completing the template matching process, the decoder may rank all candidate matching blocks of the current block in a descending order of their template error values. In this case, the decoder may determine candidate matching blocks ranked in the last X positions as the X candidate matching blocks.

In some embodiments, the decoder constructs a candidate matching block list based on the IntraTMP mode. The candidate matching block list is used to recode X candidate matching blocks with least template error values obtained by performing intra template matching in the search area of the current block.

For example, the decoder may perform intra template matching, to determine reconstructed blocks, in different locations in a search area of the current block, whose templates match a template of the current block, as the candidate matching blocks of the current block. For example, the decoder determines reconstructed blocks, in different locations in a search area of the current block, whose templates match a template of the current block, as the candidate matching blocks of the current block. In a process of performing template matching, a candidate matching block list is maintained. The candidate matching blocks recorded in the candidate matching block list may be updated according to a template error value of a current matching block, so as to ensure that the candidate matching block in the candidate matching block list is X candidate matching blocks with least template error values. For example, when the quantity of candidate matching blocks in the candidate matching block list is less than X, the current candidate matching block is added to the candidate matching block list. When the quantity of candidate matching block in the candidate matching block list is equal to X, it is determined, based on the template error value of the current candidate matching block, whether to update the candidate matching block list. For example, if the template error value of the current candidate matching block is less than the largest template error value of the candidate matching blocks in the candidate matching block list, the current candidate matching block is used to replace the candidate matching block corresponding to the largest template error value. If the template error value of the current candidate matching block is greater than or equal to the largest template error value of the candidate matching block in the candidate matching block list, the candidate matching block list is unchanged.

For example, the candidate matching block list may also be referred to as a candidate block vector list.

For example, the decoder may perform intra template matching, to determine reconstructed blocks, in different locations in a search area of the current block, whose templates match a template of the current block, as the candidate matching blocks of the current block. A candidate matching block of the current block may be represented by a block vector pointing from the current block to the candidate matching block. That is, the decoder may record a block vector with a smaller template error value in a template matching process by constructing a candidate block vector list, so as to obtain X candidate matching blocks. Specifically, the decoder calculates template error values (represented by a SAD between templates) of different block vectors in a current block search area by a step size S (that is, every S points in the horizontal and vertical directions). For example, if the currently matched block vector is $(x_0, y_0)$, the next block vector to be matched in the horizontal direction is $(x_0-S, y_0)$, and the next block vector to be matched in the vertical direction has a vertical coordinate of $y_0$-S. A candidate block vector list of size X is constructed, and X may be determined according to a quantity N of matching blocks that can be used for fusion. For example, X is equal to 3*N. The candidate block vector list always stores 3*N block vectors with the least template error values obtained in template matching. The block vectors in the candidate block vector list are sorted according to the template error values. In addition, the candidate block vector list is further used to record template error values corresponding to the block vectors in the candidate block vector list.

In some embodiments, the decoder divides a search area of the current block into Y sub-areas, and performs intra template matching in each sub-area of the Y sub-area based on the IntraTMP mode, to obtain a candidate matching block in each sub-area, where the X candidate matching blocks include the candidate matching blocks in the sub-areas.

For example, the Y sub-area may be an R1~R4 shown in FIG. 3, or may be an area different from the R1~R4. For example, the Y sub-area may be more than four or less than four areas.

In some embodiments, X=Y, or X is a multiple of Y.

For example, X=Y, which indicates that the X candidate matching blocks include the best candidate matching blocks in the respective sub-areas. For example, the best candidate matching block in a current sub-area is a candidate matching block having a least template error value among all candidate matching blocks in the current sub-area.

For example, X is a multiple of Y, which indicates that the X candidate matching blocks include multiple candidate matching blocks from each of the sub-areas. For example, the multiple candidate matching blocks in a current sub-area are multiple candidate matching block with least template error values among all candidate matching blocks in the current sub-area.

In some embodiments, in determining the at least one matching block based on the X candidate matching blocks, the decoder may first determine the N available matching block based on the X candidate matching blocks, where X≥N; and then, the at least one matching block is determined based on the N available matching block.

For example, the N available matching blocks refer to matching blocks that can be used by the decoder to perform fusion, and the at least one matching block refers to a matching block that is used by the decoder to perform fusion. The at least one matching block may be an available matching block selected by the decoder from the N available matching blocks, and the N available matching blocks may be candidate matching blocks selected by the decoder from the X candidate matching blocks.

In some embodiments, X is a multiple of N.

For example, X is 3 times of N or is another multiple of N.

In an alternative embodiment, X may be not a multiple of N, but may be greater than or equal to N, which is not specifically limited in this application.

In some embodiments, the decoder performs pruning on the X candidate matching blocks based on spacings between the X candidate matching blocks to obtain the N available matching block.

For example, when the decoder performs pruning on the X candidate matching blocks based on spacings between the X candidate matching blocks, the decoder traverses the X candidate matching blocks, and discards, from the X candidate matching blocks, a candidate matching block that is close to the current candidate matching block, so as to implement pruning on the X candidate matching blocks.

In some embodiments, the decoder may perform pruning on the X candidate matching blocks based on the spacings between the X candidate matching blocks in the following manner to obtain the N available matching block:

determining, according to an ascending order of template error values, a current candidate matching block used for performing pruning on the X candidate matching blocks; and

determining a pruning range of the current candidate matching block; and

removing all candidate matching blocks except the current candidate matching block in the pruning range, to obtain remaining candidate matching blocks after performing pruning based on the current candidate matching block, and when a number of times of performing pruning on the X candidate matching blocks is equal to N, determining the first N candidate matching blocks among the remaining candidate matching blocks as the N available matching blocks, or when a quantity of the remaining candidate matching blocks obtained after performing pruning based on the current candidate matching block is less than or equal to N, determining the first N candidate matching block among remaining candidate matching blocks obtained after performing previous pruning as the N available matching blocks.

For example, the decoder may determine, in a manner of traversing the X candidate matching blocks in an ascending order of template error values of the X candidate matching blocks, a current candidate matching block used to perform the pruning on the candidate matching blocks. Then, the candidate matching block whose spacing from the current candidate matching block is less than or equal to the pruning range may be discarded, so as to obtain the N available matching blocks.

For example, when the i-th candidate matching block in the X candidate matching blocks is traversed by the decoder in the ascending order of the template error values as a current candidate matching block used to perform pruning on the candidate matching blocks, a pruning range of the i-th candidate matching block is determined. Then the candidate matching blocks except the current candidate matching block is removed from the pruning range of the i-th candidate matching block, so as to obtain remaining candidate matching blocks after the pruning based on the i-th candidate matching block. If the number of times of pruning is less than N and the remaining candidate matching blocks obtained after the pruning based on the i-th candidate matching block is greater than N, continuing to prune the remaining candidate matching blocks based on the (i+1)-th candidate matching block as the current candidate matching block used for pruning. If the number of times of pruning is equal to N, determining the first N candidate matching blocks of the remaining candidate matching blocks as the N available matching blocks; or if the remaining candidate matching blocks obtained after the n-th pruning based on the i-th candidate matching block is less than N, the first N candidate matching blocks in the remaining candidate matching block obtained after the pruning based on the (i-1)-th candidate matching block is determined as the N available matching blocks.

In some embodiments, the decoder may determine the pruning range based on the size of the current block and the current candidate matching block.

For example, the decoder may use a block vector of the current candidate matching block as a center of the pruning range, and determine a size of the pruning range based on a size of the current block and a matching step of the current candidate matching block.

In some embodiments, the decoder determines (S/E) *H as the pruning range based on the block vector pointing from the current block to the current candidate matching block, where / represents a division operator, * represents a multiplication operator, S represents a matching step used for the X candidate matching blocks, H represents a height of the current block, and E is a positive integer.

For example, the decoder determines a rectangle whose side length is (S/E) *H as the pruning range by using the block vector pointing from the current block to the current candidate matching block as a center. Alternatively, the decoder determines, as the pruning range, a circle having a radius of (S/E) *H and a center as the block vector pointing from the current block to the current candidate matching block.

In some alternative embodiments, the pruning range may also be in another shape or another size, which is not specifically limited in this application.

In some embodiments, the decoder may determine the pruning range based on a predefined value.

For example, the predefined value may include a size of the pruning range.

For example, the decoder determines the pruning range as a rectangle by using the predefined value as a side length and using the block vector pointing from the current block to the current candidate matching block as a center. Alternatively, the decoder determines the pruning range as a circle by using the predefined value as a radius and using the block vector pointing from the current block to the current candidate matching block as a center.

In other alternative embodiment, the pruning range may be in another shape or another size, which is not specifically limited in this application.

For example, the predefined value may be a default value. For example, the predefined value may be implemented by a device (for example, including decoder) pre-storing a corresponding code, table, or in another manner that may be used to indicate related information, which is not limited in this application. For example, being pre-defined may refer to being defined in a protocol. It should be further understood that, in this embodiment of this application, the "protocol" may refer to a standard protocol in the coding field, such as the image coding field, the video coding field, the hardware video coding field, the dedicated circuit video coding field, the real-time video coding field, and a related protocol applied to a future coding system, which is not limited in this application.

In some embodiments, the decoder may refine the X candidate matching blocks to obtain the N available matching blocks.

For example, in refining the X candidate matching blocks, the X candidate matching blocks are traversed, and each candidate matching block in the X candidate matching blocks is refined by using a step smaller than a matching step used for obtaining the X candidate matching blocks, the N refined candidate matching blocks is obtained to be used as the N available matching blocks.

In some embodiments, the decoder may refine the X candidate matching blocks in the following manner to obtain the N available matching blocks:

determining a refining range of a current candidate matching block in the X candidate matching blocks; and
performing intra template matching in the refining range based on at least one matching step, to obtain a matching block in the refining range, where each matching step in the at least one matching step is smaller than a matching step used for the X candidate matching blocks; and
determining a matching block having a least template loss value in the matching blocks in the refining range as a candidate matching block obtained by performing refinement on the current candidate matching block; and
determining the candidate matching block obtained by performing refinement on the current candidate matching block as an available matching block in the N available matching blocks.

For example, in refining the X candidate matching blocks, the X candidate matching blocks are traversed, and intra template matching is performed within a refining range of a current candidate matching block in the X candidate matching blocks by using a step smaller than a matching step used for the X candidate matching blocks, so as to obtain a candidate matching block with a smaller template error value, which may be used as the candidate matching block obtained by refining the current candidate matching block.

For example, when the X candidate matching blocks are traversed by the decoder in an ascending order of template error values, the i-th candidate matching block is used as a current candidate matching block, and a refining range of the i-th candidate matching block is determined. Then, intra template matching is performed in the refining range of the i-th candidate matching block by using a step smaller than a matching step used for the X candidate matching blocks, to obtain a candidate matching block having a smaller template error value, which may be used as a candidate matching block obtained by refining the i-th candidate matching block, and the candidate matching block is determined as an available matching block in the N available matching blocks. If the quantity of determined available matching block is less than N, the (i+1)-th candidate matching block is used as the current candidate matching block to be refined. If the quantity of determined available matching block is equal to N, the refining process on the X candidate matching blocks ends.

In some embodiments, the decoder determines the refining range based on the size of the current block and the current candidate matching block.

For example, the decoder may use a block vector of the current candidate matching block as a center of the refining range, and determine a size of the refining range based on a size of the current block and a matching step of the current candidate matching block.

In some embodiments, the decoder determines the refining range based on (S/F)*H and using the block vector pointing from the current block points to the current candidate matching block, where / represents a division operator, * represents a multiplication operator, S represents a matching step used for the X candidate matching blocks, H represents a height of current block, and F is a positive integer.

For example, the decoder determines the refining range as a rectangle by using (S/E)*H as a side length and using the block vector pointing from the current block points to the current candidate matching block as a center. Alternatively, the decoder determines the refining range as a circle by using (S/E)*H as a radius and using the block vector pointing from the current block points to the current candidate matching block as a center.

In other alternative embodiments, the refining range may be in another shape or another size, which is not specifically limited in this application. In addition, it should be noted that the pruning range and the refining range of the current candidate matching block may be the same or different, which is not specifically limited in this application.

In some embodiments, the decoder determines the refining range based on predefined values.

For example, the predefined value may include a size of the pruning range.

For example, the decoder determines the refining range as a rectangle by using the predefined value as a side length and using the block vector pointing from the current block points to the current candidate matching block as a center. Alternatively, the decoder determines the refining range as a circle by using the predefined value as a radius and using the block vector pointing from the current block points to the current candidate matching block as a center.

In other alternative embodiments, the refining range may be in another shape or another size, which is not specifically limited in this application.

For example, the predefined value may be a default value. For example, the predefined value may be implemented by a device (for example, including decoder) pre-storing a corresponding code, table, or in another manner that may be used to indicate related information, which is not limited in this application. For example, being pre-defined may refer to being defined in a protocol. It should be further understood that, in this embodiment of this application, the "protocol" may refer to a standard protocol in the coding field, such as the image coding field, the video coding field, the hardware video coding field, the dedicated circuit video coding field, the real-time video coding field, and a related protocol applied to a future coding system, which is not limited in this application.

In some embodiments, if no overlap exists between refining ranges of any two of the X candidate matching blocks, and the j-th matching block in the refining range of the current candidate matching block is a matching block having a least template loss value in the first j matching blocks in the refining range of the current candidate matching block, the j-th matching block may be directly determined as a candidate matching block obtained by refining the current candidate matching block.

For example, no overlap existing between refining ranges of any two of the X candidate matching blocks may include: a width and a height of the refining range of the current candidate matching block being both less than or equal to a matching step S used for the X candidate matching blocks.

In other words, if the width and the height of the refining range of the current candidate matching block are both less than or equal to the matching step S used for the X candidate matching blocks, it may be indicated that no overlap exists between refining ranges of any two of the X candidate matching blocks. In this case, if the j-th matching block in the refining range of the current candidate matching block is a matching block that has a least template loss value in the first j matching blocks in the refining range of the current candidate matching block, the decoder may directly determine the j-th matching block as a candidate matching block obtained by performing refinement on the current candidate matching block.

In some embodiments, if the current candidate matching block is the i-th matching block in the X candidate matching blocks, and the j-th matching block in the refining range is the matching block having the least template loss value of the first j matching blocks, then when the candidate matching blocks obtained by refining the first i-1 candidate matching blocks in the X candidate matching blocks do not include the j-th matching block, the j-th matching block is determined as the candidate matching block obtained by refining the current candidate matching block.

In this embodiment, when the candidate matching blocks obtained by refining the first i-1 candidate matching blocks in the X candidate matching blocks does not include the j-th matching block, the j-th matching block is determined as the candidate matching block obtained by refining the current candidate matching block, which can avoid the case in which a same matching block is obtained by different refining processes.

In some embodiments, if there is an overlap between refining ranges of different candidate matching block in the X candidate matching blocks, and the j-th matching block in the refining range of the current candidate matching block is a matching block having a least template loss value in the first j matching blocks in the current candidate matching block, and the candidate matching blocks obtained by refining the first i-1 candidate matching blocks in the X candidate matching blocks do not include the j-th matching block, the decoder may determine the j-th matching block as a candidate matching block obtained by refining the current candidate matching block.

For example, that there is an overlap between refining ranges of different candidate matching block in the X candidate matching blocks may include: a width or a height of the refining range of the current candidate matching block is greater than a matching step S used for the X candidate matching blocks.

In other words, if the width or the height of the refining range of the current candidate matching block is greater than the matching step S used for the X candidate matching blocks, it may be indicated that there is an overlap between the refining ranges of the different candidate matching block in the X candidate matching blocks. In this case, if the j-th matching block in the refining range of the current candidate matching block is a matching block having a least template loss value in the first j matching block in the current candidate matching block, and the candidate matching blocks obtained by the decoder performing refining on the first i-1 candidate matching blocks in the X candidate matching blocks, the decoder may determine that the j-th matching block is a matching block obtained by refining the current candidate matching block.

For example, the candidate matching block list is refined N times to obtain N available block vector. Specifically, when performing the i-th refinement, block vector $BV_i$ of the i-th candidate matching block in the candidate matching block list is obtained, where $BV_i$ is equal to $(x_i, y_i)$, it is determined that the refining range of the i-th candidate matching block is a rectangle whose side length is $L_D = (S/2)*H$, where S is a matching step used for the X candidate matching blocks, and H is a height of current block. In other words, the refining range of the i-th candidate matching block is a rectangular area of which the upper left corner is $(x_i-L_D, y_i-L_D)$ and the lower right corner is $(x_i+L_D, y_i+L_D)$. When refining the i-th candidate matching block, template matching is performed in the refining range by using a step $S'(S'=S/2)$, to obtain a block vector $BV_i'$ whose template error value is the smallest, which may be used as the refined block vector for the block vector $BV_i$ of the i-th candidate matching block. In a process of performing refinement on the block vector $BV_i$ of the i-th candidate matching block, each time when a matching block with a smaller template error value (a least value of template error values of the matching blocks that have been determined in the i-th refinement) is obtained, it is determined whether the matching block is equal to a block vector of an available matching block that has been obtained. If there is an equal block vector, the block vector of the currently matched matching block is discarded (that is, the block vector is skipped, and the refined matching block is not updated). For example, in the first i-1 refinement processes, block vectors $BV_1'$ to $BV_{i-1}'$ are obtained. When the i-th refinement is performed, if a template error value of a block vector $BV_i'$ of a matching block is less than a minimum value (a least value of template error values of matching blocks that have been determined in the i-th refinement), it needs to be successively determined whether $BV_i'$ is equal to a block vector in $BV_i'$ to $BV_{i-1}'$. If there is an equal block vector, $BV_i'$ is skipped and the template matching process is continued at the next location. If there is no equal block vector, $BV_i'$ is used as the new best block vector, and the corresponding template error value is used as the new minimum value to update the i-th refinement result.

Example 1:

M refinements are performed on the candidate matching blocks in the X candidate matching blocks to obtain the N available matching blocks, where $X \geq M \geq N$, that is, one best matching block obtained by each refinement may be used as a matching block in the N available matching block. That is, the decoder may attempt to update an available matching block list having a size of N by using the best matching block obtained in each refinement.

Specifically, an available matching block list having a size of N is maintained, and the matching blocks recoded in the available matching block list may be updated by using the template error value of the to-be-added matching block, so as to ensure that the matching block recoded in the available matching block list is the N matching blocks with least template error values. When the i-th refinement is performed, a block vector $BV_i$ of the i-th candidate matching block in the candidate matching block list is obtained, and $BV_i$ is equal to $(x_i, y_i)$, and it is determined that a refining range of the i-th candidate matching block is a rectangle whose side length is $L_D = (S/2)*H$, where S is a matching step used for the X candidate matching blocks, and H is a height of current block. In other words, the refining range of the i-th candidate matching block is a rectangular area of which the upper left corner is $(x_i-L_D, y_i-L_D)$ and the lower right corner is $(x_i+L_D, y_i+L_D)$. When refining the i-th candidate matching block, template matching is performed in the refining range by using a step $S'(S'=S/2)$, to obtain a block vector $BV_i'$ with a least template error value, which may be used as a refined block vector for the block vector $BV_i$ of the i-th candidate matching block. In a process of performing refinement on the block vector $BV_i$ of the i-th candidate matching block, each time when a matching block with a smaller template error value (a least value of template error values of the matching blocks that have been determined in the i-th refinement) is obtained, it is determined whether the matching block is equal to a block vector in the available matching block list. If there is an equal block vector, the block vector of the currently matched matching block is discarded (that is, the block vector is skipped, and the refined matching block is not updated), and the template matching process is continued at the next location. If there is no equal block vector, $BV_i'$ is used as the new best block vector, and the corresponding template error value is used as the new minimum value to update the i-th refinement result. After the i-th refinement is completed, a new best block vector $BV'$ and a corresponding template error value are obtained, and $BV'$ is added to the available matching block list.

Example 2:

M refinements are performed on the candidate matching blocks in the X candidate matching blocks to obtain the N available matching blocks, where $X \geq M \geq N$, that is, a matching block obtained by template matching in each refinement may be used as a matching block in the N available matching blocks. That is, the decoder may attempt to update an available matching block list having a size of N by using a matching block obtained by template matching in each refinement.

Specifically, an available matching block list having a size of N is maintained, and the matching blocks recoded in the available matching block list may be updated by using the template error value of the to-be-added matching block, so as to ensure that the matching block recoded in the available matching block list is the N matching blocks with least template error values. When the i-th refinement is performed, a block vector $BV_i$ of the i-th candidate matching block in the candidate matching block list is obtained, and $BV_i$ is equal to $(x_i, y_i)$, and it is determined that a refining range of the i-th candidate matching block is a rectangle whose side length is $L_D = (S/2)*H$, where S is a matching step used for the X candidate matching blocks, and H is a height of current block. In other words, the refining range of the i-th candidate matching block is a rectangular area of which the upper left corner is $(x_i-L_D, y_i-L_D)$ and the lower right corner is $(x_i+L_D, y_i+L_D)$. When refining the i-th candidate matching block, template matching is performed in the refining range by using a step $S'(S'=S/2)$. Each time when performing template matching, it is tried to add the current matching block to the available matching block list. Before adding the current matching block, it is determined whether the current block vector is the equal to a block vector in the available matching block list. If there is an equal block vector, the current block vector of the current matching block is discarded (that is, the block vector is skipped, and is not used to update the refined matching block), and the template matching process is continued at a next location. If there is not equal block vector, the current matching block is added to the available matching block list.

It should be noted that a difference between the foregoing two manners lies in that: after completing the first refinement, only one matching block is recorded in the list of example 1 (the best matching block in the refining process), while after the first refinement is completed, N matching block may be recorded in the list of example 2 if a quantity of matching times in the refinement process is greater than N.

In some embodiments, the decoder prunes and refines the X candidate matching blocks to obtain the N available matching blocks.

For example, the decoder performs N times of pruning and N times of refining on the X candidate matching blocks to obtain the N available matching blocks.

In some embodiments, after pruning the X candidate matching blocks, the decoder refines the pruned candidate matching blocks.

For example, after N times of pruning on the X candidate matching blocks, the decoder performs N times of refining on the pruned candidate matching blocks.

In some embodiments, after refining the X candidate matching blocks, the decoder prunes the refined candidate matching blocks.

For example, after refining the X candidate matching blocks, the decoder prunes the refined candidate matching blocks.

In some embodiments, after the decoder performs one pruning on the X candidate matching blocks based on the current candidate matching block in the X candidate matching blocks, the decoder performs refinement on the current candidate matching block, and after the decoder performs N times of pruning and N times of refining on the X candidate matching blocks, the N available matching blocks are obtained.

For example, after one pruning is performed on the X candidate matching blocks based on the current candidate matching block in the X candidate matching blocks, the decoder performs refinement on the current candidate matching block.

That is, when the decoder performs pruning and refining on the X candidate matching blocks, the decoder may perform pruning before refining, or perform refining before pruning, or perform pruning and refining alternately. This is not specifically limited in this application.

For example, N available block vectors are obtained by using the candidate block vector list. Candidate matching blocks pointed by these block vectors are used as candidate matching blocks of the current block, to be used in a subsequent weighted fusion process. For example, the candidate block vector list is pruned and refined for N times to obtain N available matching blocks. The pruning step is used to avoid excessive overlapping of refining steps, and the refining step is used to obtain more accurate matching blocks. Specifically, when performing the i-th pruning and refining, the i-th block vector $BV_i$ in the list is obtained, and $BV_i$ is equal to $(x_i, y_i)$. It is determined that the refining range of the nth block vector $BV_i$ is a rectangle whose side length is $L_D = (S/2)*H$, where S is a matching step used for the X candidate matching blocks, and H is a height of current block. In other words, the refining range of the i-th candidate matching block is a rectangular area of which the upper left corner is $(x_i-L_D, y_i-L_D)$ and the lower right corner is $(x_i+L_D, y_i+L_D)$. If the block vector j $(x_j, y_j)$ that is ranked after the block vector i in the candidate block vector list meets:

$$x_i\text{-}L_D \leqslant x_j \leqslant x_i\text{+}L_D \ \&\& \ y_i\text{-}L_D \leqslant y_j \leqslant y_i\text{+}L_D;$$

It indicates that block vector j is in the pruning range and should be removed from the list. Then, template matching is performed in the refining range by using a step size $S'(S'=S/2)$, to obtain a block vector $BV_i'$ with a least template error value, which may be used as a refined block vector for the block vector $BV_i$ of the i-th candidate matching block. When $S'$ is greater than one pixel, the i-th refinement may include multiple refinement processes until $S'$ is equal to 1, or even the i-th pruning may include multiple pruning processes.

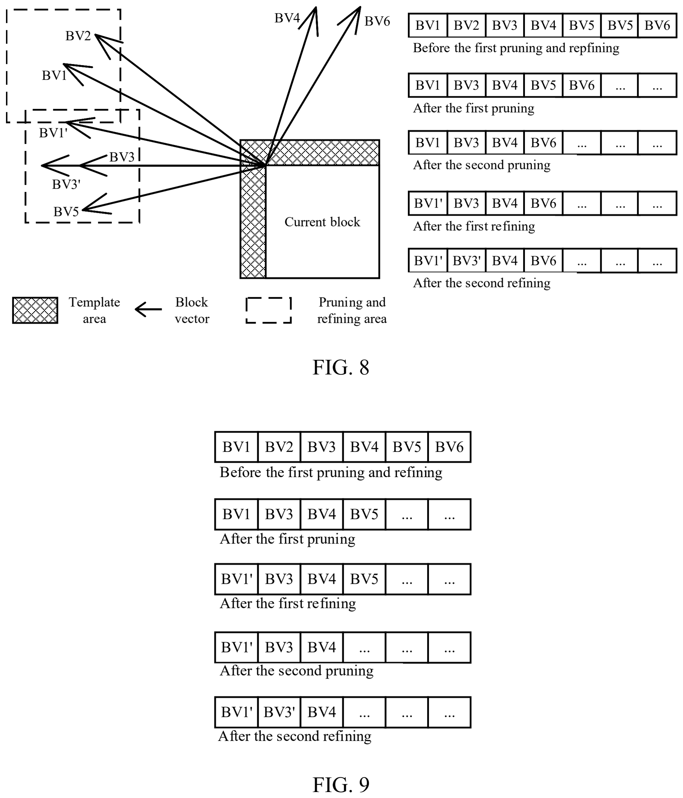

FIG. 8 is an example of a pruning and refining process according to an embodiment of this application.

As shown in FIG. 8, it is assumed that the X candidate matching blocks are ranked in ascending order of template error values. When X=6, block vectors of the X candidate matching blocks are respectively $BV_1$, $BV_2$, $BV_3$, $BV_4$, $BV_5$, and $BV_6$. By using N=2 as an example, after two times of pruning on the 6 candidate matching blocks, the decoder may perform two times of refining on the pruned candidate matching blocks.

When the decoder performs two times of pruning on the 6 candidate matching blocks, the decoder may traverse the 6 candidate matching blocks in an ascending order of the template error values to determine a current candidate matching block that is used to prune the candidate matching blocks. Then, a candidate matching block whose spacing to the current candidate matching block is less than or equal to the pruning range may be discarded, so as to obtain the pruned candidate matching blocks. Specifically, the decoder first performs pruning on the six candidate matching blocks based on the first candidate matching block, and discards $BV_2$ to obtain block vectors of the candidate matching block obtained by the first pruning, including $BV_1$, $BV_3$, $BV_4$, $BV_5$, and $BV_6$. Then, the block vectors of the candidate matching blocks obtained by the first pruning is further pruned based on the second candidate matching block, in which the $BV_5$ is discarded, to obtain the block vectors of the candidate matching blocks obtained by the first pruning, including: $BV_1$, $BV_3$, $BV_4$, and $BV_6$.

When the decoder performs refinement on the pruned candidate matching blocks, the decoder traverses the pruned candidate matching blocks and performs refinement on each candidate matching block in the pruned candidate matching blocks by using a step smaller than a matching step used for the X candidate matching blocks, so that the refined two candidate matching blocks may be used as the two available matching blocks. Specifically, the decoder first performs template matching within a refining range of the $BV_1$ by using a step size S'(S'=S/2), to obtain a block vector $BV_i'$ with a least template error value, which may be used as a refined block vector for $BV_1$, to obtain candidate matching blocks obtained by the first refinement, including: $BV_1'$, $BV_3$, $BV_4$, and $BV_6$. Then, template matching is performed by using a step size S'(S'=S/2) within a refining range of $BV_3$, to obtain a block vector BV3' with a least template error value, which may be used as a refined block vector for $BV_3$, to obtain candidate matching blocks obtained by the second refining, including $BV_1'$, $BV_3'$, $BV_4$, and $BV_6$. Based on this, $BV_1'$ and $BV_3'$ may be used as the at least one matching block. It is noted that when S' is greater than one pixel, the first refinement and the second refinement may include multiple refinement processes until S' is equal to 1.

FIG. 9 is another example of a pruning and refining process according to an embodiment of this application.

As shown in FIG. 9, it is assumed that the X candidate matching blocks are ranked in ascending order of template error values. When X=6, block vectors of the X candidate matching blocks are respectively $BV_1$, $BV_2$, $BV_3$, $BV_4$, $BV_5$, and $BV_6$. By using N=2 as an example, after one time of pruning on the 6 candidate matching blocks, the decoder may perform one time of refining on the pruned candidate matching blocks.

Specifically, the decoder first performs first trimming on the 6 candidate matching blocks based on the first candidate matching block, that is, $BV_2$ and $BV_6$ are discarded to obtain block vectors of the candidate matching blocks obtained after the first trimming, including: $BV_1$, $BV_3$, $BV_4$ and $BV_5$. Then, the decoder performs template matching in a refining range of the $BV_1$ by using a step size S'(S'=S/2), to obtain a block vector $BV_1'$ with a least template error value, which may be used as a refined block vector for $BV_1$, to obtain candidate matching blocks obtained after the first refinement, including: $BV_1'$, $BV_3$, $BV_4$ and $BV_5$. Then, the decoder performs pruning on the $BV_1'$, $BV_3$, $BV_4$ and $BV_5$ based on the second block vector BV3 of the $BV_1'$, $BV_3$, $BV_4$ and $BV_5$, in which $BV_5$ is discarded, to obtain the block vectors of the candidate matching blocks obtained by the second pruning, including BV1 ', $BV_3$ and $BV_4$. Then, the decoder performs template matching in a refining range of the $BV_3$ by using a step size S'(S'=S/2), to obtain a block vector $BV_3'$ with a least template error value, which may be used as a refined block vector for $BV_1$, to obtain candidate matching blocks obtained after the first refinement, including: $BV_1'$, $BV_3'$, and $BV_4$. Based on this, $BV_1'$ and $BV_3'$ may be used as the at least one matching block. It is noted that when S' is greater than one pixel, the first refinement and the second refinement may include multiple refinement processes until S' is equal to 1.

In some embodiments, the decoder may determine the at least one matching block based on the N available matching block in the following manner:

determining a fusion condition for the N available matching blocks; and
determining, from the N available matching blocks, an available matching block that meets the fusion condition as the at least one matching block.

For example, the fusion condition is used to select the at least one matching block that is used to perform fusion from the N available matching blocks.

In some embodiments, the decoder determines the fusion condition based on at least one of the following:
a size of the template of the current block, a bit width of a pixel of the current block, and a minimum template error value of the N available matching blocks.

In another alternative embodiment, the decoder may determine the fusion condition in another manner, for example, the fusion condition is a predefined condition.

For example, the predefined condition may be a default condition. For example, the predefined condition may be implemented by a device (for example, including a decoder) pre-storing a corresponding code, a table, or in another manner that may be used to indicate related information, which is not limited in this application. For example, being pre-defined may refer to being defined in a protocol. It should be further understood that, in this embodiment of this application, the "protocol" may refer to a standard protocol in the coding field, such as the image coding field, the video coding field, the hardware video coding field, the dedicated circuit video coding field, the real-time video coding field, and a related protocol applied to a future coding system, which is not limited in this application.

In some embodiments, the fusion condition includes a first threshold, and the first threshold is a threshold determined based on a size of a template of the current block and the bit width. Based on this, the decoder may determine, from the N available matching blocks, an available matching block whose template error value is less than or equal to the first threshold, as the at least one matching block.

For example, the first threshold is positively correlated with a size of a template of the current block.

For example, the first threshold is positively correlated with the bit width.

In some embodiments, the first threshold is determined according to the following formula:

$$T_1 = n_1 << (b_{depth} - n_2) * n_{template} \; ;$$

<< is a left shift operator, - is a subtraction operator, * is a multiplication operator, T1 represents the first threshold, $b_{depth}$ represents the bit width, and $n_{template}$ represents a quantity of pixels in the template of the current block, both $n_1$ and $n_2$ are positive integers.

For example, $n_2$ is equal to 2 or another value.

For example, $n_1$ is equal to 1 or another value.

In some embodiments, the fusion condition includes a second threshold, and the second threshold is a threshold determined based on the minimum template error value. Based on this, the decoder may determine, from the N available matching block, an available matching block whose template error value is less than or equal to the second threshold, as the at least one matching block.

For example, the second threshold is positively correlated with the least template error value.

In some embodiments, the second threshold is determined according to the following formula:

$$T_2 = min_{SAD} << n_3;$$

Where << is a left shift operator, $T_2$ represents the second threshold, $min_{SAD}$ represents the minimum template error value, and $n_3$ is a positive integer.

For example, n3 is equal to 1 or another value.

In an alternative embodiment, the fusion condition may include both the first threshold and the second threshold. That is, the decoder may determine, from the N available matching block, the available matching block whose template error value is less than or equal to the first threshold and less than or equal to the second threshold, as the at least one matching block. For example, the template error value of the i-th available matching block in the N available matching block is $SAD_i$. When the template error value $SAD_i$ of the i-th available matching block meets the condition $SAD_i \leq T_1$ && $SAD_i < T_2$, the i-th available matching block is determined as a matching block in the at least one matching block.

In some embodiments, the decoder may determine the at least one matching block based on the N available matching block in the following manner:

determining indication information based on the bitstream, where the indication information is used to indicate the at least one matching block in the N available matching blocks; and
determining the at least one matching block based on the indication information.

For example, the indication information may include N bits, where the N bits are in a one-to-one correspondence with the N available matching block, and each bit in the N bits is used to indicate whether a corresponding available matching block is used as a matching block in the at least one matching block. For example, when a bit in the N bits is 0, it indicates that an available matching block corresponding to the bit is used as a matching block in the at least one matching block, and when a bit in the N bits is 1, it indicates that an available matching block corresponding to the bit is not used as a matching block in the at least one matching block. For another example, when a bit in the N bits is 1, it indicates that an available matching block corresponding to the bit is used as a matching block in the at least one matching block, and when a bit in the N bits is 0, it indicates that an available matching block corresponding to the bit is not used as a matching block in the at least one matching block.

In another alternative embodiment, the indication information may implement a corresponding indication function in another manner, which is not limited in this application.

In some embodiments, the S330 may include:

if the at least one matching block includes multiple matching blocks, performing weighting processing on the multiple matching blocks to obtain a target prediction block of the current block.

For example, weight values of the multiple matching blocks may be equal to each other, or may be partially equal, or may be different from each other.

For example, when weights of the multiple matching block are equal to each other, the target prediction block is an average value of the multiple matching blocks.

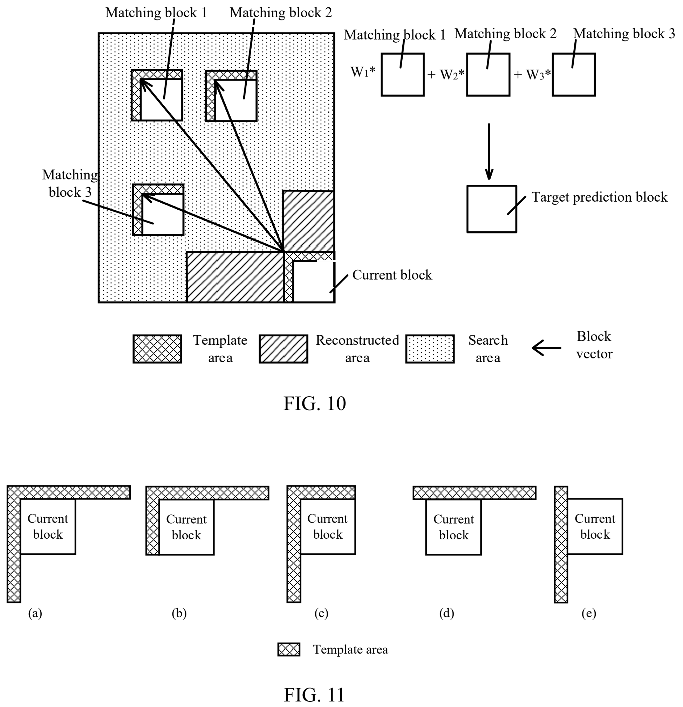

FIG. 10 is an example of determining a target prediction block based on multiple matching blocks according to an embodiment of this application.

As shown in FIG. 8, assuming that the at least one matching block includes a matching block 1, a matching block 2, and a matching block 3, the decoder may weight the matching block 1, the matching block 2, and the matching block 3 to obtain the target prediction block based on the weight value $W_1$ of the matching block 1, the weight value $W_2$ of the matching block 2, and the weight value $W_3$ of the matching block 3. The matching block 1, the matching block 2, and the matching block 3 are candidate matching blocks obtained by performing intra template matching in a search area (located in a reconstructed area of the current block) of the current block, or may be candidate matching blocks obtained by pruning and/or refining the candidate matching blocks obtained by performing intra template matching, or may even be matching blocks selected from the pruned and/or refined candidate matching blocks by using the foregoing fusion condition.

In some embodiments, the decoder may perform weighting processing on the multiple matching blocks in the following manner:

determining weight values of the multiple matching blocks; and
performing weighting processing on the multiple matching blocks based on the weight values of the matching blocks to obtain the target prediction block.

For example, after determining the weight values of the multiple matching blocks, the decoder performs summation on the matching blocks multiplied by the respective weight values to obtain the target prediction block. Alternatively, after determining the weight values of the multiple matching blocks, the decoder performs summation on the matching blocks multiplied by the respective weight values to obtain a fusion block, and processes the obtained fusion block to obtain the target prediction block.

In some embodiments, the decoder determines the weight values of the matching blocks based on the template error value of each matching block, the quantity of the multiple matching blocks, and the sum of weights of the multiple matching blocks.

For example, the weight values of the matching blocks are negatively correlated with template error values of the matching blocks.

For example, the weight values of the matching blocks are negatively correlated with a quantity of the multiple matching blocks.

For example, the weight values of the matching blocks are positively correlated with the sum of the weights of the multiple matching blocks.

In another alternative embodiment, the decoder may determine the weight values of the matching blocks by using only the template error values or other information of the matching blocks, which is not specifically limited in this application.

In some embodiments, the decoder determines the weight values of the matching blocks in the following manner: determining, based on the template loss values of the matching blocks, third values corresponding to the matching blocks; and performing summation on the third values corresponding to the matching blocks to obtain a fourth value; and determining the weight values of the matching blocks based on the fourth value and the template error values of the matching blocks.

For example, the third values corresponding to the matching blocks are greater than 0.

For example, the third values corresponding to the matching blocks may be understood as updated values of the template error values of the matching blocks.

In some embodiments, if the template error value of the i-th matching block in the multiple matching blocks is 0, a preset value greater than 0 is determined as the third value corresponding to the i-th matching block; or if the template error value of the i-th matching block is 0, the template error value of the i-th matching block is determined as the third value corresponding to the i-th matching block.

For example, if the template error value of the i-th matching block in the multiple matching blocks is 0, 1 is determined as the third value corresponding to the i-th matching block.

In some embodiments, the decoder determines the weight value of the i-th matching block in the multiple matching blocks in the following manner:

subtracting, from the fourth value, the third value corresponding to the i-th matching block, to obtain a fifth value; multiplying the fourth value by n-1 to obtain a sixth value, where n represents a quantity of the multiple matching blocks; and determining the weight value of the i-th matching block based on the fifth value and the sixth value.

For example, the weight value of the i-th matching block is positively correlated with the fifth value.

For example, the weight value of the i-th matching block is negatively correlated with the sixth value.

In some embodiments, if the i-th matching block is not the last matching block of the multiple matching blocks, a ratio of the fifth value to the sixth value is determined as a weight value of the i-th matching block; or if the i-th matching block is the last matching block, subtracting weight values of the first i-1 matching blocks from a preset total weight value, to obtain the weight value of the last matching block.

For example, the preset total weight value may be any integer. For example, the preset total weight value may be a power of 2, for example, 2, 4, 8, 16, 64 or the like.

In some embodiments, the decoder determines a ratio of the fifth value to the sixth value as a weight value of the i-th matching block. A sum of the multiple weight values of the matching blocks is equal to the preset total weight value.

For example, the preset total weight value may be any integer. For example, the preset total weight value may be a power of 2, for example, 2, 4, 8, 16, 64.

In some embodiments, the ratio of the fifth value to the sixth value is a value obtained by using a bit operation, an addition operation, and a subtraction operation.

For example, the bit operation includes at least one of a right shift operation, a left shift operation, a logic AND operation, a logic OR operation, or a conditional operation. Certainly, another operation may be included, which is not limited in this application.

In some embodiments, the ratio of the fifth value to the sixth value is a value determined by using the following formula:

$$W_i = (D_5 * V * W_{sum} + D_{Add}) >> D_{Shift} \; ;$$

Where * is a multiplication operator, + is an addition operator, >> is a right shift operator, $D_5$ represents the fifth value, $W_{sum}$ represents the total weight value, V is a value retrieved from a lookup table according to a seventh value, $D_{Shift}$ is a right shift amount determined according to the seventh value, the seventh value is a value determined according to the sixth value, and $D_{Add}$ is a value determined according to the $D_{Shift}$.

In some embodiments, V and $D_{Shift}$ are determined in the following manner:

$$X = \lceil \log_2 D_6 \rceil;$$

$$D_7 = ((n-1) * D_4 << 4 >> X) \& 15;$$

$$V = table[D_7] | 8;$$

$$X = D_7 == 0 ? X : X + 1;$$

$$D_{Shift} = X + 3;$$

Where $\lceil \rceil$ is an ceiling operator, * is a multiplication operator, << is a left shift operator, >> is a right shift operator, & is a logic AND operator, | is a logic OR operator, ? Is a conditional operator, + is an addition operator, $D_6$ represents the sixth value, $D_4$ represents the fourth value, table[] represents a lookup table, and $D_7$ represents the seventh value.

For example, table[] = {0, 7, 6, 5, 5, 4, 4, 3, 3, 2, 2, 1, 1, 1, 1, 0}.

Certainly, the number in the foregoing formula may be adjusted based on an actual requirement, which is not specifically limited in this application.

In some embodiments, $D_{Add} = 1 << (D_{Shift} - 1)$, or $D_{Add} = 1 << D_{Shift}$; Where << is the left shift operator, and - is the subtraction operator.

Certainly, 1 in the foregoing formulas may be replaced with another value, which is not limited in this application.

The following uses a preset total weight value of 64 as an example. The decoder obtains n (1<n<=N) matching block, respectively corresponding to template error values SAD1 to SADn, the weight value $W_i$ of the matching block i ($1 \leq i \leq n$) may be determined according to the following example:

Example 1:

$$SAD_i = (SAD_i == 0) \; ? \; 1 : SAD_i;$$

$$SUM = \sum_{i=1}^{n} SAD_i;$$

$$W_i = ( SUM - SAD_i ) / (( n - 1 ) * SUM );$$

$W_i$ may be obtained by performing operations such as table lookup, bit operation, addition, subtraction or multiplication. For example, if the precision of the weight value is 1/64, then

$$X = \lceil \log_2((n-1)*SUM) \rceil;$$

$$Norm = (( n - 1 ) * SUM << 4 >> X) \; \& \; 15;$$

$$V = table[Norm] \; | \; 8;$$

$$X = norm == 0 \; ? \; X : X+1;$$

$$D_{Shift} = X + 3;$$

$$D_{Add} = 1 << (D_{Shift} - 1);$$

$$W_i = (( SUM - SAD_i ) * V * 64 + D_{Add}) >> D_{Shift}, \; 1 \leq i < n;$$

$$W_n = 64 - \sum_{i=1}^{n-1} W_i$$

Where table[] = {0, 7, 6, 5, 5, 4, 4, 3, 3, 2, 2, 1, 1, 1, 1, 1, 0}.

Example 2:

$$SAD_i = (SAD_i == 0) \; ? \; 1 : SAD_i;$$

$$SUM = \sum_{i=1}^{n} SAD_i;$$

$$W_i = ( \text{SUM} - \text{SAD}_i ) / (( n - 1 ) * \text{SUM} );$$

$W_i$ may be obtained by performing operations such as table lookup, bit operation, addition, subtraction or multiplication. For example, if the precision of the weight value is 1/64, then

$$X = \lceil \log_2((n-1)*\text{SUM}) \rceil;$$

$$\text{Norm} = (( n - 1 ) * \text{SUM} << 4 >> X) \& 15;$$

$$V = \text{table}[\text{Norm}] \mid 8;$$

$$X = \text{norm} == 0 ? X : X+1;$$

$$D_{\text{Shift}} = X + 3;$$

$$D_{\text{Add}} = 1 << D_{\text{Shift}};$$

$$W_i = (( \text{SUM} - \text{SAD}_i ) * V * 64 + D_{\text{Add}}) >> D_{\text{Shift}}, 1 \leqslant i < n;$$

$$W_n = 64 - \sum_{i=1}^{n-1} W_i;$$

Where table[] = {0, 7, 6, 5, 5, 4, 4, 3, 3, 2, 2, 1, 1, 1, 1, 1, 0}.

Example 3:

$$\text{SAD}_i = (\text{SAD}_i == 0) ? 1 : \text{SAD}_i;$$

$$\text{SUM} = \sum_{i=1}^{n} \text{SAD}_i;$$

$$W_i = ( \text{SUM} - \text{SAD}_i ) / (( n - 1 ) * \text{SUM} );$$

$W_i$ may be obtained by performing operations such as table lookup, bit operation, addition, subtraction or multiplication. For example, if the precision of the weight value is 1/64, then

$$X = \lceil \log_2((n-1)*\text{SUM}) \rceil;$$

$$\text{Norm} = (( n - 1 ) * \text{SUM} << 4 >> X) \& 15;$$

$$V = \text{table}[\text{Norm}] \mid 8;$$

$$X = \text{norm} == 0 ? X : X+1;$$

$$D_{\text{Shift}} = X + 3;$$

$$D_{Add} = 1 << D_{Shift};$$

$$W_i = (( SUM - SAD_i ) * V * 64 + D_{Add}) >> D_{Shift}, \ 1 \leqslant i < n;$$

Where table[] = {0, 7, 6, 5, 5, 4, 4, 3, 3, 2, 2, 1, 1, 1, 1, 1, 0}.

Further, $W_i$ may be adjusted to meet $\sum_{i=1}^{n} W_i = 64$ by using the following steps:

$$Sum\_W = \sum_{i=1}^{n} W_i \ ;$$

$$\text{while ( } Sum\_W > 64) \ \{$$

$$\text{for(i=n; } i \geqslant 1 \ \&\& \ Sum\_W > 64; \ i\text{--) } \{$$

$$\text{if( } W_i \ != 0) \ \{$$

$$W_i = W_i\text{-}1$$

$$Sum\_W = Sum\_W\text{-}1$$

$$\}$$

$$\}$$

$$\}$$

$$\text{while ( } Sum\_W < 64) \ \{$$

$$\text{for(i=1; } i \leqslant n \ \&\& \ Sum\_W < 64; \ i\text{++) } \{$$

$$W_i = W_i\text{+}1$$

$$Sum\_W = Sum\_W\text{+}1$$

$$\}$$

$$\}.$$

Certainly, the numbers in the formulas in the foregoing examples 1 to 3 may be adjusted according to an actual requirement, which is not specifically limited in this application.

In some embodiments, the decoder selects, from multiple candidate sets and based on the quantity of the multiple matching blocks, a first candidate set of having a quantity of weight values equal to the quantity of the multiple matching blocks; and determines weight values of the matching blocks based on the first candidate set.

For example, different candidate sets in the multiple candidate sets include different quantities of weight values.

In some embodiments, a template error value of a matching block is negatively correlated with a weight value of the matching block.

For example, the weight values of the matching blocks may be predefined fixed values, and different weight values are assigned to the matching blocks according to a quantity of the multiple matching blocks and template error values of the matching blocks, and the like. For example, the weight values are set to {3/4, 1/4} and {1/2, 1/4, 1/4}. If there are two matching blocks $pred_1$ and $pred_2$, and corresponding template error values meet $SAD_1 \leq SAD_2$, then a weight value of $pred_1$ is $W_1 = 3/4$, and a weight value of $pred_2$ is $W_2 = 1/4$. If there are three matching blocks $pred_1$, $pred_2$, and $pred_3$, and corresponding template error values meet $SAD_1 \leqslant SAD_2 \leqslant SAD_3$, then weight values of $pred_1$, $pred_2$, and $pred_3$ are $W_1 = 1/2$, $W_2 = 1/4$, and $W_3 = 1/4$.

In some embodiments, the decoder performs weighting processing on the multiple matching blocks based on the weight values of the matching blocks in the following manner to obtain the target prediction block:

performing summation of the matching blocks multiplied by the respective weight values, to obtain an eighth value; adding $C_{offset}$ to the eighth value to obtain a ninth value; and right shifting the ninth value by $C_{Shift}$ to obtain the target prediction block, where $C_{offset}$ is a value determined according to $C_{Shift}$, and $C_{Shift}$ is a value determined according to a sum of the weight values of the multiple matching blocks.

For example, the decoder determines the target prediction block based on the following:

$$\text{Pred} = (\sum_{i=1}^{n} W_i * \text{Pred}_i + C_{offset}) >> C_{shift};$$

Pred represents the target prediction block, $\text{Pred}_i$ represents the i-th matching block, $W_i$ represents the weight value of the i-th matching block, n represents the quantity of the multiple matching blocks, $C_{offset}$ is a value determined according to $C_{Shift}$, and $C_{Shift}$ is a value determined according to a sum of the weight values of the multiple matching blocks.

In some embodiments, $C_{offset}=<<(C_{Shift}-1)$, $C_{Shift}=\lceil \log_2 W_{sum} \rceil$; where $\lceil \rceil$ is a ceiling operator, << is a left shift operator, and $W_{sum}$ represents a sum of the weight values of the multiple matching blocks.

In some embodiments, the decoder performs weighting processing on the multiple matching blocks in the following manner to obtain a target prediction block of the current block:

dividing the current block into multiple regions; determining, for a first region among the multiple regions, weight values for the multiple matching blocks in the first region; and performing weighting processing on the multiple matching blocks in the first region based on the weight values for the matching blocks in the first region, to obtain a prediction value of the target prediction block in the first region, where the target prediction block includes prediction values respectively in the multiple regions.

For example, weight values of different regions of the i-th matching block in the multiple matching blocks may be the same or different.

For example, when the current block is divided into a region 1 and a region 2, for the region 1, weight values for the multiple matching blocks is determined in the region 1. Weighting processing is performed on the multiple matching blocks in the region 1 based on the weight values of the matching blocks in the region 1, to obtain a prediction value of the target prediction block in the region 1. Similarly, for the region 2, weight values of the multiple matching blocks is determined in the region 2. Weighting processing is performed on the multiple matching blocks in the region 2 based on the weight values of the matching blocks in the region 2, to obtain a prediction value of the target prediction block in the region 2. The target prediction block includes a prediction value of the region 1 and a prediction value of the region 2.

It should be noted that, for a method for determining the weight values of the multiple matching blocks in the first region, reference may be made to a method for determining the weight values of the multiple matching blocks when the current block is not divided, or reference may be made to a similar manner in CIIP which determines, based on distribution of the multiple regions, the weight values of the multiple matching blocks in the first region. To avoid repetition, details are not described herein again.

In some embodiments, the decoder divides the current block into multiple regions in a horizontal direction or a vertical direction.

For example, the decoder divides the current block into four areas according to a horizontal direction or a vertical direction. For example, as shown in (a) in FIG. 6, when current block is equally divided vertically, the region indexes are respectively 0, 1, 2, and 3 from left to right. As shown in (b) in FIG. 6, when current block is equally divided horizontally, the region indexes are respectively 0, 1, 2, and 3 from top to bottom.

In some embodiments, the S330 may include:

If the at least one matching block comprises only a single matching block, the decoder predicts the current block by using the first intra prediction mode, to obtain the first prediction block; and performs weighting processing on the single matching block and the first prediction block to obtain the target prediction block.

For example, if the at least one matching block is a single matching block, the decoder may determine the target prediction block according to the following formula:

$$\text{Pred} = (7 * \text{Pred}_1 + \text{Pred}_2 + 4) >> 3;$$

Pred represents the target prediction block, $\text{Pred}_1$ represents the single matching block, and $\text{Pred}_2$ represents the first prediction block.

Certainly, the numbers in the foregoing formula may be replaced with other numbers according to an actual requirement, which is not specifically limited in this application.

For example, the first intra prediction mode is any prediction mode different from the IntraTMP mode.

For example, the first intra prediction mode may be a predefined prediction mode. The predefined prediction mode may be a default prediction mode. For example, the predefined prediction mode may be implemented by a device (for example, including decoder) pre-storing a corresponding code, table, or in another manner that may be used to indicate related information, which is not limited in this application. For example, being pre-defined may refer to being defined in a protocol. It should be further understood that, in this embodiment of this application, the "protocol" may refer to a standard protocol in the coding field, such as the image coding field, the video coding field, the hardware video coding field, the dedicated circuit video coding field, the real-time video coding field, and a related protocol applied to a future coding system, which is not limited in this application.

For example, the decoder may determine the first intra prediction mode by decoding the bitstream.

In some embodiments, both the weight value of the single matching block and the weight value of the first prediction block are predefined weight values.

For example, the ratio of the weight value of the single matching block to the weight value of the first prediction block and the sum of the weight value of the single matching block and the weight value of the first prediction block are all predefined values.

For example, the predefined weight values may be default weight values, and the predefined prediction mode may be a default prediction mode. For example, the predefined weight value may be implemented by a device (for example, including decoder) pre-storing a corresponding code, table, or in another manner that may be used to indicate related information, which is not limited in this application. For example, being pre-defined may refer to being defined in a protocol. It should be further understood that, in this embodiment of this application, the "protocol" may refer to a standard protocol in the coding field, such as the image coding field, the video coding field, the hardware video coding field, the dedicated circuit video coding field, the real-time video coding field, and a related protocol applied to a future coding system, which is not limited in this application.

In some embodiments, the method 300 may further include:

determining a weight value of the single matching block and a weight value of the first prediction block based on at least one of the following:
decoded information of an adjacent decoded block, a size of the current block, a template size of the current block, a type of the first intra prediction mode, and locations of regions of the current block.

For example, the decoder may determine a weight value of the single matching block based on at least one of decoded information of an adjacent decoded block, a size of the current block, a template size of the current block, a type of the first intra prediction mode, or locations of regions of the current block, and then determine a weight value of the first predicted block based on a predefined total weight value and the weight value of the single matching block. For example, the decoder may determine a weight value corresponding to at least one of decoded information of an adjacent decoded block, a size of the current block, a template size of the current block, a type of the first intra prediction mode, or locations of regions of the current block as a weight value of the single matching block, where the weight value of the first predicted block is a difference between the total weight value and the weight value of the single matching block.

Certainly, the weight value of the single matching block and the weight value of the first prediction block may also be determined in another manner. This is not specifically limited in this application. For example, the weight value of the single matching block and the weight value of the first predicted block may be determined by decoding the bitstream. For another example, the weight value of the single matching block may be determined based on the template error value of the single matching block, and then the weight value of the first predicted block is determined based on the predefined total weight value and the weight value of the single matching block. For example, a weight value of the single matching block is negatively correlated with a template error value of the single matching block, and a weight value of the first predicted block is a difference between the total weight value and the weight value of the single matching block.

In some embodiments, the S330 may include:

if the at least one matching block includes multiple matching blocks, predicting, by the decoder, the current block by using a second intra prediction mode, to obtain a second prediction block; and
performing weighting processing on the multiple matching blocks and the second prediction block to obtain the target prediction block.

For example, the first intra prediction mode is any prediction mode different from the IntraTMP mode.

For example, the second intra prediction mode may be a predefined prediction mode. The predefined prediction mode may be a default prediction mode. For example, the predefined prediction mode may be implemented by a device (for example, including decoder) pre-storing a corresponding code, table, or in another manner that may be used to indicate related information, which is not limited in this application. For example, being pre-defined may refer to being defined in a protocol. It should be further understood that, in this embodiment of this application, the "protocol" may refer to a standard protocol in the coding field, such as the image coding field, the video coding field, the hardware video coding field, the dedicated circuit video coding field, the real-time video coding field, and a related protocol applied to a future coding system, which is not limited in this application.

For example, the decoder may determine the second intra prediction mode by decoding the bitstream.

In some embodiments, the weight value of the second predicted block is a predefined weight value.

For example, the ratio of the sum of the weight values of the multiple matching blocks to the weight value of the second prediction block, the weight values of the multiple matching blocks, or the sum of the weight values of the multiple matching blocks and the weight value of the second prediction block may all be predefined values.

For example, the predefined weight values may be default weight values, and the predefined prediction mode may be a default prediction mode. For example, the predefined weight values may be implemented by a device (for example, including decoder) pre-storing a corresponding code, table, or in another manner that may be used to indicate related information, which is not limited in this application. For example, being pre-defined may refer to being defined in a protocol. It should be further understood that, in this embodiment of this application, the "protocol" may refer to a standard protocol in the coding field, such as the image coding field, the video coding field, the hardware video coding field, the dedicated circuit video coding field, the real-time video coding field, and a related protocol applied to a future coding system, which is not limited in this application.

In some embodiments, the method 300 may further include:

determining a weight value of the second prediction block based on at least one of the following:
decoded information of an adjacent decoded block, a size of the current block, a template size of the current block, a type of the second intra prediction mode, a total weight value of the multiple matching blocks, and locations regions of the current block.

For example, the decoder may determine a sum of weight values of the multiple matching blocks based on at least one of decoded information of an adjacent decoded block, a size of the current block, a template size of the current block, a type of the first intra prediction mode, or locations regions of the current block, and then determine a weight value of the second predicted block based on a predefined total weight value and a sum of weight values of the multiple matching blocks. For example, the decoder may determine a weight value corresponding to at least one of decoded information of an adjacent decoded block, a size of the current block, a template size of the current block, a type of the first intra prediction mode, or locations regions of the current block as a sum of the weight values of the multiple matching blocks, where the weight value of the second predicted block is a difference between the total weight value and the sum of the weight values of the multiple matching blocks.

Certainly, the sum of the weight values of the multiple matching blocks and the weight value of the second prediction block may also be determined in another manner. This is not specifically limited in this application. For example, the sum of the weight values of the multiple matching blocks and the weight value of the second predicted block may be determined by decoding the bitstream. For another example, the sum of the weight values of the multiple matching blocks may be determined based on the average value of template error values of the multiple matching blocks, and then the weight value of the second predicted block may be determined based on the sum of the weight values of the multiple matching blocks and a predefined total weight value. For example, the weight values of the multiple matching blocks are negatively correlated with an average value of the template error values of the multiple matching blocks, and the weight value of the second prediction block is a difference between the total weight value and the sum of the weight values of the multiple matching blocks.

It should be noted that, in a case in which the sum of the weight values of the multiple matching blocks is known, the decoder may determine, the weight values of the multiple matching blocks in a manner described above of fusing only the multiple matching blocks, and then determine the weight value of the second predicted block based on a ratio of the weight values of the multiple matching blocks to the weight value of the second predicted block and a predefined total weight value. Alternatively, the decoder may determine, in a manner described above of fusing only the multiple matching blocks, weight values of the multiple matching blocks, where the weight value of the second predicted block is a predefined value.

In some embodiments, a template of the current block includes at least one of the following: a left reconstructed pixel, a lower left reconstructed pixel, an upper left reconstructed pixel, an upper reconstructed pixel, and an upper right reconstructed pixel.

For example, the left reconstructed pixel, the lower left reconstructed pixel, or the upper left reconstructed pixel includes one or more columns of reconstructed pixels.

For example, the upper left reconstructed pixel, the upper reconstructed pixel, or the upper right reconstructed pixel includes one or more rows of reconstructed pixels.

FIG. 11 is an example of a template of a current block according to an embodiment of this application.

As shown in (a) in FIG. 11, the template of the current block includes a left reconstructed pixel, a lower left reconstructed pixel, an upper left reconstructed pixel, an upper reconstructed pixel, and an upper right reconstructed pixel.

As shown in (b) in FIG. 11, the template of the current block includes a left reconstructed pixel, an upper left reconstructed pixel, an upper reconstructed pixel, and an upper right reconstructed pixel. As shown in (c) in FIG. 11, the template of the current block includes a left reconstructed pixel, a lower left reconstructed pixel, an upper left reconstructed pixel, and an upper reconstructed pixel. As shown in (d) in FIG. 11, the template of the current block includes an upper left reconstructed pixel, an upper reconstructed pixel, and an upper right reconstructed pixel. As shown in (e) in FIG. 11, the template of the current block includes a left reconstructed pixel, a lower left reconstructed pixel, and an upper left reconstructed pixel.

In some embodiments, the S320 may include:

determining a constraint condition for using the IntraTMP mode; and

when the constraint condition is met, predicting the at least one matching block based on the IntraTMP mode.

In some embodiments, the constraint condition is obtained according to at least one of the following: a size of the current block, decoded information of a adjacent decoded block, a sequence level flag, a frame level flag, a macroblock level flag, a type of a slice in which the current block is located, or a frame type of an image frame in which the current block is located.

For example, in a case in which a constraint condition for using the IntraTMP mode is met, the decoder decodes the foregoing first flag.

For example, when a constraint condition for using the IntraTMP mode is met, the decoder decodes the foregoing first flag, and if the first flag indicates using the IntraTMP mode, the decoder determines at least one matching block of the current block based on the IntraTMP mode.

For example, the constraint condition includes at least one of the following: a size of the current block is greater than (or equal to or less than) a predefined size, decoded information of an adjacent decoded block is predefined decoded information, a value of a sequence level flag is a predefined value, a value of a frame level flag is a predefined value, a value of a macroblock level flag is a predefined value, a type of a slice in which the current block is located is a predefined type, and a frame type of an image frame in which the current block is located is a predefined type. The predefined information (for example, a predefined size, a predefined decoded information, a predefined value, and a predefined type) may be implemented by a device (for example, including a decoder) pre-storing a corresponding code, a table, or in another manner that may be used to indicate related information, which is not limited in this application. For example, being predefined may refer to being defined in a protocol. It should be further understood that, in this embodiment of this application, the "protocol" may refer to a standard protocol in the coding field, such as the image coding field, the video coding field, the hardware video coding field, the dedicated circuit video coding field, the real-time video coding field, and a related protocol applied to a future coding system, which is not limited in this application.

For example, it is assumed that the constraint condition includes that a frame type of an image frame in which the current block is located is a predefined type. In this case, the predefined type may be an I frame, that is, the constraint condition includes that a frame type of an image frame in which the current block is located is an I frame. That is, only when the image frame in which the current block is located is an I frame used for intra prediction, the decoder determines, based on the IntraTMP mode, at least one matching block of the current block.

The following describes the preferred embodiments provided in this application.

Embodiment 1:

Step 1:

The decoder decodes input bitstream. The decoding process is performed according to the CTU sequence. According to a decoded block division flag, the decoder divides the CTU into different coding blocks for decoding. If the flag sps_tmp_enabled_flag in the SPS is equal to 1, and the size of a current coding block meets a limitation MaxTmpSize on an IntraTMP coding block in the SPS, intra_tmp_flag is decoded. If intra_tmp_flag is equal to 1, it indicates that the current coding block is encoded by using the IntraTMP mode, and thus intra_tmp_fusion_flag is decoded. If intra_tmp_flag is equal to 0, it indicates that the current coding block is not encoded by using the IntraTMP mode, and thus intra_tmp_fusion_flag is not decoded. The related syntax elements in the decoding are shown in Table 1.

Step 2:

X context models are used to perform decoding on the syntax element intra_tmp_fusion_flag. The indexes CtxIdxInc corresponding to different context models are determined according to encoded information of an adjacent coding block and a size of the current coding block. For example, X is equal to 3, and coordinates of a current coding block is (x, y). If the coding block cuLeft exists at coordinates (x-1, y) and intra_tmp_fusion_flag of cuLeft is 1, CtxIdxInc is 1; otherwise, CtxIdxInc is 0. Then, if the coding block cuAbove exists at coordinates (x, y-1) and intra_tmp_fusion_flag of cuAbove is 1, CtxIdxInc is increased by 1, otherwise, CtxIdxInc is increased by 0.

Step 3:

If intra_tmp_fusion_flag is equal to 1, it indicates using the IntraTMP combined/fusion prediction for the current coding block. If intra_tmp_fusion_flag is equal to 0, it indicates using the IntraTMP prediction mode with a single matching block for the current coding block.

Step 4:

When the decoded intra_tmp_flag of the current coding block is equal to 1 and the intra_tmp_fusion_flag is equal to 1, it indicates that the current coding block is encoded by the IntraTMP mode and the IntraTMP combined/fusion prediction is used to acquire the prediction block of the current coding block.

Step 5:

Intra template matching is performed in the search area according to the current coding block to obtain the candidate block vector list. For example, template error values (represented by SAD between templates) of different block vectors are calculated by using the step S (i.e., every S points in the horizontal and vertical directions) within the search area of the current coding block. For example, if the currently matched block vector is $(X_0, Y_0)$, the next matched block vector is $(X_0\text{-}S, Y_0)$, and the next matched block vector in the vertical direction has a vertical coordinate of $Y_0$-4. A candidate block vector list whose size is X is constructed, and X may be determined by a quantity N of to-be-fused matching block. For example, X is equal to 3*N. This list always recodes the 3*N block vectors with the least template error values during template matching. The block vectors in the list are sorted according to their template error values. In addition, the template error values corresponding to the respective block vectors in the list are stored for subsequent steps.

Step 6:

N available block vectors are obtained by using the candidate block vector list. A matching block pointed by the block vectors are used as matching blocks of the current coding block, and are used in a subsequent weighted fusion process. For example, the candidate block vector list is pruned and refined N times to obtain N available block vectors. The pruning step is used to avoid excessive overlapping of refining steps, and the refining step is used to obtain more accurate matching blocks. Specifically, when performing the i-th pruning and refining, the i-th block vector $BV_i$ in the list is taken, and $BV_i$ is equal to $(X_i, Y_i)$. It is determined that the pruning and refining distance L = (S/2) *H, where S is a template matching step, and H is a height of the current coding block. A range of pruning and refining is a rectangular area of which the upper left corner is $(X_i\text{-}L, Y_i\text{-}L)$ and the lower right corner is $(X_i\text{+}L, Y_i\text{+}L)$. If a block vector j $(X_j, Y_j)$ sorted after i in the list meets:

$$X_i\text{-}L \ \leqslant\ X_j\ \leqslant\ X_i\text{+}L\ \&\&\ Y_i - L\ \leqslant\ Y_j\ \leqslant\ Y_i\text{+}L\ ;$$

It indicates that the block vector j is in the pruning range and should be removed from the list. Then, template matching is performed in the rectangular area by using a step size S'(S'=S/2), to obtain a block vector i' with a least template error value as the i-th available block vector. When S' is greater than one pixel, the pruning and refining process may be repeated until S' is equal to 1.

Step 7:

It is determined whether matching blocks corresponding to the N available block vectors are used in a weighted fusion process. For example, thresholds threshold1 and threshold2 are set as follows:

$$\text{threshold1} = (1 << (\text{bitDepth} - 2) * \text{num\_template};$$

$$\text{threshold2} = \text{minSAD} << 1;$$

where num_template is a quantity of template pixels, bitDepth is a pixel bit width, and minSAD is a least template error value of the N block vectors.
If the template error value SADi of block vector i meets the following requirements:

$$\text{SAD}_i \leqslant \text{threshold1} \ \&\& \ \text{SAD}_i < \text{threshold2};$$

the matching block i corresponding to the block vector i is used for subsequent weighted fusion.

Step 8:

The weight value of each matching block is calculated according to the template error value of the matching block. For example, n (1<n<=N) matching block are obtained, and corresponding template error values are respectively $\text{SAD}_1$ to $\text{SAD}_n$. In this case, a weight value $W_i$ of the matching block i ($1 \leq i \leq n$) is:

$$\text{SAD}_i = (\text{SAD}_i == 0) \ ? \ 1 : \text{SAD}_i;$$

$$\text{SUM} = \sum_{i=1}^{n} \text{SAD}_i \ ;$$

$$W_i = (\text{SUM} - \text{SAD}_i) / ((n-1) * \text{SUM});$$

$W_i$ may be calculated by performing operations such as table lookup, bit operation, addition, subtraction or multiplication . For example, if the precision of the weight value is 1/64,

$$X = \left\lceil \log_2 ((n-1) * \text{SUM}) \right\rceil;$$

$$\text{Norm} = ((n-1) * \text{SUM} << 4 >> X) \ \& \ 15;$$

$$V = \text{table}[\text{Norm}] \ | \ 8;$$

$$X = \text{norm} == 0 \ ? \ X : X+1;$$

$$\text{Shift} = X + 3;$$

$$\text{Add} = 1 << (\text{Shift} - 1);$$

$$W_i = ((\text{SUM} - \text{SAD}_i) * V * 64 + \text{Add}) >> \text{Shift}, \ 1 \leqslant i < n;$$

$$W_n = 64 - \sum_{i=1}^{n-1} W_i \ ;$$

Where table[] = {0, 7, 6, 5, 5, 4, 4, 3, 3, 2, 2, 1, 1, 1, 1, 0 }.
In particular, when step 6 obtains only one matching block, no weighting calculation is performed.

Step 9:

After obtaining the matching block and weight values of the matching blocks according to step 8, weighted fusing is performed on the matching blocks to obtain a final IntraTMP combined/fusion prediction block. For example, n (1<n<=N) matching blocks are obtained from step 16 to step 19, and corresponding weights are $W_1$ to $W_n$. Therefore, final prediction block Pred is:

$$\text{Pred} = (\sum_{i=1}^{n} W_i * \text{Pred}_i + \text{offset}) >> \text{shift};$$

Where offset = 1<<(shift-1), $\text{shift} = \log_2(\sum_{i=1}^{n} W_i)$ ;

In particular, when only one matching block Pred1 is obtained in step 6, the matching block $Pred_1$ is weighted fused with the prediction block Pred_planar obtained by planar mode to obtain the final prediction block Pred:

$$Pred = (7 * Pred_1 + Pred\_planar + 4) >> 3.$$

Step 10:

The coefficient signal of the current coding block is decoded and a residual block of the current coding block is obtained by means of inverse quantization and inverse transform, the predicted block Pred and the residual block are added to obtain the reconstructed block of the current coding block, completing the decode of the current coding block.

The foregoing describes in detail the preferred embodiments of this application with reference to the accompanying drawings. However, this application is not limited to specific details in the foregoing embodiments. Within a technical concept scope of this application, multiple simple variations of the technical solutions of this application may be performed, and these simple variations are all within the protection scope of this application. For example, each specific technical feature described in the foregoing specific implementation manner may be combined in any suitable manner without contradiction. To avoid unnecessary repetition, various possible combination manners are not described in this application. For another example, any combination may also be performed between different embodiments of this application, provided that the combination is not contrary to the idea of this application, the combination should also be considered as the content disclosed in this application. It should be further understood that in the various method embodiments of this application, a sequence number of the foregoing processes does not mean a sequence of execution. The execution sequence of the processes should be determined according to functions and internal logic of the processes, and should not constitute any limitation on an implementation process of the embodiments of this application.

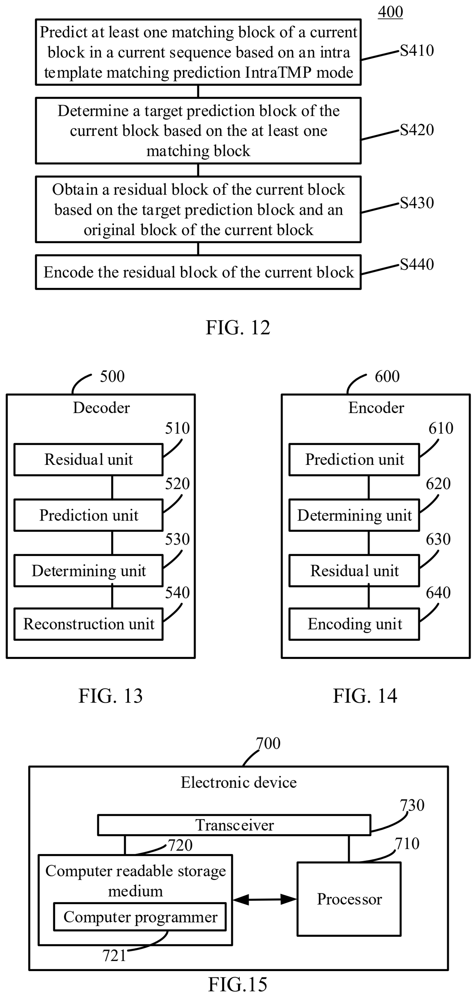

The foregoing describes the decoding method according to the embodiments of this application in detail from a perspective of decoder. The following describes the encoding method according to the embodiments of this application from a perspective of encoder with reference to FIG. 12.

FIG. 12 is a schematic flowchart of an encoding method 400 according to an embodiment of this application. It should be understood that the encoding method 400 may be executed by an encoder. For example, the method is applied to the encoding framework shown in FIG. 1. For ease of description, the following uses encoder as an example to describe the encoding method 400.

As shown in FIG. 12, the encoding method 400 may include the following steps:

S410. predicting at least one matching block of a current block in a current sequence based on an intra template matching prediction IntraTMP mode;
S420. determining a target prediction block of the current block based on the at least one matching block;
S430. obtaining a residual block of the current block based on the target prediction block and an original block of the current block; and
S440. encoding the residual block of the current block.

In some embodiments, the method 400 may further include:

encoding a second flag,
wherein the second flag indicates using the IntraTMP mode for prediction.

In some embodiments, the method 400 may further include:

encoding a second flag,
wherein the second flag indicates using the IntraTMP mode for prediction.

In some embodiments, the encoding the second flag comprises:

determining a target context index;
encoding the first flag by using the target context index.

In some embodiments, the determining the target context index comprises:

determining the target context index based on encoded information of an adjacent coding block of the current block; and/or

determining the target context index based on a size of the current block.

In some embodiments, coordinates of the current block are (x, y), and the adjacent coding block comprises a first coding block whose coordinates are (x-1, y) and a second coding block whose coordinates are (x, y-1); and encoded information of the first coding block comprises a prediction mode used for a prediction block of the first coding block, and decoded information of the second coding block comprises a prediction mode used for a prediction block of the second coding block; and

the determining the target context index based on the encoded information of the adjacent coding block of the current block comprises:

if the prediction mode used for the prediction block of the first coding block is a mode of performing fusion prediction based on the IntraTMP mode, assigning a first value as A; otherwise, assigning the first value as B, both A and B being integers;

if the prediction mode used for the prediction block of the second coding block is a prediction mode of performing fusion prediction based on the IntraTMP mode, assigning a second value as C; otherwise, assigning the second value as D, both C and D being integers;

determining a sum of the first value and the second value as the target context index.

In some embodiments, the S410 may include:

performing template matching on the current block based on the IntraTMP mode to obtain X candidate matching blocks; and

determining the at least one matching block based on the X candidate matching blocks.

In some embodiments, the performing template matching on the current block based on the IntraTMP mode to obtain the X candidate matching blocks comprises:

performing intra template matching in a search area of the current block based on the IntraTMP mode, to obtain all candidate matching blocks of the current block; and

determining, as the X candidate matching blocks, matching blocks sorted in the first X positions in an ascending order of template error values.

In some embodiments, the performing template matching on the current block based on the IntraTMP mode to obtain the X candidate matching blocks comprises:

constructing a candidate matching block list based on the IntraTMP mode, wherein the candidate matching block list is used to recode X matching blocks with least template error values obtained by performing intra template matching in a search area of the current block.

In some embodiments, the performing template matching on the current block based on the IntraTMP mode to obtain the X candidate matching blocks comprises:

dividing the search area of the current block into Y sub-areas; and

performing intra template matching in each of the Y sub-areas based on the IntraTMP mode, to obtain candidate matching blocks in the respective sub-areas,

wherein the X candidate matching blocks comprise the candidate matching blocks in the respective sub-areas.

In some embodiments, X=Y, or X is a multiple of Y.

In some embodiments, the determining the at least one matching block based on the X candidate matching blocks comprises:

determining N available matching blocks based on the X candidate matching blocks, wherein $X \geq N$;

determining the at least one matching block based on the N available matching blocks.

In some embodiments, X is a multiple of N.

In some embodiments, the determining the N available matching blocks based on the X candidate matching blocks comprises:

pruning the X candidate matching blocks based on spacings between the X candidate matching blocks to obtain the N available matching blocks.

In some embodiments, the pruning the X candidate matching blocks based on the spacings between the X candidate matching blocks to obtain the N available matching blocks comprises:

determining, from the X candidate matching blocks, a current candidate matching block used for pruning, according to an ascending order of template error values; and
determining a pruning range of the current candidate matching block; and
removing all candidate matching blocks except the current candidate matching block in the pruning range, to obtain remaining candidate matching blocks after performing pruning based on the current candidate matching block, and
when a number of times of performing pruning on the X candidate matching blocks is equal to N, determining the first N candidate matching blocks among the remaining candidate matching blocks as the N available matching blocks, or when a quantity of the remaining candidate matching blocks obtained after performing pruning based on the current candidate matching block is less than or equal to N, determining the first N candidate matching block among remaining candidate matching blocks obtained after performing previous pruning as the N available matching blocks.

In some embodiments, the determining the pruning range of the current candidate matching block comprises: determining the pruning range based on a size of the current block and the current candidate matching block.

In some embodiments, the determining the pruning range based on the size of the current block and the current candidate matching block comprises:

determining (S/E)*H as the pruning range by using a block vector pointing from the current block to the current candidate matching block as a center; and
wherein / represents a division operator, * represents a multiplication operator, S represents a matching step used for the X candidate matching blocks, H represents a height of current block, and E is a positive integer.

In some embodiments, the determining the pruning range of the current candidate matching block comprises: determining the pruning range based on a predefined value.

In some embodiments, the determining the N available matching blocks based on the X candidate matching blocks comprises:
refining the X candidate matching blocks to obtain the N available matching blocks.

In some embodiments, the refining the X candidate matching blocks to obtain the N available matching blocks comprises:

determining a refining range of a current candidate matching block in the X candidate matching blocks; and
performing intra template matching in the refining range based on at least one matching step to obtain matching blocks in the refining range, wherein each of the at least one matching step is less than a matching step used for the X candidate matching blocks; and
determining a matching block having a least template loss value in the matching blocks in the refining range as a candidate matching block obtained by refining the current candidate matching block; and
determining the candidate matching block obtained by refining the current candidate matching block as an available matching block in the N available matching blocks.

In some embodiments, the determining the refining range of the current candidate matching block of the X candidate matching blocks comprises:
determining the refining range based on a size of the current block and the current candidate matching block.

In some embodiments, the determining the refining range based on the size of the current block and the current candidate matching block comprises:

determining (S/F)*H as the refining range by using a block vector pointing from the current block to the current candidate matching block as a center,
wherein / represents a division operator, * represents a multiplication operator, S represents a matching step used for the X candidate matching blocks, H represents a height of current block, and F is a positive integer.

In some embodiments, the determining the refining range of the current candidate matching block in the X candidate matching blocks comprises:
determining the refining range based on a predefined value.

In some embodiments, the determining the matching block with the least template loss value in the matching blocks in the refining range as the candidate matching block obtained by refining the current candidate matching block comprises:

determining, if the current candidate matching block is an i-th matching block in the X candidate matching blocks and a j-th matching block in the refining range is a matching block that has a least template loss value in the first j matching blocks in the refining range, the j-th matching block as a candidate matching block obtained by refining the current candidate matching block in a case that candidate matching blocks obtained by refining previous i-1 candidate matching blocks do not comprise the j-th matching block.

In some embodiments, the determining the N available matching blocks based on the X candidate matching blocks comprises:

pruning and refining the X candidate matching blocks to obtain the N available matching blocks.

In some embodiments, the pruning and refining the X candidate matching blocks to obtain the N available matching blocks comprises:

after pruning the X candidate matching blocks, refining the pruned candidate matching blocks; or
after refining the X candidate matching blocks, pruning the refined candidate matching blocks; or
after pruning the X candidate matching blocks once based on a current candidate matching block in the X candidate matching blocks, refining the current candidate matching block.

In some embodiments, the determining the at least one matching block based on the N available matching blocks comprises:

determining a fusion condition for the N available matching blocks; and
determining, from the N available matching blocks, an available matching block that meets the fusion condition as the at least one matching block.

In some embodiments, the determining the fusion condition for the N available matching blocks comprises:

determining the fusion condition based on at least one of:
a size of a template of the current block, a bit width of a pixel of the current block in the current block, and a minimum template error value of the N available matching blocks.

In some embodiments, the fusion condition comprises a first threshold, wherein the first threshold is a threshold determined based on the size of the template of the current block and the bit width; and

the determining, from the N available matching blocks, the available matching block that meets the fusion condition as the at least one matching block comprises:
determining, from the N available matching blocks, an available matching block having a template error value less than or equal to the first threshold as the at least one matching block.

In some embodiments, wherein the first threshold is determined according to following formula:

$$T_1 = n_1 << (b_{depth} - n_2) * n_{template} ;$$

wherein << is a left shift operator, - is a subtraction operator, * is a multiplication operator, $T_1$ represents the first threshold, $b_{depth}$ represents the bit width, and $n_{template}$ represents a quantity of pixels in the template of the current block, and both $n_1$ and $n_2$ are positive integers.

In some embodiments, the fusion condition comprises a second threshold, and the second threshold is a threshold determined based on the minimum template error value; and

the determining, from the N available matching blocks, the available matching block that meets the fusion condition as the at least one matching block comprises:
determining, from the N available matching blocks, an available matching block having a template error value less than or equal to the second threshold as the at least one matching block.

In some embodiments, the second threshold is determined according to the following formula:

$$T_2 = \min_{SAD} << n_3;$$

wherein $<<$ is a left shift operator, $T_2$ represents the second threshold, $\min_{SAD}$ represents the minimum template error value, and $n_3$ is a positive integer.

In some embodiments, the method 400 may further include:

determining indication information, wherein the indication information is used to indicate the at least one matching block in the N available matching blocks; and
encoding the indication information.

In some embodiments, the S420 may include:
performing, if the at least one matching block comprises a plurality of matching blocks, weighting processing on the plurality of matching blocks to obtain the target prediction block of the current block.

In some embodiments, the performing weighting processing on the plurality of matching blocks to obtain the target prediction block comprises:

determining weight values of respective matching blocks of the plurality of matching blocks; and
performing weighting processing on the plurality of matching blocks based on the weight values of the respective matching blocks to obtain the target prediction block.

In some embodiments, the determining the weight values of the respective matching blocks of the plurality of matching blocks comprises:
determining the weight values of the respective matching blocks based on template error values of the respective matching blocks, a quantity of the plurality of matching blocks, and a sum of the weight values of the plurality of matching blocks.

In some embodiments, the determining the weight values of the respective matching blocks based on the template error values of the respective matching blocks, the quantity of the plurality of matching blocks, and the sum of the weight values of the plurality of matching blocks comprises:

determining, based on the template error values of the respective matching blocks, third values corresponding to the respective matching blocks; and
performing summation on the third values corresponding to the respective matching blocks to obtain a fourth value; and
determining the weight values of the respective matching blocks based on the fourth value and the template error values of the respective matching blocks.

In some embodiments, the determining, based on the template error values of the respective matching blocks, the third values corresponding to the respective matching blocks comprises:

if a template error value of an i-th matching block in the plurality of matching blocks is 0, determining a preset value greater than 0 as a third value corresponding to the i-th matching block; or
if a template error value of an i-th matching block is 0, determining the template error value of the i-th matching block as the third value corresponding to the i-th matching block.

In some embodiments, the determining the weight values of the respective matching blocks based on the fourth value and the template error values of the respective matching blocks comprises:

determining a weight value of an i-th matching block in the plurality of matching blocks in following manner:
subtracting, from the fourth value, a third value corresponding to the i-th matching block, to obtain a fifth value; and
multiplying the fourth value by n-1 to obtain a sixth value, where n represents a quantity of the plurality of matching blocks; and
determining the weight value of the i-th matching block based on the fifth value and the sixth value.

In some embodiments, the determining the weight value of the i-th matching block based on the fifth value and the sixth value comprises:

if the i-th matching block is not a last matching block of the plurality of matching blocks, determining a ratio of the fifth value to the sixth value as the weight value of the i-th matching block;
if the i-th matching block is the last matching block, subtracting weight values of previous i-1 matching blocks of the plurality of matching blocks from a preset total weight value, to obtain the weight value of the last matching block.

In some embodiments, the determining the weight value of the i-th matching block based on the fifth value and the sixth value comprises:

determining a ratio of the fifth value to the sixth value as the weight value of the i-th matching block,
wherein a sum of the weight values of the plurality of matching blocks is equal to a preset total weight value.

In some embodiments, the ratio of the fifth value to the sixth value is a value obtained by using a bit operation, an addition operation, and a subtraction operation.

In some embodiments, the ratio of the fifth value to the sixth value is a value determined by following formula:

$$W_i=(D_5*V*W_{sum}+D_{Add})>>D_{Shift} \ ;$$

wherein * is a multiplication operator, + is an addition operator, >> is a right shift operator, $D_5$ represents the fifth value, $W_{sum}$ represents the total weight value, V is a value retrieved from a lookup table according to a seventh value, $D_{Shift}$ is a right shift amount determined according to the seventh value, the seventh value is a value determined according to the sixth value, and $D_{Add}$ is a value determined according to $D_{Shift}$.

In some embodiments, V and $D_{Shift}$ are determined in the following manner:

$$X=\lceil\log_2 D_6\rceil;$$

$$D_7=((n-1)*D_4<<4>>X)\&15;$$

$$V=table[D_7]|8;$$

$$X=D_7==0?X:X+1;$$

$$D_{Shift}=X+3;$$

wherein ⌈ ⌉ is an ceiling operator, * is a multiplication operator, << is a left shift operator, >> is a right shift operator, & is a logic AND operator, × is a logic OR operator, ? is a conditional operator, + is an addition operator, $D_6$ represents the sixth value, $D_4$ represents the fourth value, table[] represents a lookup table, and $D_7$ represents the seventh value.

In some embodiments, $D_{Add}=1<<(D_{Shift}-1)$, or $D_{Add}=1<<D_{Shift}$, wherein << is a left shift operator, and - is a subtraction operator.

In some embodiments, the determining the weight values of the respective matching blocks of the plurality of matching blocks comprises:

selecting, from a plurality of candidate sets and based on a quantity of the plurality of matching blocks, a first candidate set having a quantity of weight values equal to the quantity of the plurality of matching blocks, wherein each of the candidate sets comprises at least one candidate weight value;
determining the weight values of the respective matching blocks based on the first candidate set.

In some embodiments, template error values of the respective matching blocks are negatively correlated with the weight values of the respective matching blocks.

In some embodiments, the the performing weighting processing on the plurality of matching blocks based on the weight values of the respective matching blocks to obtain the target prediction block comprises:

performing summation on the matching blocks multiplied by the weight values of the respective matching blocks, to obtain an eighth value;
adding $C_{offset}$ to the eighth value to obtain a ninth value; and
right shifting the ninth value by $C_{Shift}$ to obtain the target prediction block,
wherein $C_{offset}$ is a value determined according to $C_{Shift}$, and $C_{Shift}$ is a value determined according to a sum of the weight values of the plurality of matching blocks.

In some embodiments, $C_{offset}$=<<($C_{Shift}$-1), $C_{Shift}=\lceil \log_2 W_{sum}\rceil$ , wherein $\lceil\ \rceil$ is a ceiling operator, << is a left shift operator, and $W_{sum}$ represents the sum of the weight values of the plurality of matching blocks.

In some embodiments, the performing weighting processing on the plurality of matching blocks to obtain the target prediction block comprises:

dividing the current block into a plurality of regions; and
determining, for a first region among the plurality of regions, weight values of the respective matching blocks in the first region; and
performing weighting processing on the plurality of matching blocks in the first region based on the weight values of the respective matching blocks in the first region, to obtain a prediction value of the target prediction block in the first region,
wherein the target prediction block comprises prediction values of respective regions of the plurality of regions.

In some embodiments, the dividing the current block into the plurality of regions comprises:
dividing the current block into the plurality of regions in a horizontal direction or a vertical direction.

In some embodiments, the S420 may include:

if the at least one matching block comprises only a single matching block, predicting the current block by using a first intra prediction mode, to obtain a first prediction block;
performing weighting processing on the single matching block and the first prediction block to obtain the target prediction block.

In some embodiments, a weight value for the single matching block and a weight value for the first predicted block are both predefined weight values.

In some embodiments, the method 400 may further include:

determining a weight value for the single matching block and a weight value for the first predicted block based on at least one of the following:
encoded information of an adjacent coding block, a size of the current block, a template size of the current block, a type of the first intra prediction mode, and locations of regions of the current block.

In some embodiments, the S420 may include:

if the at least one matching block comprises a plurality of matching blocks, predicting the current block by using a second intra prediction mode, to obtain a second prediction block;
performing weighting processing on the plurality of matching blocks and the second prediction block to obtain the target prediction block.

In some embodiments, a weight value for the second predicted block is a predefined weight value.

In some embodiments, the method 400 may further include:
determining a weight value for the second prediction block based on at least one of following:
encoded information of an adjacent coding block, a size of the current block, a template size of the current block, a type of the second intra prediction mode, a total weight value of the multiple matching blocks, and locations of regions of the current block.

In some embodiments, a template of the current block comprises at least one of: a left reconstructed pixel, a lower left reconstructed pixel, an upper left reconstructed pixel, an upper reconstructed pixel, and an upper right reconstructed pixel.

In some embodiments, the S410 may include:

determining a constraint condition for using the IntraTMP mode; and
predicting the at least one matching block based on the IntraTMP mode if the constraint condition is met.

In some embodiments, the constraint condition is obtained according to at least one of: a size of the current block, encoded information of an adjacent coding block, a sequence level flag, a frame level flag, a macroblock level flag, a type of a slice in which the current block is located, or a frame type of an image frame in which the current block is located.

It should be understood that the decoding method 300 is a reverse process or a reverse operation of the encoding method 400. Therefore, for steps in the encoding method 400, reference may be made to corresponding steps in the decoding method 300. For brevity, details are not described herein again.

The following describes a preferred embodiments provided in this application.

Embodiment 2:

Step 1:

The encoder divides an input video signal into CTUs (Coding Tree Unit), and divides the CTU into to-be-encoded CUs (Coding Unit, also referred to as coding block) of different sizes by using a binary tree, a triple tree, or a quadtree. For the current coding block, the encoder selects an available encode mode according to the mode flag in the sequence parameter set SPS to perform an encoding attempt. When the IntraTMP mode flag sps_tmp_enabled_flag in the SPS is equal to 1 and the size of the current coding block meets the IntraTMP coding block size limitation in the SPS, the current coding block is allowed to be encoded by using the IntraTMP mode.

Step 2:

If the current coding block is encoded by using the IntraTMP mode, the current coding block may be encoded by using the IntraTMP prediction method with a single matching block, or using the IntraTMP combined/fusion prediction. A specific process of predicting and encode by using the IntraTMP combined/fusion prediction is as follows:

Step 3:

Intra template matching is performed in the search area according to the current coding block to obtain the candidate block vector list. For example, template error values (represented by SAD between templates) of different block vectors are calculated by using the step S (i.e., every S points in the horizontal and vertical directions) within the search area of the current coding block. For example, if the currently matched block vector is $(X_0, Y_0)$, the next matched block vector is $(X_0\text{-}S, Y_0)$, and the next matched block vector in the vertical direction has a vertical coordinate of $Y_0$-4. A candidate block vector list whose size is X is constructed, and X may be determined by a quantity N of to-be-fused matching block. For example, X is equal to 3*N. This list always recodes the 3*N block vectors with the least template error values during template matching. The block vectors in the list are sorted according to their template error values. In addition, the template error values corresponding to the respective block vectors in the list are stored for subsequent steps.

Step 4:

N available block vectors are obtained by using the candidate block vector list. A matching block pointed by the block vectors are used as matching blocks of the current coding block, and are used in a subsequent weighted fusion process. For example, the candidate block vector list is pruned and refined N times to obtain N available block vectors. The pruning step is used to avoid excessive overlapping of refining steps, and the refining step is used to obtain more accurate matching blocks. Specifically, when performing the i-th pruning and refining, the i-th block vector $BV_i$ in the list is taken, and $BV_i$ is equal to $(X_i, Y_i)$. It is determined that the pruning and refining distance L = (S/2) *H, where S is a template matching step, and H is a height of the current coding block. A range of pruning and refining is a rectangular area of which the upper left corner is $(X_i\text{-}L, Y_i\text{-}L)$ and the lower right corner is $(X_i\text{+}L, Y_i\text{+}L)$. If a block vector j $(X_j, Y_j)$ sorted after i in the list meets:

$$X_i\text{-}L \leqslant X_j \leqslant X_i\text{+}L \ \&\& \ Y_i - L \leqslant Y_j \leqslant Y_i\text{+}L;$$

It indicates that the block vector j is in the pruning range and should be removed from the list. Then, template matching is performed in the rectangular area by using a step size S'(S'=S/2), to obtain a block vector i' with a least template error value as the i-th available block vector. When S' is greater than one pixel, the pruning and refining process may be repeated until S' is equal to 1.

Step 5:

It is determined whether matching blocks corresponding to the N available block vectors are used in a weighted fusion process. For example, thresholds threshold1 and threshold2 are set as follows:

$$\text{threshold1} = (1 << (\text{bitDepth} - 2) * \text{num\_template};$$

$$\text{threshold2} = \text{minSAD} << 1;$$

where num_template is a quantity of template pixels, bitDepth is a pixel bit width, and minSAD is a least template error value of the N block vectors.

If the template error value SADi of block vector i meets the following requirements:

$SAD_i \leq$ threshold1 && $SAD_i <$ threshold2;

the matching block i corresponding to the block vector i is used for subsequent weighted fusion.

Step 6:

The weight value of each matching block is calculated according to the template error value of the matching block. For example, n (1<n<=N) matching block are obtained, and corresponding template error values are respectively $SAD_1$ to $SAD_n$. In this case, a weight value $W_i$ of the matching block i ($1\leq i\leq n$) is:

$$SAD_i = (SAD_i == 0) \ ? \ 1 : SAD_i;$$

$$SUM = \sum_{i=1}^{n} SAD_i \ ;$$

$$W_i = (\ SUM - SAD_i \ ) / (( \ n - 1 \ ) * SUM \ );$$

$W_i$ may be calculated by performing operations such as table lookup, bit operation, addition, subtraction or multiplication . For example, if the precision of the weight value is 1/64,

$$X = \left\lceil \log_2 (( \ n - 1 \ ) * SUM) \right\rceil;$$

$$Norm = (( \ n - 1 \ ) * SUM << 4 >> X) \ \& \ 15;$$

$$V = \text{table[Norm]} \mid 8;$$

$$X = \text{norm} == 0 \ ? \ X : X+1;$$

$$Shift = X + 3;$$

$$Add = 1 << (Shift - 1);$$

$$W_i = (( \ SUM - SAD_i \ ) * V * 64 + Add) >> Shift, \ 1 \leq i < n;$$

$$W_n = 64 - \sum_{i=1}^{n-1} W_i \ ;$$

Where table[] = {0, 7, 6, 5, 5, 4, 4, 3, 3, 2, 2, 1, 1, 1, 1, 0 }.

In particular, when step 6 obtains only one matching block, no weighting calculation is performed.

Step 7:

After obtaining the matching block and weight values of the matching blocks according to step 6, weighted fusing is performed on the matching blocks to obtain a final IntraTMP combined/fusion prediction block. For example, n (1<n<=N) matching blocks are obtained from step 2 to step 6, and corresponding weights are $W_1$ to $W_n$. Therefore, final prediction block Pred is:

$$\text{Pred} = (\sum_{i=1}^{n} W_i * \text{Pred}_i + \text{offset}) >> \text{shift};$$

n

Where offset = 1<<(shift-1), $\text{shift} = \log_2(\sum_{i=1}^{n} W_i)$ ;

In particular, when only one matching block Pred1 is obtained in step 6, the matching block $\text{Pred}_1$ is weighted fused with the prediction block Pred_planar obtained by planar mode to obtain the final prediction block Pred:

$$\text{Pred} = (7 * \text{Pred}_1 + \text{Pred\_planar} + 4) >> 3.$$

Step 8:

The final prediction block Pred and the current coding block are used to generate a residual. The residual is further compressed by steps of transforming, quantizing and entropy coding and the like, and is then written to the bitstream, completing the encoding of the current coding block. A reconstructed residual block is obtained by performing inverse quantization and inverse transform on the transformed and quantized residual. The reconstructed residual block is added to the prediction block Pred to obtain the reconstructed block of the current coding block.

Step 9:

The flag intra_tmp_fusion_flag is written to the bitstream to indicate whether performing the combined/fusion prediction for the current coding block. For example, if the current coding block uses the IntraTMP mode encode, the flag intra_tmp_flag is equal to 1, and in this case, intra_tmp_fusion_flag is written.

Step 10:

X context models are used to encode the syntax element intra_tmp_fusion_flag. The index CtxIdxInc corresponding to different context models is determined according to encode information of adjacent coding block and a size of the current coding block. For example, X is equal to 3, and coordinates of a current coding block is (x, y). If the coding block cuLeft exists at coordinates (x-1, y) and intra_tmp_fusion_flag of cuLeft is 1, CtxIdxInc is 1; otherwise, CtxIdxInc is 0. Then, if the coding block cuAbove exists at coordinates (x, y-1) and intra_tmp_fusion_flag of cuAbove is 1, CtxIdxInc is increased by 1, otherwise, CtxIdxInc is increased by 0.

Step 11:

According to steps 9 to 10, flag information such as intra_tmp_flag and intra_tmp_fusion_flag that are related to the IntraTMP combined/fusion prediction are encoded, and according to step 8, residual information obtained under the IntraTMP combined/fusion prediction is encoded. The quantity of bits required for encoding the current coding block by the IntraTMP combined/fusion prediction is determined, and rate distortion cost is calculated with reference to a distortion degree between the current coding block and the reconstructed block of the current coding block. An optimal coding mode is selected for the current coding block according to the rate distortion optimization (RDO) to complete the encode of the current coding block.

It should be understood that, for explanations of the flags in Embodiment 1 and Embodiment 2, one may refer to descriptions in Table 3 to avoid repetition. Details are not described herein again. In addition, Embodiment 1 and Embodiment 2 are merely examples of this application, and should not be construed as a limitation of this application. For example, in another alternative embodiment, an extension solution of Embodiment 1 may be obtained based on Embodiment 1 and Embodiment 2. For example, at least the following alternatives may be obtained.

Alternative 1:

The size of the candidate block vector list may be of another integer value.

Alternative 2:

The template error value may be represented in different manners, such as SATD, MSE, and MAD.

Alternative 3:

The number of times of pruning and refining may be of another integer value, which is independent of the size of the candidate block vector list.

Alternative 4:

The pruning range may be a region in another shape obtained according to information such as a predetermined value, a size of the current coding block, a current block vector, and the like.

Alternative 5:

The pruning process on the candidate block vector list may be skipped.

Alternative 6:

The refining area may be a region in another shape obtained according to information such as a predetermined value, a size of the current coding block, a current block vector, and a refining step size, which is independent of a pruning range.

Alternative 7:

The refining process on the candidate block vector list may be skipped. For example, the i-th block vector in the block vector list is directly used as an available block vector, and a pointed matching block is used as a matching block of the current coding block.

Alternative 8:

The thresholds threshold1 and threshold2 may be of other values obtained according to information such as a predetermined value, a size of the current coding block, a pixel bit width, and a template error value of a candidate block vector.

Alternative 9:

A single threshold may be used to determine whether the matching block is available. For example, if the template error value $SAD_i$ of block vector i meets:

$$SADi \leqslant threshold$$

the matching block i corresponding to the block vector i is used for subsequent weighted fusion. The threshold may be of another value determined according to information such as a predetermined value, a size of the current coding block, a pixel bit width, and a template error value of a candidate block vector.

Alternative 10:

A weight value of each matching block may be of any predefined fixed value, and different weight values are assigned to the matching blocks according to a quantity of matching blocks, template error values, and the like. For example, the weight values are set to {3/4, 1/4} and {1/2, 1/4, 1/4}. If there are two matching blocks $pred_1$ and $pred_2$, and corresponding template error values meet $SAD_1 \leq SAD_2$, then a weight value of $pred_1$ is $W_1=3/4$, and a weight value of $pred_2$ is $W_2=1/4$. If there are three matching blocks $pred_1$, $pred_2$, and $pred_3$, and corresponding template error values meet $SAD_1 \leq SAD_2 \leq SAD_3$, then weight values of $pred_1$, $pred_2$, and $pred_3$ are $W_1=1/2$, $W_2=1/4$, and $W_3=1/4$.

Alternative 11:

The weight value W of each matching block may be associated with the position of the pixel in the current block.

Alternative 12:

When only one matching block is obtained, weighted fusion may be performed on the predicted block obtained by using another intra prediction mode than the planar mode, or weighted fusion is not performed.

Alternative 13:

When the template matching process obtains multiple matching blocks, a part of the matching blocks may be selected to perform the weighted fusion to obtain the final prediction block. For example, three matching blocks $pred_1$, $pred_2$, and $pred_3$ are obtained from steps 1 to 3 of the embodiment. A combination manner such as $pred_1+pred_2$ (indicating that weighted fusion is performed on $pred_1$ and $pred_2$), $pred_1+pred_3$, $pred_2+pred_3$, and $pred_1+pred_2+pred_3$ may be used. A specific combination manner may be determined by encoding an index signal, selecting a combination having a least template error value, or the like.

Alternative 14:

The intra_tmp_fusion_flag may not be encoded or decoded. For the coding block encoded by the IntraTMP mode, the IntraTMP combined/fusion prediction is always used.

Alternative 15:

A constraint condition for using the IntraTMP combined/fusion prediction may set. The constraint condition may be obtained by using information such as a size of the current coding block, adjacent encoded information, a sequence level flag, a frame level flag, a macroblock level flags, a slice type, and a frame type. When the constraint condition is met, the IntraTMP combined/fusion prediction is used, and the syntax element intra_tmp_fusion_flag is encoded. Otherwise, the IntraTMP combined/fusion prediction is not used, and the syntax element intra_tmp_fusion_flag does not need to be encoded.

Alternative 16:

Another quantity of context modes may be used to encode the syntax element intra_tmp_fusion_flag. The context model index is determined according to a size of the current coding block and adjacent encoded information. Alternatively, the syntax element intra_tmp_fusion_flag is encoded in a bypass encoding mode.

Alternative 17:

A prediction block obtained from a prediction mode other than the IntraTMP mode may be introduced in the weighted fusion process, and a weight value of the prediction block may be determined by a predetermined value, a template of the current coding block, a location of a pixel in the current coding block, adjacent encoded information, and the like.

Alternative 18:

The block vectors in the candidate block vector list may be refined first. Then, the candidate block vector list may be pruned according to distances between the block vectors or the like. Finally, available block vectors of a quantity are selected from the candidate block vector list to obtain corresponding matching blocks.

Alternative 19:

When only a part of templates on the left or upper side of the current coding block is available, this part of templates can be used to perform the template-related operations in the embodiments.

Alternative 20:

The template is adjacent reconstructed pixels in L rows on the left side and M columns on the upper side of the current block, where L and M may be of any integer values.

Alternative 21:

The template may include the reconstructed pixels at the upper right side and lower left side of the current block. For example, a template may be in any of the five forms as shown in FIG. 11.

Alternative 22:

The step size s of the search process and the step size s' of the refining process may be of any integer values, where s' is less than s. Multiple rounds of refining processes may be performed, and a step s' of each step is less than a step s of a previous step. In each round, the refining area may be obtained according to a step size.

Alternative 23:

A process of obtaining multiple block vectors or matching blocks by template matching may be implemented by a method other than constructing a candidate block vector list. For example, a search area is divided into different sub-areas, and template matching is performed in each sub-area to obtain a matching block having a least template error value. Finally, multiple matching blocks are obtained from the multiple sub-areas.

Alternative 24:

The offset used for weighted fusion of matching blocks may be equal to 0 or another value.

Alternative 25:

The flag bit intra_tmp_fusion_flag may not be encoded or decoded. Whether to use the IntraTMP combined/fusion prediction or the IntraTMP prediction with a single matching block may be determined by performing prediction in a template area of the current coding block and comparing the template error values.

Alternative 26:

In step 6 and step 19 of the embodiments, calculation of the $W_i$ may be as follows:

$$X = \left\lceil \log_2 ((n-1) * \text{SUM}) \right\rceil;$$

$$\text{Norm} = ((n-1) * \text{SUM} << 4 >> X) \& 15;$$

$$V = \text{table}[\text{Norm}] \mid 8;$$

$$X = \text{norm} == 0 \text{ ? } X : X+1;$$

$$\text{Shift} = X + 3;$$

$$\text{Add} = 1 << \text{Shift};$$

$$W_i = ((\text{SUM} - \text{SAD}_i) * V * 64 + \text{Add}) >> \text{Shift}, 1 \leq i < n;$$

$$W_n = 64 - \sum_{i=1}^{n} W_i \, ,$$

Where table[] = {0, 7, 6, 5, 5, 4, 4, 3, 3, 2, 2, 1, 1, 1, 1, 1, 0}.

Alternatively, calculation of the $W_i$ may be as follows:

$$X = \left\lceil \log_2 ((n-1) * \text{SUM}) \right\rceil;$$

$$\text{Norm} = ((n-1) * \text{SUM} << 4 >> X) \& 15;$$

$$V = \text{table}[\text{Norm}] \mid 8;$$

$$X = \text{norm} == 0 \,?\, X : X+1;$$

$$\text{Shift} = X + 3;$$

$$\text{Add} = 1 << (\text{Shift} - 1);$$

$$W_i = ((\text{SUM} - \text{SAD}_i) * V * 64 + \text{Add}) >> \text{Shift};$$

Where table[] = {0, 7, 6, 5, 5, 4, 4, 3, 3, 2, 2, 1, 1, 1, 1, 1, 0}.

Thereafter, the $W_i$ is adjusted to meet $\sum_{i=1}^{n} W_i = 64$ by using the following steps:

$$\text{Sum\_W} = \sum_{i=1}^{n} W_i \,;$$

```
while ( Sum_W > 64) {
    for(i=n; i≥1 && Sum_W > 64; i--) {
        if( Wi != 0) {
            Wi = Wi-1
            Sum_W = Sum_W-1
        }
    }
}
while ( Sum_W < 64) {
    for(i=1; i≤n && Sum_W < 64; i++) {
        Wi = Wi+1
        Sum_W = Sum_W+1
    }
}.
```

Alternative 27:

The following method may be used to obtain N available block vectors according to the candidate block vector list.

The candidate block vector list is refined N times to obtain N available block vectors. Specifically, when performing the i-th refinement, the i-th block vector BVi in the list is taken and BVi is equal to the $(Xi, Yi)$, the refinement distance $L=(S/2)*H$, where S is a template matching step, and H is a height of a current coding block. The refining range is a rectangular area of which the upper left corner is $(Xi-L, Yi-L)$ and the lower right corner is $(Xi+L, Yi+L)$. Template matching is performed in the rectangular area by using a step size $S'(S' = S/2)$, to obtain a block vector i' with a least template error value, as the i-th available block vector. Each time when obtaining a block vector whose error value is smaller (less than the minimum value of the current refining process), it needs to be determined whether the block vector is equal to an obtained available block vector. If there is an equal block vector, the current matching block vector is discarded (that is, the block vector is skipped, and the minimum value for refining is not updated). For example, the first i-1 refining processes obtain block vector BV1 to BVi-1. When the i-th refining process is performed, if a template error value corresponding to a block vector BVi is less than a minimum value (which refers to the minimum value of the current refining process), then it needs to be determined whether BVi is equal to any of BV1 to BVi-1. If an equal BV exists, BVi is skipped and the template matching process is continued at a next location. If no equal BV exists, BVi is the new best block vector, and the corresponding template error value is the new minimum value.

Alternative 28: After the IntraTMP combined/fusion prediction is completed, the block vector corresponding to the best matching block obtained by the prediction process may be stored as known encoded information of the current block and used for encoding process of another block. For example, the obtained N available matching blocks are used for weighted fusion, corresponding to $BV_i$ to $BV_n$ $(n \geq 1)$. These BVs may be stored (which can be stored according to a ranked sequence of template error values) for subsequent encoding processes. For example, when encoding a coding block in the IBC mode, a candidate block vector list needs to be constructed, and the block vectors in the list may be from the block vector information (if present) of adjacent coding blocks. In this case, if the adjacent blocks include an IntraTMP coding block, the $BV_1$ may be added to the candidate block vector list as the block vector of the IntraTMP block. Alternatively, i $(1 \leq i \leq n)$ block vectors $BV_1$ to $BV_i$ are added to the candidate block vector list in sequence. The number i may be of a predetermined value, or may be determined according to a current remaining size of the candidate block vector list.

Alternative 29:

In alternative 28, whether to save multiple block vectors may be determined according to whether the IntraTMP coding block uses the fusion prediction of this solution. For example, if the current coding block uses the IntraTMP mode but does not use the combined/fusion prediction of this solution, the block vector obtained by the default IntraTMP prediction mode is stored. If the IntraTMP mode is used and the fusion prediction of this solution is used, the block vectors corresponding to x matching blocks that is used for weighted fusion are stored, and x may be of an integer value not greater than a maximum number of matching blocks that can be used for fusion.

Alternative solution 30:

In alternative solution 28, multiple block vectors may always be stored, regardless of whether the IntraTMP coding block uses the combined/fusion prediction of the solution.

The foregoing describes in detail the method embodiments of this application. With reference to FIG. 13 to FIG. 15, the following describes in detail the apparatus embodiments of this application.

FIG. 13 is a schematic block diagram of a decoder 500 according to an embodiment of this application.

As shown in FIG. 13, the decoder 500 may include:

a residual unit 510, configured to determine a residual block of a current block in a current sequence based on a bitstream;
a prediction unit 520, configured to predict at least one matching block of the current block based on an intra template matching prediction IntraTMP mode;
a determining unit 530, configured to determine a target prediction block of the current block based on the at least one matching block; and
a reconstruction unit 540, configured to obtain a reconstructed block of the current block based on the residual block of the current block and the target prediction block

In some embodiments, the prediction unit 520 is specifically configured to:

determine a first flag based on the bitstream; and

predict the at least one matching block based on the IntraTMP mode if the first flag indicates using the IntraTMP mode for fusion prediction.

In some embodiments, the prediction unit 520 is specifically configured to:

determine a second flag based on the bitstream; and
determine the first flag based on the bitstream if the second flag indicates using the IntraTMP mode for prediction.

In some embodiments, the prediction unit 520 is specifically configured to:

determine a target context index;
determine the first flag based on the bitstream by using the target context index.

In some embodiments, the prediction unit 520 is specifically configured to:

determine the target context index based on decoded information of an adjacent decoded block of the current block; and/or
determine the target context index based on a size of the current block.

In some embodiments, wherein coordinates of the current block are (x, y), and the adjacent decoded block comprises a first decoded block whose coordinates are (x-1, y) and a second decoded block whose coordinates are (x, y-l); and decoded information of the first decoded block comprises a prediction mode used for a prediction block of the first decoded block, and decoded information of the second decoded block comprises a prediction mode used for a prediction block of the second decoded block.

The prediction unit 520 is specifically configured to:

if the prediction mode used for the prediction block of the first decoded block is a mode of performing fusion prediction based on the IntraTMP mode, assign a first value as A; otherwise, assign the first value as B, both A and B being integers;
if the prediction mode used for the prediction block of the second decoded block is a prediction mode of performing fusion prediction based on the IntraTMP mode, assign a second value as C; otherwise, assign the second value as D, both C and D being integers; and
determine a sum of the first value and the second value as the target context index.

In some embodiments, the prediction unit 520 is specifically configured to:

perform template matching on the current block based on the IntraTMP mode to obtain X candidate matching blocks; and
determine the at least one matching block based on the X candidate matching blocks.

In some embodiments, the prediction unit 520 is specifically configured to:

perform intra template matching in a search area of the current block based on the IntraTMP mode, to obtain all candidate matching blocks of the current block; and
determine, as the X candidate matching blocks, matching blocks sorted in the first X positions in an ascending order of template error values.

In some embodiments, the prediction unit 520 is specifically configured to:
construct a candidate matching block list based on the IntraTMP mode, wherein the candidate matching block list is used to recode X matching blocks with least template error values obtained by performing intra template matching in a search area of the current block.

In some embodiments, the prediction unit 520 is specifically configured to:

divide the search area of the current block into Y sub-areas; and
perform intra template matching in each of the Y sub-areas based on the IntraTMP mode, to obtain candidate matching blocks in the respective sub-areas,
wherein the X candidate matching blocks comprise the candidate matching blocks in the respective sub-areas.

In some embodiments, X=Y, or X is a multiple of Y.

In some embodiments, the prediction unit 520 is specifically configured to:

determine N available matching blocks based on the X candidate matching blocks, wherein X≥N;
determine the at least one matching block based on the N available matching blocks.

In some embodiments, X is a multiple of N.

In some embodiments, the prediction unit 520 is specifically configured to:
prune the X candidate matching blocks based on spacings between the X candidate matching blocks to obtain the N available matching blocks.

In some embodiments, the prediction unit 520 is specifically configured to:

determine, from the X candidate matching blocks, a current candidate matching block used for pruning, according to an ascending order of template error values;
determine a pruning range of the current candidate matching block; and
remove all candidate matching blocks except the current candidate matching block in the pruning range, to obtain remaining candidate matching blocks after performing pruning based on the current candidate matching block, and when a number of times of performing pruning on the X candidate matching blocks is equal to N, determine the first N candidate matching blocks among the remaining candidate matching blocks as the N available matching blocks, or when a quantity of the remaining candidate matching blocks obtained after performing pruning based on the current candidate matching block is less than or equal to N, determine the first N candidate matching block among remaining candidate matching blocks obtained after performing previous pruning as the N available matching blocks.

In some embodiments, the prediction unit 520 is specifically configured to:
determine the pruning range based on a size of the current block and the current candidate matching block.

In some embodiments, the prediction unit 520 is specifically configured to:

determine (S/E)*H as the pruning range by using a block vector pointing from the current block to the current candidate matching block as a center,
wherein / represents a division operator, * represents a multiplication operator, S represents a matching step used for the X candidate matching blocks, H represents a height of current block, and E is a positive integer.

In some embodiments, the prediction unit 520 is specifically configured to:
determine the pruning range based on a predefined value.

In some embodiments, the prediction unit 520 is specifically configured to:
refine the X candidate matching blocks to obtain the N available matching blocks.

In some embodiments, the prediction unit 520 is specifically configured to:

determine a refining range of a current candidate matching block in the X candidate matching blocks;
perform intra template matching in the refining range based on at least one matching step to obtain matching blocks in the refining range, wherein each of the at least one matching step is less than a matching step used for the X candidate matching blocks;
determine a matching block having a least template loss value in the matching blocks in the refining range as a candidate matching block obtained by refining the current candidate matching block; and
determine the candidate matching block obtained by refining the current candidate matching block as an available matching block in the N available matching blocks.

In some embodiments, the prediction unit 520 is specifically configured to:
determine the refining range based on a size of the current block and the current candidate matching block.

In some embodiments, the prediction unit 520 is specifically configured to:

determine (S/F)*H as the refining range by using a block vector pointing from the current block to the current candidate matching block as a center,
wherein / represents a division operator, * represents a multiplication operator, S represents a matching step used for the X candidate matching blocks, H represents a height of current block, and F is a positive integer.

In some embodiments, the prediction unit 520 is specifically configured to:
determine the refining range based on a predefined value.

In some embodiments, the prediction unit 520 is specifically configured to:
determine, if the current candidate matching block is an i-th matching block in the X candidate matching blocks and a j-th matching block in the refining range is a matching block that has a least template loss value in the first j matching blocks in the refining range, the j-th matching block as a candidate matching block obtained by refining the current candidate matching block in a case that candidate matching blocks obtained by refining previous i-1 candidate matching blocks do not comprise the j-th matching block.

In some embodiments, the prediction unit 520 is specifically configured to:
prune and refine the X candidate matching blocks to obtain the N available matching blocks.

In some embodiments, the prediction unit 520 is specifically configured to:

after pruning the X candidate matching blocks, refine the pruned candidate matching blocks; or
after refining the X candidate matching blocks, prune the refined candidate matching blocks; or
after pruning the X candidate matching blocks once based on a current candidate matching block in the X candidate matching blocks, refine the current candidate matching block.

In some embodiments, the prediction unit 520 is specifically configured to:

determine a fusion condition for the N available matching blocks; and
determine, from the N available matching blocks, an available matching block that meets the fusion condition as the at least one matching block.

In some embodiments, the prediction unit 520 is specifically configured to:

determine the fusion condition based on at least one of:
a size of a template of the current block, a bit width of a pixel of the current block in the current block, and a minimum template error value of the N available matching blocks.

In some embodiments, the fusion condition comprises a first threshold, wherein the first threshold is a threshold determined based on the size of the template of the current block and the bit width.

The prediction unit 520 is specifically configured to:
determine, from the N available matching blocks, an available matching block having a template error value less than or equal to the first threshold as the at least one matching block.

In some embodiments, the first threshold is determined according to following formula:

$$T_1 = n_1 << (b_{depth} - n_2) * n_{template} \; ;$$

wherein << is a left shift operator, - is a subtraction operator, * is a multiplication operator, T1 represents the first threshold, $b_{depth}$ represents the bit width, and $n_{template}$ represents a quantity of pixels in the template of the current block, and both $n_1$ and $n_2$ are positive integers.

In some embodiments, the fusion condition comprises a second threshold, and the second threshold is a threshold determined based on the minimum template error value.

The prediction unit 520 is specifically configured to:
determine, from the N available matching blocks, an available matching block having a template error value less than or equal to the second threshold as the at least one matching block.

In some embodiments, the second threshold is determined according to the following formula:

$$T_2 = min_{SAD} << n_3 ;$$

wherein << is a left shift operator, $T_2$ represents the second threshold, $min_{SAD}$ represents the minimum template error value, and $n_3$ is a positive integer.

In some embodiments, the prediction unit 520 is specifically configured to:

determine indication information based on the bitstream, wherein the indication information is used to indicate the at least one matching block in the N available matching blocks; and
determine the at least one matching block based on the indication information.

In some embodiments, the determining unit 530 is specifically configured to:
perform, if the at least one matching block comprises a plurality of matching blocks, weighting processing on the plurality of matching blocks to obtain the target prediction block of the current block.

In some embodiments, the determining unit 530 is specifically configured to:

determine weight values of respective matching blocks of the plurality of matching blocks; and
perform weighting processing on the plurality of matching blocks based on the weight values of the respective matching blocks to obtain the target prediction block.

In some embodiments, the determining unit 530 is specifically configured to:
determine the weight values of the respective matching blocks based on template error values of the respective matching blocks, a quantity of the plurality of matching blocks, and a sum of the weight values of the plurality of matching blocks.

In some embodiments, the determining unit 530 is specifically configured to:

determine, based on the template error values of the respective matching blocks, third values corresponding to the respective matching blocks;
perform summation on the third values corresponding to the respective matching blocks to obtain a fourth value; and
determine the weight values of the respective matching blocks based on the fourth value and the template error values of the respective matching blocks.

In some embodiments, the determining unit 530 is specifically configured to:

if a template error value of an i-th matching block in the plurality of matching blocks is 0, determine a preset value greater than 0 as a third value corresponding to the i-th matching block; or
if a template error value of an i-th matching block is 0, determine the template error value of the i-th matching block as the third value corresponding to the i-th matching block.

In some embodiments, the determining unit 530 is specifically configured to:

determine a weight value of an i-th matching block in the plurality of matching blocks in following manner:
subtract, from the fourth value, a third value corresponding to the i-th matching block, to obtain a fifth value; and
multiply the fourth value by n-1 to obtain a sixth value, where n represents a quantity of the plurality of matching blocks; and
determine the weight value of the i-th matching block based on the fifth value and the sixth value.

In some embodiments, the determining unit 530 is specifically configured to:

if the i-th matching block is not a last matching block of the plurality of matching blocks, determine a ratio of the fifth value to the sixth value as the weight value of the i-th matching block;
if the i-th matching block is the last matching block, subtract weight values of previous i-1 matching blocks of the plurality of matching blocks from a preset total weight value, to obtain the weight value of the last matching block.

In some embodiments, the determining unit 530 is specifically configured to:

determine a ratio of the fifth value to the sixth value as the weight value of the i-th matching block,
wherein a sum of the weight values of the plurality of matching blocks is equal to a preset total weight value.

In some embodiments, the ratio of the fifth value to the sixth value is a value obtained by using a bit operation, an addition operation, and a subtraction operation.

In some embodiments, the ratio of the fifth value to the sixth value is a value determined by following formula:

$$W_i = (D_5 * V * W_{sum} + D_{Add}) >> D_{Shift} ;$$

wherein * is a multiplication operator, + is an addition operator, >> is a right shift operator, $D_5$ represents the fifth value, $W_{sum}$ represents the total weight value, V is a value retrieved from a lookup table according to a seventh value, $D_{Shift}$ is a right shift amount determined according to the seventh value, the seventh value is a value determined according to the sixth value, and $D_{Add}$ is a value determined according to $D_{Shift}$.

In some embodiments, V and $D_{Shift}$ are determined in the following manner:

$$X=\lceil \log_2 D_6 \rceil;$$

$$D_7=((n-1)*D_4<<4>>X)\&15;$$

$$V=table[D_7]|8;$$

$$X=D_7==0?X:X+1;$$

$$D_{Shift}=X+3;$$

wherein $\lceil \rceil$ is an ceiling operator, * is a multiplication operator, << is a left shift operator, >> is a right shift operator, & is a logic AND operator, × is a logic OR operator, ? is a conditional operator, + is an addition operator, $D_6$ represents the sixth value, $D_4$ represents the fourth value, table[] represents a lookup table, and $D_7$ represents the seventh value.

In some embodiments, $D_{Add}=1<<(D_{Shift}-1)$, or $D_{Add}=1<<D_{Shift}$, wherein << is a left shift operator, and - is a subtraction operator.

In some embodiments, the determining unit 530 is specifically configured to:

select, from a plurality of candidate sets and based on a quantity of the plurality of matching blocks, a first candidate set having a quantity of weight values equal to the quantity of the plurality of matching blocks, wherein each of the candidate sets comprises at least one candidate weight value; and
determine the weight values of the respective matching blocks based on the first candidate set.

In some embodiments, template error values of the respective matching blocks are negatively correlated with the weight values of the respective matching blocks.

In some embodiments, the determining unit 530 is specifically configured to:

perform summation on the matching blocks multiplied by the weight values of the respective matching blocks, to obtain an eighth value;
add $C_{offset}$ to the eighth value to obtain a ninth value; and
right shift the ninth value by $C_{Shift}$ to obtain the target prediction block,
wherein $C_{offset}$ is a value determined according to $C_{Shift}$, and $C_{Shift}$ is a value determined according to a sum of the weight values of the plurality of matching blocks.

In some embodiments, $C_{offset}=<<(C_{Shift}-1)$, $C_{Shift}=\lceil \log_2 W_{sum} \rceil$, wherein $\lceil \rceil$ is a ceiling operator, << is a left shift operator, and $W_{sum}$ represents the sum of the weight values of the plurality of matching blocks.

In some embodiments, the determining unit 530 is specifically configured to:

divide the current block into a plurality of regions; and
determine, for a first region among the plurality of regions, weight values of the respective matching blocks in the first region; and
perform weighting processing on the plurality of matching blocks in the first region based on the weight values of the respective matching blocks in the first region, to obtain a prediction value of the target prediction block in the first region,
wherein the target prediction block comprises prediction values of respective regions of the plurality of regions.

In some embodiments, the determining unit 530 is specifically configured to:
divide the current block into the plurality of regions in a horizontal direction or a vertical direction.

In some embodiments, the determining unit 530 is specifically configured to:

if the at least one matching block comprises only a single matching block, predict the current block by using a first intra prediction mode, to obtain a first prediction block;
perform weighting processing on the single matching block and the first prediction block to obtain the target prediction block.

In some embodiments, a weight value for the single matching block and a weight value for the first predicted block are both predefined weight values.

In some embodiments, the determining unit 530 is further configured to:

determine a weight value for the single matching block and a weight value for the first predicted block based on at least one of following:
decoded information of an adjacent decoded block, a size of the current block, a template size of the current block, a type of the first intra prediction mode, and locations of regions of the current block.

In some embodiments, the determining unit 530 is specifically configured to:

if the at least one matching block comprises a plurality of matching blocks, predict the current block by using a second intra prediction mode, to obtain a second prediction block;
perform weighting processing on the plurality of matching blocks and the second prediction block to obtain the target prediction block.

In some embodiments, a weight value for the second predicted block is a predefined weight value.

In some embodiments, the determining unit 530 is further configured to:

determine a weight value for the second prediction block based on at least one of following:
decoded information of an adjacent decoded block, a size of the current block, a template size of the current block, a type of the second intra prediction mode, a total weight value of the plurality of matching blocks, and locations of regions of the current block.

In some embodiments, a template of the current block comprises at least one of: a left reconstructed pixel, a lower left reconstructed pixel, an upper left reconstructed pixel, an upper reconstructed pixel, and an upper right reconstructed pixel.

In some embodiments, the prediction unit 520 is specifically configured to:

determine a constraint condition for using the IntraTMP mode; and
predict the at least one matching block based on the IntraTMP mode if the constraint condition is met.

In some embodiments, the constraint condition is obtained according to at least one of: a size of the current block, decoded information of an adjacent decoded block, a sequence level flag, a frame level flag, a macroblock level flag, a type of a slice in which the current block is located, or a frame type of an image frame in which the current block is located.

FIG. 14 is a schematic block diagram of an encoder 600 according to an embodiment of this application.

As shown in FIG. 14, the encoder 600 may include:

a prediction unit 610, configured to predict at least one matching block of a current block in a current sequence based on an intra template matching prediction IntraTMP mode;
a determining unit 620, configured to determine a target prediction block of the current block based on the at least one matching block;
a residual unit 630, configured to obtain a residual block of the current block based on the target prediction block and an original block of the current block; and
an encoding unit 640, configured to encode the residual block of the current block.

In some embodiments, the coding unit 640 is further configured to:

encode a first flag,
wherein the first flag indicates using the IntraTMP mode for fusion prediction.

In some embodiments, the coding unit 640 is further configured to:

encode a second flag,
wherein the second flag indicates using the IntraTMP mode for prediction.

In some embodiments, the coding unit 640 is specifically configured to:

determine a target context index;
encode the first flag by using the target context index.

In some embodiments, the coding unit 640 is specifically configured to:

determine the target context index based on encoded information of an adjacent coding block of the current block;
and/or
determine the target context index based on a size of the current block.

In some embodiments, coordinates of the current block are (x, y), and the adjacent coding block comprises a first coding block whose coordinates are (x-1, y) and a second coding block whose coordinates are (x, y-1); and encoded information of the first coding block comprises a prediction mode used for a prediction block of the first coding block, and decoded information of the second coding block comprises a prediction mode used for a prediction block of the second coding block.

The encoding unit 640 is specifically configured to:

if the prediction mode used for the prediction block of the first coding block is a mode of performing fusion prediction based on the IntraTMP mode, assign a first value as A; otherwise, assign the first value as B, both A and B being integers;
if the prediction mode used for the prediction block of the second coding block is a prediction mode of performing fusion prediction based on the IntraTMP mode, assign a second value as C; otherwise, assign the second value as D, both C and D being integers;
determine a sum of the first value and the second value as the target context index.

In some embodiments, the prediction unit 610 is specifically configured to:

perform template matching on the current block based on the IntraTMP mode to obtain X candidate matching blocks;
and
determine the at least one matching block based on the X candidate matching blocks.

In some embodiments, the prediction unit 610 is specifically configured to:

perform intra template matching in a search area of the current block based on the IntraTMP mode, to obtain all candidate matching blocks of the current block; and
determine, as the X candidate matching blocks, matching blocks sorted in the first X positions in an ascending order of template error values.

In some embodiments, the prediction unit 610 is specifically configured to:
construct a candidate matching block list based on the IntraTMP mode, wherein the candidate matching block list is used to recode X matching blocks with least template error values obtained by performing intra template matching in a search area of the current block.

In some embodiments, the prediction unit 610 is specifically configured to:

divide the search area of the current block into Y sub-areas; and
perform intra template matching in each of the Y sub-areas based on the IntraTMP mode, to obtain candidate matching blocks in the respective sub-areas,
wherein the X candidate matching blocks comprise the candidate matching blocks in the respective sub-areas.

In some embodiments, X=Y, or X is a multiple of Y.

In some embodiments, the prediction unit 610 is specifically configured to:

determine N available matching blocks based on the X candidate matching blocks, wherein X≥N;
determine the at least one matching block based on the N available matching blocks.

In some embodiments, X is a multiple of N.

In some embodiments, the prediction unit 610 is specifically configured to:

prune the X candidate matching blocks based on spacings between the X candidate matching blocks to obtain the N available matching blocks.

In some embodiments, the prediction unit 610 is specifically configured to:

determine, from the X candidate matching blocks, a current candidate matching block used for pruning, according to an ascending order of template error values; and

determine a pruning range of the current candidate matching block; and

remove all candidate matching blocks except the current candidate matching block in the pruning range, to obtain remaining candidate matching blocks after performing pruning based on the current candidate matching block, and when a number of times of performing pruning on the X candidate matching blocks is equal to N, determine the first N candidate matching blocks among the remaining candidate matching blocks as the N available matching blocks, or when a quantity of the remaining candidate matching blocks obtained after performing pruning based on the current candidate matching block is less than or equal to N, determine the first N candidate matching block among remaining candidate matching blocks obtained after performing previous pruning as the N available matching blocks.

In some embodiments, the prediction unit 610 is specifically configured to:
determine the pruning range based on a size of the current block and the current candidate matching block.

In some embodiments, the prediction unit 610 is specifically configured to:

determine (S/E)*H as the pruning range by using a block vector pointing from the current block to the current candidate matching block as a center; and

wherein / represents a division operator, * represents a multiplication operator, S represents a matching step used for the X candidate matching blocks, H represents a height of current block, and E is a positive integer.

In some embodiments, the prediction unit 610 is specifically configured to:
determine the pruning range based on a predefined value.

In some embodiments, the prediction unit 610 is specifically configured to:
refine the X candidate matching blocks to obtain the N available matching blocks.

In some embodiments, the prediction unit 610 is specifically configured to:

determine a refining range of a current candidate matching block in the X candidate matching blocks;

perform intra template matching in the refining range based on at least one matching step to obtain matching blocks in the refining range, wherein each of the at least one matching step is less than a matching step used for the X candidate matching blocks;

determine a matching block having a least template loss value in the matching blocks in the refining range as a candidate matching block obtained by refining the current candidate matching block; and

determine the candidate matching block obtained by refining the current candidate matching block as an available matching block in the N available matching blocks.

In some embodiments, the prediction unit 610 is specifically configured to:
determine the refining range based on a size of the current block and the current candidate matching block.

In some embodiments, the prediction unit 610 is specifically configured to:

determine (S/F)*H as the refining range by using a block vector pointing from the current block to the current candidate matching block as a center,

wherein / represents a division operator, * represents a multiplication operator, S represents a matching step used for the X candidate matching blocks, H represents a height of current block, and F is a positive integer.

In some embodiments, the prediction unit 610 is specifically configured to:
determine the refining range based on a predefined value.

In some embodiments, the prediction unit 610 is specifically configured to:
determine, if the current candidate matching block is an i-th matching block in the X candidate matching blocks and a j-th matching block in the refining range is a matching block that has a least template loss value in the first j matching blocks in the refining range, the j-th matching block as a candidate matching block obtained by refining the current candidate matching block in a case that candidate matching blocks obtained by refining previous i-1 candidate matching blocks do not comprise the j-th matching block.

In some embodiments, the prediction unit 610 is specifically configured to:
prune and refine the X candidate matching blocks to obtain the N available matching blocks.

In some embodiments, the prediction unit 610 is specifically configured to:

> after pruning the X candidate matching blocks, refine the pruned candidate matching blocks; or
> after refining the X candidate matching blocks, prune the refined candidate matching blocks; or
> after pruning the X candidate matching blocks once based on a current candidate matching block in the X candidate matching blocks, refine the current candidate matching block.

In some embodiments, the prediction unit 610 is specifically configured to:

> determine a fusion condition for the N available matching blocks; and
> determine, from the N available matching blocks, an available matching block that meets the fusion condition as the at least one matching block.

In some embodiments, the prediction unit 610 is specifically configured to:

> determine the fusion condition based on at least one of:
> a size of a template of the current block, a bit width of a pixel of the current block in the current block, and a minimum template error value of the N available matching blocks.

In some embodiments, the fusion condition comprises a first threshold, wherein the first threshold is a threshold determined based on the size of the template of the current block and the bit width.
The prediction unit 610 is specifically configured to:
determine, from the N available matching blocks, an available matching block having a template error value less than or equal to the first threshold as the at least one matching block.
In some embodiments, the first threshold is determined according to following formula:

$$T_1 = n_1 << (b_{depth} - n_2) * n_{template} \ ;$$

wherein << is a left shift operator, - is a subtraction operator, * is a multiplication operator, T1 represents the first threshold, $b_{depth}$ represents the bit width, and $n_{template}$ represents a quantity of pixels in the template of the current block, and both $n_1$ and $n_2$ are positive integers.
In some embodiments, the fusion condition comprises a second threshold, and the second threshold is a threshold determined based on the minimum template error value.
The prediction unit 610 is specifically configured to:
determine, from the N available matching blocks, an available matching block having a template error value less than or equal to the second threshold as the at least one matching block.
In some embodiments, the second threshold is determined according to the following formula:

$$T_2 = min_{SAD} << n_3;$$

wherein << is a left shift operator, $T_2$ represents the second threshold, $min_{SAD}$ represents the minimum template error value, and $n_3$ is a positive integer.
In some embodiments, the coding unit 640 is further configured to:

> determine indication information, wherein the indication information is used to indicate the at least one matching block in the N available matching blocks; and
> encode the indication information.

In some embodiments, the determining unit 620 is specifically configured to:
perform, if the at least one matching block comprises a plurality of matching blocks, weighting processing on the plurality of matching blocks to obtain the target prediction block of the current block.
In some embodiments, the determining unit 620 is specifically configured to:

> determine weight values of respective matching blocks of the plurality of matching blocks; and
> perform weighting processing on the plurality of matching blocks based on the weight values of the respective matching blocks to obtain the target prediction block.

In some embodiments, the determining unit 620 is specifically configured to:
determine the weight values of the respective matching blocks based on template error values of the respective matching blocks, a quantity of the plurality of matching blocks, and a sum of the weight values of the plurality of matching blocks.

In some embodiments, the determining unit 620 is specifically configured to:

determine, based on the template error values of the respective matching blocks, third values corresponding to the respective matching blocks; and
perform summation on the third values corresponding to the respective matching blocks to obtain a fourth value; and
determine the weight values of the respective matching blocks based on the fourth value and the template error values of the respective matching blocks.

In some embodiments, the determining unit 620 is specifically configured to:

if a template error value of an i-th matching block in the plurality of matching blocks is 0, determine a preset value greater than 0 as a third value corresponding to the i-th matching block; or
if a template error value of an i-th matching block is 0, determine the template error value of the i-th matching block as the third value corresponding to the i-th matching block.

In some embodiments, the determining unit 620 is specifically configured to:

determine a weight value of an i-th matching block in the plurality of matching blocks in following manner:
subtract, from the fourth value, a third value corresponding to the i-th matching block, to obtain a fifth value; and
multiply the fourth value by n-1 to obtain a sixth value, where n represents a quantity of the plurality of matching blocks; and
determine the weight value of the i-th matching block based on the fifth value and the sixth value.

In some embodiments, the determining unit 620 is specifically configured to:

if the i-th matching block is not a last matching block of the plurality of matching blocks, determine a ratio of the fifth value to the sixth value as the weight value of the i-th matching block;
if the i-th matching block is the last matching block, subtract weight values of previous i-1 matching blocks of the plurality of matching blocks from a preset total weight value, to obtain the weight value of the last matching block.

In some embodiments, the determining unit 620 is specifically configured to:

determine a ratio of the fifth value to the sixth value as the weight value of the i-th matching block,
wherein a sum of the weight values of the plurality of matching blocks is equal to a preset total weight value.

In some embodiments, the ratio of the fifth value to the sixth value is a value obtained by using a bit operation, an addition operation, and a subtraction operation.

In some embodiments, the ratio of the fifth value to the sixth value is a value determined by following formula:

$$W_i = (D_5 * V * W_{sum} + D_{Add}) >> D_{Shift} ;$$

wherein * is a multiplication operator, + is an addition operator, >> is a right shift operator, $D_5$ represents the fifth value, $W_{sum}$ represents the total weight value, V is a value retrieved from a lookup table according to a seventh value, $D_{Shift}$ is a right shift amount determined according to the seventh value, the seventh value is a value determined according to the sixth value, and $D_{Add}$ is a value determined according to $D_{Shift}$.

In some embodiments, V and $D_{Shift}$ are determined in the following manner:

$$X = \lceil \log_2 D_6 \rceil ;$$

$$D_7=((n-1)*D_4<<4>>X)\&15;$$

$$V=table[D_7]|8;$$

$$X=D_7==0?X:X+1;$$

$$D_{Shift}=X+3;$$

wherein $\lceil \rceil$ is an ceiling operator, * is a multiplication operator, << is a left shift operator, >> is a right shift operator, & is a logic AND operator, $\times$ is a logic OR operator, ? is a conditional operator, + is an addition operator, $D_6$ represents the sixth value, $D_4$ represents the fourth value, table[] represents a lookup table, and $D_7$ represents the seventh value.

In some embodiments, $D_{Add}=1<<(D_{Shift}-1)$, or $D_{Add}=1<<D_{Shift}$, wherein << is a left shift operator, and - is a subtraction operator.

In some embodiments, the determining unit 620 is specifically configured to:

select, from a plurality of candidate sets and based on a quantity of the plurality of matching blocks, a first candidate set having a quantity of weight values equal to the quantity of the plurality of matching blocks, wherein each of the candidate sets comprises at least one candidate weight value;
determine the weight values of the respective matching blocks based on the first candidate set.

In some embodiments, template error values of the respective matching blocks are negatively correlated with the weight values of the respective matching blocks.

In some embodiments, the determining unit 620 is specifically configured to:

perform summation on the matching blocks multiplied by the weight values of the respective matching blocks, to obtain an eighth value;
add $C_{offset}$ to the eighth value to obtain a ninth value; and
right shift the ninth value by $C_{Shift}$ to obtain the target prediction block,
wherein $C_{offset}$ is a value determined according to $C_{Shift}$, and $C_{Shift}$ is a value determined according to a sum of the weight values of the plurality of matching blocks.

In some embodiments, $C_{offet}=<<(C_{Shift}-1)$, $C_{Shift}=\lceil \log_2 W_{sum} \rceil$, wherein $\lceil \rceil$ is a ceiling operator, << is a left shift operator, and $W_{sum}$ represents the sum of the weight values of the plurality of matching blocks.

In some embodiments, the determining unit 620 is specifically configured to:

divide the current block into a plurality of regions;
determine, for a first region among the plurality of regions, weight values of the respective matching blocks in the first region; and
perform weighting processing on the plurality of matching blocks in the first region based on the weight values of the respective matching blocks in the first region, to obtain a prediction value of the target prediction block in the first region,
wherein the target prediction block comprises prediction values of respective regions of the plurality of regions.

In some embodiments, the determining unit 620 is specifically configured to:
divide the current block into the plurality of regions in a horizontal direction or a vertical direction.

In some embodiments, the determining unit 620 is specifically configured to:

if the at least one matching block comprises only a single matching block, predict the current block by using a first intra prediction mode, to obtain a first prediction block;
perform weighting processing on the single matching block and the first prediction block to obtain the target prediction block.

In some embodiments, a weight value for the single matching block and a weight value for the first predicted block are both predefined weight values.

In some embodiments, the determining unit 620 is further configured to:

determining a weight value for the single matching block and a weight value for the first predicted block based on at least one of the following:

encoded information of an adjacent coding block, a size of the current block, a template size of the current block, a type of the first intra prediction mode, and locations of regions of the current block.

In some embodiments, the determining unit 620 is specifically configured to:

if the at least one matching block comprises a plurality of matching blocks, predict the current block by using a second intra prediction mode, to obtain a second prediction block;

perform weighting processing on the plurality of matching blocks and the second prediction block to obtain the target prediction block.

In some embodiments, a weight value for the second predicted block is a predefined weight value.

In some embodiments, the determining unit 620 is further configured to:

determine a weight value for the second prediction block based on at least one of following:

encoded information of an adjacent coding block, a size of the current block, a template size of the current block, a type of the second intra prediction mode, a total weight value of the multiple matching blocks, and locations of regions of the current block.

In some embodiments, a template of the current block comprises at least one of: a left reconstructed pixel, a lower left reconstructed pixel, an upper left reconstructed pixel, an upper reconstructed pixel, and an upper right reconstructed pixel.

In some embodiments, the prediction unit 610 may be specifically configured to include:

determine a constraint condition for using the IntraTMP mode; and

predict the at least one matching block based on the IntraTMP mode if the constraint condition is met.

In some embodiments, the constraint condition is obtained according to at least one of: a size of the current block, encoded information of an adjacent coding block, a sequence level flag, a frame level flag, a macroblock level flag, a type of a slice in which the current block is located, or a frame type of an image frame in which the current block is located.

It should be understood that the apparatus embodiments and the method embodiments may be corresponding to each other. For similar description, reference may be made to the method embodiments. To avoid repetition, details are not described herein again. Specifically, the decoder 500 shown in FIG. 13 may be corresponding to an entity for executing the method 300 in the embodiments of this application, and the foregoing and other operations and/or functions of the units in the decoder 500 are respectively corresponding to procedures in the methods such as the method 300. Similarly, the encoder 600 shown in FIG. 14 may be corresponding to an entity for executing the method 400 in the embodiments of this application, that is, the foregoing and other operations and/or functions of the units in the encoder 600 are respectively corresponding to procedures in the methods such as the method 400.

It should be further understood that units in the decoder 500 or the encoder 600 involved in embodiments of this application may be separately or completely combined into one or more other units, or one or more of the units may be further split into multiple units of smaller functions. This may implement the same operation without affecting the technical effect of this embodiment of this application. The foregoing units are divided based on logical functions. In actual applications, functions of one unit may be implemented by multiple units, or functions of multiple units are implemented by one unit. In another embodiment of this application, the decoder 500 or the encoder 600 may also include another unit. In actual applications, these functions may also be implemented by another unit, and may be implemented by multiple units in cooperation. According to another embodiment of this application, a computer program (including program code) that can execute steps in a corresponding method may be run on a general-purpose computing device that includes a processing element such as a central processing unit (CPU), a random access storage medium (RAM), a read-only storage medium (ROM), and a storage element, to construct the decoder 500 or encoder 600 in embodiments of this application, and implement an encoding method or a decoding method in embodiments of this application. A computer program may be recorded in, for example, a computer readable storage medium, and is installed in an electronic device by using the computer readable storage medium, so as to implement methods in embodiments of this application.

In other words, the foregoing units may be implemented in a hardware form, may be implemented as an instruction in a software form, or may be implemented in a combination of software and hardware. Specifically, the steps of the method embodiments in this application may be implemented by using an integrated logic circuit of hardware in the processor and/or an instruction in a form of software. The steps of the methods disclosed with reference to the embodiments of this application may be directly performed by a hardware decoding processor, or may be performed by using a combination of hardware and software in the decoding processor. Optionally, the software may be located in a mature storage medium in the art such as a random access memory, a flash memory, a read-only memory, a programmable read-only memory, an electrically erasable programmable memory, and a register. The storage medium is located in a memory. The processor reads information from the memory and executes steps in the foregoing method embodiments with hardware of the processor.

FIG. 17 is a schematic structural diagram of an electronic device 700 according to an embodiment of this application.

As shown in FIG. 17, the electronic device 700 includes at least a processor 710 and a computer readable storage medium 720. The processor 710 and the computer readable storage medium 720 may be connected by using a bus or in another manner. The computer readable storage medium 720 is configured to store a computer program 721. The computer program 721 includes a computer instruction. The processor 710 is configured to execute the computer instruction stored in the computer readable storage medium 720. The processor 710 is a computing core and a control core of the electronic device 700, and is adapted to implement one or more computer instructions, and is specifically adapted to load and execute one or more computer instructions, so as to implement a corresponding method or a corresponding function.

As an example, the processor 710 may also be referred to as a Central Processing Unit (Central Processing Unit, CPU). The processor 710 may include but is not limited to a general-purpose processor, a digital signal processor (Digital Signal Processor, DSP), an applicationspecific integrated circuit (Application Specific Integrated Circuit, ASIC), a Field Programmable Gate Array (Field Programmable Gate Array, FPGA) or another programmable logic device, a discrete element gate or transistor logic device, a discrete hardware component, or the like.

As an example, the computer readable storage medium 720 may be a high-speed RAM memory, or may be a Non-Volatile Memory (Non-Volatile Memory), for example, at least one disk memory. Optionally, the processor 710 may be at least one computer readable storage medium located far away from the processor 710. Specifically, the computer readable storage medium 720 includes but is not limited to a volatile memory and/or a non-volatile memory. The non-volatile memory may be a Read-Only Memory (Read-Only Memory, ROM), a Programmable ROM (Programmable ROM, PROM), an Erasable PROM (Erasable PROM, EPROM), an Electrically EPROM (Electrically EPROM, EEPROM), or a flash memory. The volatile memory may be a Random Access Memory (RAM) that serves as an external cache. By way of example but not of limitation, many forms of RAM are applicable, such as Static RAM (SRAM), Dynamic RAM (DRAM), Synchronous DRAM (SDRAM), Double Data Rate SDRAM (DDR SDRAM), Enhanced SDRAM (ESDRAM), synch link DRAM (SLDRAM) and Direct Rambus RAM (DR RAM).

In an implementation, the electronic device 700 may be an encoder or an encoding framework related to an embodiment of this application. The computer readable storage medium 720 stores a first computer instruction. The processor 710 loads and executes the first computer instruction stored in the computer readable storage medium 720, so as to implement corresponding steps in an encoding method provided in an embodiment of this application. In other words, the first computer instruction in the computer readable storage medium 720 is loaded by the processor 710 to perform corresponding steps. To avoid repetition, details are not described herein again.

In an implementation, the electronic device 700 may be a decoder or a decoding framework related to an embodiment of this application. The computer readable storage medium 720 stores a second computer instruction. The processor 710 loads and executes the second computer instruction stored in the computer readable storage medium 720, so as to implement corresponding steps in a decoding method provided in an embodiment of this application. In other words, the second computer instruction in the computer readable storage medium 720 is loaded by the processor 710 to perform corresponding steps. To avoid repetition, details are not described herein again.

According to another aspect of this application, an embodiment of this application further provides a coding system, including the foregoing encoder and decoder.

According to another aspect of this application, an embodiment of this application further provides a computer readable storage medium (Memory), where the computer readable storage medium is a memory device in an electronic device 700, and is configured to store a program and data, for example, the computer readable storage medium 720. It may be understood that the computer readable storage medium 720 herein may include a built-in storage medium in the electronic device 700, and certainly may also include an extended storage medium supported by the electronic device 700. The computer readable storage medium provides a storage space, and the storage space stores an operating system of the electronic device 700. In addition, the storage space further stores one or more computer instructions that are applicable to be loaded and executed by the processor 710. These computer instructions may be one or more computer programs 721 (including program code).

According to another aspect of this application, a computer program product or a computer program is provided, where the computer program product or the computer program includes a computer instruction, and the computer instruction is stored in a computer readable storage medium, for example, the computer program 721. In this case, the data processing device 700 may be a computer. The processor 710 reads the computer instruction from the computer readable storage medium 720, and the processor 710 executes the computer instruction, so that the computer executes the encoding method or the decoding method provided in any of the foregoing optional manners.

In other words, when being implemented in software, the embodiments may be implemented in the form of a computer program product in whole or in part. The computer program product includes one or more computer instructions. When the computer program instruction is loaded and executed on the computer, all or a part of a process or a function in embodiments of this application is implemented. The computer may be a general-purpose computer, a dedicated computer, a computer network, or another programmable apparatus. The computer instruction may be stored in a computer readable storage medium or transmitted from one computer readable storage medium to another computer readable storage medium. For example, the computer instruction may be transmitted from a website site, computer, server, or data center to another website site, computer, server, or data center in a wired (such as a coaxial cable, an optical fiber, a digital subscriber line (DSL)), or wireless (such as infrared, wireless, and microwave) manner.

A person of ordinary skill in the art may recognize that, with reference to the examples described in the embodiments disclosed herein, units and procedure steps may be implemented by electronic hardware or a combination of computer software and electronic hardware. Whether these functions are implemented in hardware or software depends on the specific application and design constraints of the technical solution. A person skilled in the art may use different methods for different specific applications to implement the described functions, but this implementation should not be considered to be beyond the scope of this application.

Finally, it should be noted that the foregoing content is merely a specific implementation manner of this application, but the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

**Claims**

1. A decoding method, comprising:

   determining a residual block of a current block in a current sequence based on a bitstream;
   predicting at least one matching block of the current block based on an intra template matching prediction IntraTMP mode;
   determining a target prediction block of the current block based on the at least one matching block; and
   obtaining a reconstructed block of the current block based on the residual block of the current block and the target prediction block.

2. The method of claim 1, wherein the predicting the at least one matching block of the current block based on the intra template matching prediction IntraTMP mode comprises:

   determining a first flag based on the bitstream; and
   predicting the at least one matching block based on the IntraTMP mode if the first flag indicates using the IntraTMP mode for fusion prediction.

3. The method of claim 2, wherein the determining the first flag based on the bitstream comprises:

   determining a second flag based on the bitstream; and
   determining the first flag based on the bitstream if the second flag indicates using the IntraTMP mode for prediction.

4. The method of claim 2, wherein the determining the first flag based on the bitstream comprises:

   determining a target context index; and
   determining the first flag based on the bitstream by using the target context index.

5. The method of claim 4, wherein the determining the target context index comprises:

   determining the target context index based on decoded information of an adjacent decoded block of the current block; and/or
   determining the target context index based on a size of the current block.

6. The method of claim 5, wherein coordinates of the current block are (x, y), and the adjacent decoded block comprises a first decoded block whose coordinates are (x-1, y) and a second decoded block whose coordinates are (x, y-1); and decoded information of the first decoded block comprises a prediction mode used for a prediction block of the first decoded block, and decoded information of the second decoded block comprises a prediction mode used for a prediction block of the second decoded block; and

the determining the target context index based on the decoded information of the adjacent decoded block of the current block comprises:

if the prediction mode used for the prediction block of the first decoded block is a mode of performing fusion prediction based on the IntraTMP mode, assigning a first value as A; otherwise, assigning the first value as B, both A and B being integers;

if the prediction mode used for the prediction block of the second decoded block is a prediction mode of performing fusion prediction based on the IntraTMP mode, assigning a second value as C; otherwise, assigning the second value as D, both C and D being integers; and

determining a sum of the first value and the second value as the target context index.

7. The method of any one of claims 1 to 6, wherein the predicting the at least one matching block of the current block based on the intra template matching prediction IntraTMP mode comprises:

performing template matching on the current block based on the IntraTMP mode to obtain X candidate matching blocks; and

determining the at least one matching block based on the X candidate matching blocks.

8. The method of claim 7, wherein the performing template matching on the current block based on the IntraTMP mode to obtain the X candidate matching blocks comprises:

performing intra template matching in a search area of the current block based on the IntraTMP mode, to obtain all candidate matching blocks of the current block; and

determining, as the X candidate matching blocks, matching blocks sorted in the first X positions in an ascending order of template error values.

9. The method of claim 7, wherein the performing template matching on the current block based on the IntraTMP mode to obtain the X candidate matching blocks comprises:
constructing a candidate matching block list based on the IntraTMP mode, wherein the candidate matching block list is used to recode X matching blocks with least template error values obtained by performing intra template matching in a search area of the current block.

10. The method of claim 9, wherein the performing template matching on the current block based on the IntraTMP mode to obtain the X candidate matching blocks comprises:

dividing the search area of the current block into Y sub-areas; and

performing intra template matching in each of the Y sub-areas based on the IntraTMP mode, to obtain candidate matching blocks in the respective sub-areas,

wherein the X candidate matching blocks comprise the candidate matching blocks in the respective sub-areas.

11. The method of claim 10, wherein X=Y, or X is a multiple of Y.

12. The method of any one of claims 7 to 11, wherein the determining the at least one matching block based on the X candidate matching blocks comprises:

determining N available matching blocks based on the X candidate matching blocks, wherein X≥N; and

determining the at least one matching block based on the N available matching blocks.

13. The method of claim 12, wherein X is a multiple of N.

14. The method of claim 12, wherein the determining the N available matching blocks based on the X candidate matching blocks comprises:
pruning the X candidate matching blocks based on spacings between the X candidate matching blocks to obtain the N available matching blocks.

15. The method of claim 14, wherein the pruning the X candidate matching blocks based on the spacings between the X candidate matching blocks to obtain the N available matching blocks comprises:

determining, from the X candidate matching blocks, a current candidate matching block used for pruning, according to an ascending order of template error values;
determining a pruning range of the current candidate matching block; and
removing all candidate matching blocks except the current candidate matching block in the pruning range, to obtain remaining candidate matching blocks after performing pruning based on the current candidate matching block, and when a number of times of performing pruning on the X candidate matching blocks is equal to N, determining the first N candidate matching blocks among the remaining candidate matching blocks as the N available matching blocks, or when a quantity of the remaining candidate matching blocks obtained after performing pruning based on the current candidate matching block is less than or equal to N, determining the first N candidate matching block among remaining candidate matching blocks obtained after performing previous pruning as the N available matching blocks.

16. The method of claim 15, wherein the determining the pruning range of the current candidate matching block comprises:
determining the pruning range based on a size of the current block and the current candidate matching block.

17. The method of claim 16, wherein the determining the pruning range based on the size of the current block and the current candidate matching block comprises:

determining (S/E)*H as the pruning range by using a block vector pointing from the current block to the current candidate matching block as a center,
wherein / represents a division operator, * represents a multiplication operator, S represents a matching step used for the X candidate matching blocks, H represents a height of current block, and E is a positive integer.

18. The method of claim 15, wherein the determining the pruning range of the current candidate matching block comprises:
determining the pruning range based on a predefined value.

19. The method of claim 12, wherein the determining the N available matching blocks based on the X candidate matching blocks comprises:
refining the X candidate matching blocks to obtain the N available matching blocks.

20. The method of claim 19, wherein the refining the X candidate matching blocks to obtain the N available matching blocks comprises:determining a refining range of a current candidate matching block in the X candidate blocks;

performing intra template matching in the refining range based on at least one matching step to obtain matching blocks in the refining range, wherein each of the at least one matching step is less than a matching step used for the X candidate matching blocks;
determining a matching block having a least template loss value in the matching blocks in the refining range as a candidate matching block obtained by refining the current candidate matching block; and
determining the candidate matching block obtained by refining the current candidate matching block as an available matching block in the N available matching blocks.

21. The method of claim 20, wherein the determining the refining range of the current candidate matching block in the X candidate matching blocks comprises:
determining the refining range based on a size of the current block and the current candidate matching block.

22. The method of claim 21, wherein the determining the refining range based on the size of the current block and the current candidate matching block comprises:

determining (S/F)*H as the refining range by using a block vector pointing from the current block to the current candidate matching block as a center,
wherein / represents a division operator, * represents a multiplication operator, S represents a matching step used for the X candidate matching blocks, H represents a height of current block, and F is a positive integer.

23. The method of claim 20, wherein the determining the refining range of the current candidate matching block in the X candidate matching blocks comprises:
determining the refining range based on a predefined value.

24. The method of claim 20, wherein the determining the matching block with the least template loss value in the matching blocks in the refining range as the candidate matching block obtained by refining the current candidate matching block comprises:
determining, if the current candidate matching block is an i-th matching block in the X candidate matching blocks and a j-th matching block in the refining range is a matching block that has a least template loss value in the first j matching blocks in the refining range, the j-th matching block as a candidate matching block obtained by refining the current candidate matching block in a case that candidate matching blocks obtained by refining previous i-1 candidate matching blocks do not comprise the j-th matching block.

25. The method of claim 12, wherein the determining the N available matching blocks based on the X candidate matching blocks comprises:
pruning and refining the X candidate matching blocks to obtain the N available matching blocks.

26. The method of claim 25, wherein the pruning and refining the X candidate matching blocks to obtain the N available matching block comprises:

after pruning the X candidate matching blocks, refining the pruned candidate matching blocks; or
after refining the X candidate matching blocks, pruning the refined candidate matching blocks; or
after pruning the X candidate matching blocks once based on a current candidate matching block in the X candidate matching blocks, refining the current candidate matching block.

27. The method of any one of claims 12 to 26, wherein the determining the at least one matching block based on the N available matching blocks comprises:

determining a fusion condition for the N available matching blocks; and
determining, from the N available matching blocks, an available matching block that meets the fusion condition as the at least one matching block.

28. The method of claim 27, wherein the determining the fusion condition for the N available matching blocks comprises:
determining the fusion condition based on at least one of:
a size of a template of the current block, a bit width of a pixel of the current block in the current block, and a minimum template error value of the N available matching blocks.

29. The method of claim 28, wherein the fusion condition comprises a first threshold, wherein the first threshold is a threshold determined based on the size of the template of the current block and the bit width; and
the determining, from the N available matching blocks, the available matching block that meets the fusion condition as the at least one matching block comprises:
determining, from the N available matching blocks, an available matching block having a template error value less than or equal to the first threshold as the at least one matching block.

30. The method of claim 29, wherein the first threshold is determined according to following formula:

$$T_1 = n_1 << (b_{depth} - n_2) * n_{template} \; ;$$

wherein << is a left shift operator, - is a subtraction operator, * is a multiplication operator, T1 represents the first threshold, $b_{depth}$ represents the bit width, and $n_{template}$ represents a quantity of pixels in the template of the current block, and both $n_1$ and $n_2$ are positive integers.

31. The method of any one of claims 28 to 30, wherein the fusion condition comprises a second threshold, and the second threshold is a threshold determined based on the minimum template error value; and
the determining, from the N available matching blocks, the available matching block that meets the fusion condition as the at least one matching block comprises:
determining, from the N available matching blocks, an available matching block having a template error value less than or equal to the second threshold as the at least one matching block.

32. The method of claim 31, wherein the second threshold is determined according to the following formula:

$$T_2 = \min_{SAD} << n_3;$$

wherein << is a left shift operator, $T_2$ represents the second threshold, $\min_{SAD}$ represents the minimum template error value, and $n_3$ is a positive integer.

33. The method of any one of claims 12 to 26, wherein the determining the at least one matching block based on the N available matching blocks comprises:

    determining indication information based on the bitstream, wherein the indication information is used to indicate the at least one matching block in the N available matching blocks; and
    determining the at least one matching block based on the indication information.

34. The method of any one of claims 1 to 33, wherein the determining the target prediction block based on the at least one matching block comprises:
    performing, if the at least one matching block comprises a plurality of matching blocks, weighting processing on the plurality of matching blocks to obtain the target prediction block of the current block.

35. The method of claim 34, wherein the performing weighting processing on the plurality of matching blocks to obtain the target prediction block comprises:

    determining weight values of respective matching blocks of the plurality of matching blocks; and
    performing weighting processing on the plurality of matching blocks based on the weight values of the respective matching blocks to obtain the target prediction block.

36. The method of claim 35, wherein the determining the weight values of the respective matching blocks of the plurality of matching blocks comprises:
    determining the weight values of the respective matching blocks based on template error values of the respective matching blocks, a quantity of the plurality of matching blocks, and a sum of the weight values of the plurality of matching blocks.

37. The method of claim 36, wherein the determining the weight values of the respective matching blocks based on the template error values of the respective matching blocks, the quantity of the plurality of matching blocks, and the sum of the weight values of the plurality of matching blocks comprises:

    determining, based on the template error values of the respective matching blocks, third values corresponding to the respective matching blocks;
    performing summation on the third values corresponding to the respective matching blocks to obtain a fourth value; and
    determining the weight values of the respective matching blocks based on the fourth value and the template error values of the respective matching blocks.

38. The method of claim 37, wherein the determining, based on the template error values of the respective matching blocks, the third values corresponding to the respective matching blocks comprises:

    if a template error value of an i-th matching block in the plurality of matching blocks is 0, determining a preset value greater than 0 as a third value corresponding to the i-th matching block; or
    if a template error value of an i-th matching block is 0, determining the template error value of the i-th matching block as the third value corresponding to the i-th matching block.

39. The method of claim 37, wherein the determining the weight values of the respective matching blocks based on the fourth value and the template error values of the respective matching blocks comprises:
    determining a weight value of an i-th matching block in the plurality of matching blocks in following manner:

    subtracting, from the fourth value, a third value corresponding to the i-th matching block, to obtain a fifth value; and
    multiplying the fourth value by n-1 to obtain a sixth value, where n represents a quantity of the plurality of matching blocks; and
determining the weight value of the i-th matching block based on the fifth value and the sixth value.

40. The method of claim 39, wherein the determining the weight value of the i-th matching block based on the fifth value and the sixth value comprises:

if the i-th matching block is not a last matching block of the plurality of matching blocks, determining a ratio of the fifth value to the sixth value as the weight value of the i-th matching block;
if the i-th matching block is the last matching block, subtracting weight values of previous i-1 matching blocks of the plurality of matching blocks from a preset total weight value, to obtain the weight value of the last matching block.

41. The method of claim 39, wherein the determining the weight value of the i-th matching block based on the fifth value and the sixth value comprises:

determining a ratio of the fifth value to the sixth value as the weight value of the i-th matching block,
wherein a sum of the weight values of the plurality of matching blocks is equal to a preset total weight value.

42. The method of claim 40 or 41, wherein the ratio of the fifth value to the sixth value is a value obtained by using a bit operation, an addition operation, and a subtraction operation.

43. The method of claim 42, wherein the ratio of the fifth value to the sixth value is a value determined by following formula:

$$W_i = (D_5 * V * W_{sum} + D_{Add}) >> D_{Shift} \, ;$$

wherein * is a multiplication operator, + is an addition operator, >> is a right shift operator, $D_5$ represents the fifth value, $W_{sum}$ represents the total weight value, V is a value retrieved from a lookup table according to a seventh value, $D_{Shift}$ is a right shift amount determined according to the seventh value, the seventh value is a value determined according to the sixth value, and $D_{Add}$ is a value determined according to $D_{Shift}$.

44. The method of claim 43, wherein V and $D_{Shift}$ are determined in the following manner:

$$X = \lceil \log_2 D_6 \rceil;$$

$$D_7 = ((n-1) * D_4 << 4 >> X) \& 15;$$

$$V = table[D_7] | 8;$$

$$X = D_7 == 0 ? X : X+1;$$

$$D_{Shift} = X+3;$$

wherein $\lceil \rceil$ is an ceiling operator, * is a multiplication operator, << is a left shift operator, >> is a right shift operator, & is a logic AND operator, $\times$ is a logic OR operator, ? is a conditional operator, + is an addition operator, $D_6$ represents the sixth value, $D_4$ represents the fourth value, table[] represents a lookup table, and $D_7$ represents the seventh value.

45. The method of claim 43, wherein $D_{Add} = 1 << (D_{Shift} - 1)$, or $D_{Add} = 1 << D_{Shift}$, wherein << is a left shift operator, and - is a subtraction operator.

46. The method of claim 35, wherein the determining the weight values of the respective matching blocks of the plurality of matching blocks comprises:

selecting, from a plurality of candidate sets and based on a quantity of the plurality of matching blocks, a first candidate set having a quantity of weight values equal to the quantity of the plurality of matching blocks, wherein each of the candidate sets comprises at least one candidate weight value; and

determining the weight values of the respective matching blocks based on the first candidate set.

47. The method of claim 46, wherein template error values of the respective matching blocks are negatively correlated with the weight values of the respective matching blocks.

48. The method of claim 34, wherein the performing weighting processing on the plurality of matching blocks based on the weight values of the respective matching blocks to obtain the target prediction block comprises:

performing summation on the matching blocks multiplied by the weight values of the respective matching blocks, to obtain an eighth value;
adding $C_{offset}$ to the eighth value to obtain a ninth value; and
right shifting the ninth value by $C_{Shift}$ to obtain the target prediction block,
wherein $C_{offset}$ is a value determined according to $C_{Shift}$, and $C_{Shift}$ is a value determined according to a sum of the weight values of the plurality of matching blocks.

49. The method of claim 48, wherein $C_{offset}$=<<($C_{Shift}$-1), $C_{Shift}=\lceil log_2 W_{sum} \rceil$, wherein $\lceil \rceil$ is a ceiling operator, << is a left shift operator, and $W_{sum}$ represents the sum of the weight values of the plurality of matching blocks.

50. The method of claim 34, wherein the performing weighting processing on the plurality of matching blocks to obtain the target prediction block comprises:

dividing the current block into a plurality of regions;
determining, for a first region among the plurality of regions, weight values of the respective matching blocks in the first region; and
performing weighting processing on the plurality of matching blocks in the first region based on the weight values of the respective matching blocks in the first region, to obtain a prediction value of the target prediction block in the first region,
wherein the target prediction block comprises prediction values of respective regions of the plurality of regions.

51. The method of claim 50, wherein the dividing the current block into the plurality of regions comprises:
dividing the current block into the plurality of regions in a horizontal direction or a vertical direction.

52. The method of any one of claims 1 to 33, wherein the determining the target prediction block based on the at least one matching block comprises:

if the at least one matching block comprises only a single matching block, predicting the current block by using a first intra prediction mode, to obtain a first prediction block; and
performing weighting processing on the single matching block and the first prediction block to obtain the target prediction block.

53. The method of claim 52, wherein a weight value for the single matching block and a weight value for the first predicted block are both predefined weight values.

54. The method of claim 52, wherein the method further comprises:
determining a weight value for the single matching block and a weight value for the first predicted block based on at least one of following:
decoded information of an adjacent decoded block, a size of the current block, a template size of the current block, a type of the first intra prediction mode, and locations of regions of the current block.

55. The method of any one of claims 1 to 33, wherein the determining the target prediction block of the current block based on the at least one matching block comprises:

if the at least one matching block comprises a plurality of matching blocks, predicting the current block by using a second intra prediction mode, to obtain a second prediction block; and
performing weighting processing on the plurality of matching blocks and the second prediction block to obtain the target prediction block.

**56.** The method of claim 55, wherein a weight value for the second predicted block is a predefined weight value.

**57.** The method of claim 55, wherein the method further comprises:
determining a weight value for the second prediction block based on at least one of following:
decoded information of an adjacent decoded block, a size of the current block, a template size of the current block, a type of the second intra prediction mode, a total weight value of the plurality of matching blocks, and locations of regions of the current block.

**58.** The method of any one of claims 1 to 57, wherein a template of the current block comprises at least one of: a left reconstructed pixel, a lower left reconstructed pixel, an upper left reconstructed pixel, an upper reconstructed pixel, and an upper right reconstructed pixel.

**59.** The method of any one of claims 1 to 58, wherein the predicting the at least one matching block of the current block based on the intra template matching prediction IntraTMP mode comprises:

determining a constraint condition for using the IntraTMP mode; and
predicting the at least one matching block based on the IntraTMP mode if the constraint condition is met.

**60.** The method of claim 59, wherein the constraint condition is obtained according to at least one of: a size of the current block, decoded information of an adjacent decoded block, a sequence level flag, a frame level flag, a macroblock level flag, a type of a slice in which the current block is located, or a frame type of an image frame in which the current block is located.

**61.** An encoding method, comprising:

predicting at least one matching block of a current block in a current sequence based on an intra template matching prediction IntraTMP mode;
determining a target prediction block of the current block based on the at least one matching block;
obtaining a residual block of the current block based on the target prediction block and an original block of the current block; and
encoding the residual block of the current block.

**62.** The method of claim 61, wherein the method further comprises:

encoding a first flag,
wherein the first flag indicates using the IntraTMP mode for fusion prediction.

**63.** The method of claim 62, wherein the method further comprises:

encoding a second flag,
wherein the second flag indicates using the IntraTMP mode for prediction.

**64.** The method of claim 62, wherein the encoding the second flag comprises:

determining a target context index; and
encoding the first flag by using the target context index.

**65.** The method of claim 64, wherein the determining the target context index comprises:

determining the target context index based on encoded information of an adjacent coding block of the current block; and/or
determining the target context index based on a size of the current block.

**66.** The method of claim 65, wherein coordinates of the current block are (x, y), and the adjacent coding block comprises a first coding block whose coordinates are (x-1, y) and a second coding block whose coordinates are (x, y-1); and encoded information of the first coding block comprises a prediction mode used for a prediction block of the first coding block, and decoded information of the second coding block comprises a prediction mode used for a prediction block of the second coding block; and

the determining the target context index based on the encoded information of the adjacent coding block of the current block comprises:

if the prediction mode used for the prediction block of the first coding block is a mode of performing fusion prediction based on the IntraTMP mode, assigning a first value as A; otherwise, assigning the first value as B, both A and B being integers;
if the prediction mode used for the prediction block of the second coding block is a prediction mode of performing fusion prediction based on the IntraTMP mode, assigning a second value as C; otherwise, assigning the second value as D, both C and D being integers; and
determining a sum of the first value and the second value as the target context index.

67. The method of any one of claims 61 to 66, wherein the predicting the at least one matching block of the current block based on the intra template matching prediction IntraTMP mode comprises:

performing template matching on the current block based on the IntraTMP mode to obtain X candidate matching blocks; and
determining the at least one matching block based on the X candidate matching blocks.

68. The method of claim 67, wherein the performing template matching on the current block based on the IntraTMP mode to obtain the X candidate matching blocks comprises:

performing intra template matching in a search area of the current block based on the IntraTMP mode, to obtain all candidate matching blocks of the current block; and
determining, as the X candidate matching blocks, matching blocks sorted in the first X positions in an ascending order of template error values.

69. The method of claim 67, wherein the performing template matching on the current block based on the IntraTMP mode to obtain the X candidate matching blocks comprises:
constructing a candidate matching block list based on the IntraTMP mode, wherein the candidate matching block list is used to recode X matching blocks with least template error values obtained by performing intra template matching in a search area of the current block.

70. The method of claim 69, wherein the performing template matching on the current block based on the IntraTMP mode to obtain the X candidate matching blocks comprises:

dividing the search area of the current block into Y sub-areas; and
performing intra template matching in each of the Y sub-areas based on the IntraTMP mode, to obtain candidate matching blocks in the respective sub-areas,
wherein the X candidate matching blocks comprise the candidate matching blocks in the respective sub-areas.

71. The method of claim 70, wherein X=Y, or X is a multiple of Y.

72. The method of any one of claims 67 to 71, wherein the determining the at least one matching block based on the X candidate matching blocks comprises:

determining N available matching blocks based on the X candidate matching blocks, wherein $X \geq N$; and
determining the at least one matching block based on the N available matching blocks.

73. The method of claim 72, wherein X is a multiple of N.

74. The method of claim 72, wherein the determining the N available matching blocks based on the X candidate matching blocks comprises:
pruning the X candidate matching blocks based on spacings between the X candidate matching blocks to obtain the N available matching blocks.

75. The method of claim 74, wherein the pruning the X candidate matching blocks based on the spacings between the X candidate matching blocks to obtain the N available matching blocks comprises:

determining, from the X candidate matching blocks, a current candidate matching block used for pruning, according to an ascending order of template error values; and

determining a pruning range of the current candidate matching block; and

removing all candidate matching blocks except the current candidate matching block in the pruning range, to obtain remaining candidate matching blocks after performing pruning based on the current candidate matching block, and when a number of times of performing pruning on the X candidate matching blocks is equal to N, determining the first N candidate matching blocks among the remaining candidate matching blocks as the N available matching blocks, or when a quantity of the remaining candidate matching blocks obtained after performing pruning based on the current candidate matching block is less than or equal to N, determining the first N candidate matching block among remaining candidate matching blocks obtained after performing previous pruning as the N available matching blocks.

76. The method of claim 75, wherein the determining the pruning range of the current candidate matching block comprises:

determining the pruning range based on a size of the current block and the current candidate matching block.

77. The method of claim 76, wherein the determining the pruning range based on the size of the current block and the current candidate matching block comprises:

determining (S/E)*H as the pruning range by using a block vector pointing from the current block to the current candidate matching block as a center; and

wherein / represents a division operator, * represents a multiplication operator, S represents a matching step used for the X candidate matching blocks, H represents a height of current block, and E is a positive integer.

78. The method of claim 75, wherein the determining the pruning range of the current candidate matching block comprises:

determining the pruning range based on a predefined value.

79. The method of claim 72, wherein the determining the N available matching blocks based on the X candidate matching blocks comprises:

refining the X candidate matching blocks to obtain the N available matching blocks.

80. The method of claim 79, wherein the refining the X candidate matching blocks to obtain the N available matching blocks comprises:

determining a refining range of a current candidate matching block in the X candidate matching blocks;

performing intra template matching in the refining range based on at least one matching step to obtain matching blocks in the refining range, wherein each of the at least one matching step is less than a matching step used for the X candidate matching blocks;

determining a matching block having a least template loss value in the matching blocks in the refining range as a candidate matching block obtained by refining the current candidate matching block; and

determining the candidate matching block obtained by refining the current candidate matching block as an available matching block in the N available matching blocks.

81. The method of claim 80, wherein the determining the refining range of the current candidate matching block of the X candidate matching blocks comprises:

determining the refining range based on a size of the current block and the current candidate matching block.

82. The method of claim 81, wherein the determining the refining range based on the size of the current block and the current candidate matching block comprises:

determining (S/F)*H as the refining range by using a block vector pointing from the current block to the current candidate matching block as a center,

wherein / represents a division operator, * represents a multiplication operator, S represents a matching step used for the X candidate matching blocks, H represents a height of current block, and F is a positive integer.

83. The method of claim 80, wherein the determining the refining range of the current candidate matching block in the X candidate matching blocks comprises:

determining the refining range based on a predefined value.

84. The method of claim 80, wherein the determining the matching block with the least template loss value in the matching blocks in the refining range as the candidate matching block obtained by refining the current candidate matching block comprises:

determining, if the current candidate matching block is an i-th matching block in the X candidate matching blocks and a j-th matching block in the refining range is a matching block that has a least template loss value in the first j matching blocks in the refining range, the j-th matching block as a candidate matching block obtained by refining the current candidate matching block in a case that candidate matching blocks obtained by refining previous i-1 candidate matching blocks do not comprise the j-th matching block.

85. The method of claim 72, wherein the determining the N available matching blocks based on the X candidate matching blocks comprises:

pruning and refining the X candidate matching blocks to obtain the N available matching blocks.

86. The method of claim 85, wherein the pruning and refining the X candidate matching blocks to obtain the N available matching blocks comprises:

after pruning the X candidate matching blocks, refining the pruned candidate matching blocks; or
after refining the X candidate matching blocks, pruning the refined candidate matching blocks; or
after pruning the X candidate matching blocks once based on a current candidate matching block in the X candidate matching blocks, refining the current candidate matching block.

87. The method of any one of claims 72 to 86, wherein the determining the at least one matching block based on the N available matching blocks comprises:

determining a fusion condition for the N available matching blocks; and
determining, from the N available matching blocks, an available matching block that meets the fusion condition as the at least one matching block.

88. The method of claim 87, wherein the determining the fusion condition for the N available matching blocks comprises:
determining the fusion condition based on at least one of:
a size of a template of the current block, a bit width of a pixel of the current block in the current block, and a minimum template error value of the N available matching blocks.

89. The method of claim 88, wherein the fusion condition comprises a first threshold, wherein the first threshold is a threshold determined based on the size of the template of the current block and the bit width; and
the determining, from the N available matching blocks, the available matching block that meets the fusion condition as the at least one matching block comprises:
determining, from the N available matching blocks, an available matching block having a template error value less than or equal to the first threshold as the at least one matching block.

90. The method of claim 89, wherein the first threshold is determined according to following formula:

$$T_1 = n_1 << (b_{depth} - n_2) * n_{template} \text{ ;}$$

wherein << is a left shift operator, - is a subtraction operator, * is a multiplication operator, T1 represents the first threshold, $b_{depth}$ represents the bit width, and $n_{template}$ represents a quantity of pixels in the template of the current block, and both $n_1$ and $n_2$ are positive integers.

91. The method of any one of claims 88 to 90, wherein the fusion condition comprises a second threshold, and the second threshold is a threshold determined based on the minimum template error value; and
the determining, from the N available matching blocks, the available matching block that meets the fusion condition as the at least one matching block comprises:
determining, from the N available matching blocks, an available matching block having a template error value less than or equal to the second threshold as the at least one matching block.

92. The method of claim 91, wherein the second threshold is determined according to the following formula:

$$T_2 = \min_{SAD} << n_3;$$

wherein << is a left shift operator, $T_2$ represents the second threshold, $\min_{SAD}$ represents the minimum template error value, and $n_3$ is a positive integer.

93. The method of any one of claims 72 to 86, the method further comprising:

determining indication information, wherein the indication information is used to indicate the at least one matching block in the N available matching blocks; and
encoding the indication information.

94. The method of any one of claims 61 to 93, wherein the determining the target prediction block based on the at least one matching block comprises:
performing, if the at least one matching block comprises a plurality of matching blocks, weighting processing on the plurality of matching blocks to obtain the target prediction block of the current block.

95. The method of claim 94, wherein the performing weighting processing on the plurality of matching blocks to obtain the target prediction block comprises:

determining weight values of respective matching blocks of the plurality of matching blocks; and
performing weighting processing on the plurality of matching blocks based on the weight values of the respective matching blocks to obtain the target prediction block.

96. The method of claim 95, wherein the determining the weight values of the respective matching blocks of the plurality of matching blocks comprises:
determining the weight values of the respective matching blocks based on template error values of the respective matching blocks, a quantity of the plurality of matching blocks, and a sum of the weight values of the plurality of matching blocks.

97. The method of claim 96, wherein the determining the weight values of the respective matching blocks based on the template error values of the respective matching blocks, the quantity of the plurality of matching blocks, and the sum of the weight values of the plurality of matching blocks comprises:

determining, based on the template error values of the respective matching blocks, third values corresponding to the respective matching blocks; and
performing summation on the third values corresponding to the respective matching blocks to obtain a fourth value; and
determining the weight values of the respective matching blocks based on the fourth value and the template error values of the respective matching blocks.

98. The method of claim 97, wherein the determining, based on the template error values of the respective matching blocks, the third values corresponding to the respective matching blocks comprises:

if a template error value of an i-th matching block in the plurality of matching blocks is 0, determining a preset value greater than 0 as a third value corresponding to the i-th matching block; or
if a template error value of an i-th matching block is 0, determining the template error value of the i-th matching block as the third value corresponding to the i-th matching block.

99. The method of claim 97, wherein the determining the weight values of the respective matching blocks based on the fourth value and the template error values of the respective matching blocks comprises:
determining a weight value of an i-th matching block in the plurality of matching blocks in following manner:

subtracting, from the fourth value, a third value corresponding to the i-th matching block, to obtain a fifth value; and
multiplying the fourth value by n-1 to obtain a sixth value, where n represents a quantity of the plurality of matching blocks; and

determining the weight value of the i-th matching block based on the fifth value and the sixth value.

**100.**
The method of claim 99, wherein the determining the weight value of the i-th matching block based on the fifth value and the sixth value comprises:

if the i-th matching block is not a last matching block of the plurality of matching blocks, determining a ratio of the fifth value to the sixth value as the weight value of the i-th matching block;
if the i-th matching block is the last matching block, subtracting weight values of previous i-1 matching blocks of the plurality of matching blocks from a preset total weight value, to obtain the weight value of the last matching block.

**101.**
The method of claim 99, wherein the determining the weight value of the i-th matching block based on the fifth value and the sixth value comprises:

determining a ratio of the fifth value to the sixth value as the weight value of the i-th matching block,
wherein a sum of the weight values of the plurality of matching blocks is equal to a preset total weight value.

**102.**
The method of claim 100 or 101, wherein the ratio of the fifth value to the sixth value is a value obtained by using a bit operation, an addition operation, and a subtraction operation.

**103.**
The method of claim 102, wherein the ratio of the fifth value to the sixth value is a value determined by following formula:

$$W_i=(D_5*V*W_{sum}+D_{Add})>>D_{Shift}\,;$$

wherein * is a multiplication operator, + is an addition operator, >> is a right shift operator, $D_5$ represents the fifth value, $W_{sum}$ represents the total weight value, V is a value retrieved from a lookup table according to a seventh value, $D_{Shift}$ is a right shift amount determined according to the seventh value, the seventh value is a value determined according to the sixth value, and $D_{Add}$ is a value determined according to $D_{Shift}$.

**104.**
The method of claim 103, wherein V and $D_{Shift}$ are determined in the following manner:

$$X=\lceil\log_2 D_6\rceil;$$

$$D_7=((n-1)*D_4<<4>>X)\&15;$$

$$V=table[D_7]|8;$$

$$X=D_7==0?X:X+1;$$

$$D_{Shift}=X+3;$$

wherein $\lceil\rceil$ is an ceiling operator, * is a multiplication operator, << is a left shift operator, >> is a right shift operator, & is a logic AND operator, $\times$ is a logic OR operator, ? is a conditional operator, + is an addition operator, $D_6$ represents the sixth value, $D_4$ represents the fourth value, table[] represents a lookup table, and $D_7$ represents the seventh value.

**105.**
The method of claim 103, wherein $D_{Add}=1<<(D_{Shift}-1)$, or $D_{Add}=1<<D_{Shift}$, wherein << is a left shift operator, and - is a subtraction operator.

**106.**

The method of claim 95, wherein the determining the weight values of the respective matching blocks of the plurality of matching blocks comprises:

selecting, from a plurality of candidate sets and based on a quantity of the plurality of matching blocks, a first candidate set having a quantity of weight values equal to the quantity of the plurality of matching blocks, wherein each of the candidate sets comprises at least one candidate weight value; and
determining the weight values of the respective matching blocks based on the first candidate set.

**107.**

The method of claim 106, wherein template error values of the respective matching blocks are negatively correlated with the weight values of the respective matching blocks.

**108.**

The method of claim 94, wherein the performing weighting processing on the plurality of matching blocks based on the weight values of the respective matching blocks to obtain the target prediction block comprises:

performing summation on the matching blocks multiplied by the weight values of the respective matching blocks, to obtain an eighth value;
adding $C_{offset}$ to the eighth value to obtain a ninth value; and
right shifting the ninth value by $C_{Shift}$ to obtain the target prediction block,
wherein $C_{offset}$ is a value determined according to $C_{Shift}$, and $C_{Shift}$ is a value determined according to a sum of the weight values of the plurality of matching blocks.

**109.**

The method of claim 108, wherein $C_{offset}=<<(C_{Shift}-1)$, $C_{Shift}=\lceil \log_2 W_{sum} \rceil$, wherein $\lceil \rceil$ is a ceiling operator, $<<$ is a left shift operator, and $W_{sum}$ represents the sum of the weight values of the plurality of matching blocks.

**110.**

The method of claim 94, wherein the performing weighting processing on the plurality of matching blocks to obtain the target prediction block comprises:

dividing the current block into a plurality of regions;
determining, for a first region among the plurality of regions, weight values of the respective matching blocks in the first region; and
performing weighting processing on the plurality of matching blocks in the first region based on the weight values of the respective matching blocks in the first region, to obtain a prediction value of the target prediction block in the first region,
wherein the target prediction block comprises prediction values of respective regions of the plurality of regions.

**111.** The method of claim 110, wherein the dividing the current block into the plurality of regions comprises:
dividing the current block into the plurality of regions in a horizontal direction or a vertical direction.

**112.**

The method of any one of claims 61 to 93, wherein the determining the target prediction block based on the at least one matching block comprises:

if the at least one matching block comprises only a single matching block, predicting the current block by using a first intra prediction mode, to obtain a first prediction block; and
performing weighting processing on the single matching block and the first prediction block to obtain the target prediction block.

**113.**

The method of claim 112, wherein a weight value for the single matching block and a weight value for the first predicted block are both predefined weight values.

**114.**

The method of claim 112, wherein the method further comprises:

determining a weight value for the single matching block and a weight value for the first predicted block based on at least one of the following:
encoded information of an adjacent coding block, a size of the current block, a template size of the current block, a type of the first intra prediction mode, and locations of regions of the current block.

**115.**
The method of any one of claims 61 to 93, wherein the determining the target prediction block of the current block based on the at least one matching block comprises:

if the at least one matching block comprises a plurality of matching blocks, predicting the current block by using a second intra prediction mode, to obtain a second prediction block; and
performing weighting processing on the plurality of matching blocks and the second prediction block to obtain the target prediction block.

**116.**
The method of claim 115, wherein a weight value for the second predicted block is a predefined weight value.

**117.**
The method of claim 115, wherein the method further comprises:
determining a weight value for the second prediction block based on at least one of following:
encoded information of an adjacent coding block, a size of the current block, a template size of the current block, a type of the second intra prediction mode, a total weight value of the plurality of matching blocks, and locations of regions of the current block.

**118.**
The method of any one of claims 61 to 117, wherein a template of the current block comprises at least one of: a left reconstructed pixel, a lower left reconstructed pixel, an upper left reconstructed pixel, an upper reconstructed pixel, and an upper right reconstructed pixel.

**119.**
The method of any one of claims 61 to 118, wherein the predicting the at least one matching block of the current block based on the intra template matching prediction IntraTMP mode comprises:

determining a constraint condition for using the IntraTMP mode; and
predicting the at least one matching block based on the IntraTMP mode if the constraint condition is met.

**120.**
The method of claim 119, wherein the constraint condition is obtained according to at least one of: a size of the current block, encoded information of an adjacent coding block, a sequence level flag, a frame level flag, a macroblock level flag, a type of a slice in which the current block is located, or a frame type of an image frame in which the current block is located.

**121.**
A decoder, comprising:

a residual unit, configured to determine a residual block of a current block in a current sequence based on a bitstream;
a prediction unit, configured to predict at least one matching block of the current block based on an intra template matching prediction IntraTMP mode;
a determining unit, configured to determine a target prediction block of the current block based on the at least one matching block; and
a reconstruction unit, configured to obtain a reconstructed block of the current block based on the residual block of the current block and the target prediction block.

**122.**
An encoder, comprising:

a prediction unit, configured to predict at least one matching block of a current block in a current sequence based on an intra template matching prediction IntraTMP mode;

a determining unit, configured to determine a target prediction block of the current block based on the at least one matching block;

a residual unit, configured to obtain a residual block of the current block based on the target prediction block and an original block of the current block; and

an encoding unit, configured to encode the residual block of the current block.

**123.**
An electronic device, comprising:

a processor, configured to execute a computer program;
a computer readable storage medium, wherein the computer readable storage medium stores the computer program, and when the computer program is executed by the processor, the method according to any one of claims 1 to 60 or the method according to any one of claims 61 to 120 is implemented.

**124.**
A computer readable storage medium, storing a computer program, wherein the computer program is used to cause a computer to execute the method according to any one of claims 1 to 60 or the method according to any one of claims 61 to 120.

**125.**
A computer program product comprising a computer program/instruction, wherein the computer program/instruction, when being executed by a processor, implements the method according to any one of claims 1 to 60 or the method according to any one of claims 61 to 120.

**126.**
A bitstream, wherein the bitstream is the bitstream in the method according to any one of claims 1 to 60, or is a bitstream generated by the method according to any one of claims 61 to 120.

FIG. 1

FIG. 2

| Template area | Reconstructed area | Search area |

FIG. 3

Template area

FIG. 4

(a) Template matching with a step S(S>1)  (b) Template matching with a step S'(1≤S'<S)

▨ Template area    ← Block vector    ⌐ ⌐ Matching block

## FIG. 5

| 0 | 1 | 2 | 3 |

| 0 |
| 1 |
| 2 |
| 3 |

(a)            (b)

## FIG. 6

300

| Determine a residual block of a current block in a current sequence based on a bitstream | S310 |

| Predict at least one matching block of the current block based on an Intra Template Matching Prediction (IntraTMP) mode | S320 |

| Determine a target prediction block of the current block based on the at least one matching block | S330 |

| Obtain a reconstructed block of the current block based on the residual block of the current block and the target prediction block | S340 |

## FIG. 7

| BV1 | BV2 | BV3 | BV4 | BV5 | BV5 | BV6 |
|-----|-----|-----|-----|-----|-----|-----|

Before the first pruning and repfining

| BV1 | BV3 | BV4 | BV5 | BV6 | ... | ... |
|-----|-----|-----|-----|-----|-----|-----|

After the first pruning

| BV1 | BV3 | BV4 | BV6 | ... | ... | ... |
|-----|-----|-----|-----|-----|-----|-----|

After the second pruning

| BV1' | BV3 | BV4 | BV6 | ... | ... | ... |
|------|-----|-----|-----|-----|-----|-----|

After the first refining

| BV1' | BV3' | BV4 | BV6 | ... | ... | ... |
|------|------|-----|-----|-----|-----|-----|

After the second refining

Current block

Template area ← Block vector ⌐ ¬ Pruning and refining area

## FIG. 8

| BV1 | BV2 | BV3 | BV4 | BV5 | BV6 |
|-----|-----|-----|-----|-----|-----|

Before the first pruning and refining

| BV1 | BV3 | BV4 | BV5 | ... | ... |
|-----|-----|-----|-----|-----|-----|

After the first pruning

| BV1' | BV3 | BV4 | BV5 | ... | ... |
|------|-----|-----|-----|-----|-----|

After the first refining

| BV1' | BV3 | BV4 | ... | ... | ... |
|------|-----|-----|-----|-----|-----|

After the second pruning

| BV1' | BV3' | BV4 | ... | ... | ... |
|------|------|-----|-----|-----|-----|

After the second refining

## FIG. 9

Matching block 1    Matching block 2

Matching block 1    Matching block 2    Matching block 3

$W_1*$  + $W_2*$  + $W_3*$

Matching block 3

Target prediction block

Current block

| | Template area | | Reconstructed area | | Search area | ← | Block vector |

FIG. 10

(a)    (b)    (c)    (d)    (e)

Current block

Template area

FIG. 11

400

| Predict at least one matching block of a current block in a current sequence based on an intra template matching prediction IntraTMP mode | — S410 |

| Determine a target prediction block of the current block based on the at least one matching block | — S420 |

| Obtain a residual block of the current block based on the target prediction block and an original block of the current block | — S430 |

| Encode the residual block of the current block | — S440 |

## FIG. 12

500

**Decoder**

| Residual unit | 510 |
| Prediction unit | 520 |
| Determining unit | 530 |
| Reconstruction unit | 540 |

## FIG. 13

600

**Encoder**

| Prediction unit | 610 |
| Determining unit | 620 |
| Residual unit | 630 |
| Encoding unit | 640 |

## FIG. 14

700

**Electronic device**

Transceiver — 730

720

Computer readable storage medium

Computer programmer

721

Processor — 710

## FIG.15

## INTERNATIONAL SEARCH REPORT

| | International application No. |
|---|---|
| | **PCT/CN2023/070230** |

**A. CLASSIFICATION OF SUBJECT MATTER**

H04N19/593(2014.01)i; H04N19/176(2014.01)i; H04N19/70(2014.01)i

According to International Patent Classification (IPC) or to both national classification and IPC

**B. FIELDS SEARCHED**

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNTXT, ENTXTC, ENTXT, DWPI, WOTXT, USTXT, EPTXT, IEEE, JVET, CNKI: 模板匹配, 帧内, 预测, 融合, 上下文, 候选, 匹配块, 修剪, 精炼, 加权, 权重, intraTMP, template matching, intra, prediction, fusion, context, candidate, matching block, pruning, refining, weighting

**C. DOCUMENTS CONSIDERED TO BE RELEVANT**

| Category* | Citation of document, with indication, where appropriate, of the relevant passages | Relevant to claim No. |
|---|---|---|
| X | Karam Naser et al. "Evaluation of Template Matching Prediction for VVC" *Joint Video Experts Team (JVET) of ITU-T SG 16 WP 3 and ISO/IEC JTC 1/ SC 29, 21st Meeting, by teleconference, 6–15 Jan. 2021, Document: JVET-U0048,* 28 December 2020 (2020-12-28), sections 1-2 | 1, 58-61, 118-126 |
| A | Karam Naser et al. "Evaluation of Template Matching Prediction for VVC" *Joint Video Experts Team (JVET) of ITU-T SG 16 WP 3 and ISO/IEC JTC 1/ SC 29, 21st Meeting, by teleconference, 6–15 Jan. 2021, Document: JVET-U0048,* 28 December 2020 (2020-12-28), sections 1-2 | 2-57, 62-117 |
| X | XIE, Zhihuang et al. "AHG 12: On Signalling of Intra Template Matching" *Joint Video Experts Team (JVET) of ITU-T SG 16 WP 3 and ISO/IEC JTC 1/SC 29, 24th Meeting: Teleconference, 6–15 October 2021, Document: JVET-X0124,* 05 October 2021 (2021-10-05), sections 1-2 | 1, 58-61, 118-126 |

☑ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **22 September 2023** | **22 September 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

# EP 4 648 418 A1

**INTERNATIONAL SEARCH REPORT**

## C. DOCUMENTS CONSIDERED TO BE RELEVANT

| Category* | Citation of document, with indication, where appropriate, of the relevant passages | Relevant to claim No. |
|---|---|---|
| A | XIE, Zhihuang et al. "AHG 12: On Signalling of Intra Template Matching"<br>*Joint Video Experts Team (JVET) of ITU-T SG 16 WP 3 and ISO/IEC JTC 1/SC 29.*<br>*24th Meeting: Teleconference, 6–15 October 2021, Document: JVET-X0124,*<br>05 October 2021 (2021-10-05),<br>sections 1-2 | 2-57, 62-117 |
| A | CN 102067601 A (THOMSON LICENSING S.A.) 18 May 2011 (2011-05-18)<br>entire document | 1-126 |
| A | CN 114189688 A (SICHUAN UNIVERSITY) 15 March 2022 (2022-03-15)<br>entire document | 1-126 |
| A | WO 2022063729 A1 (INTERDIGITAL VC HOLDINGS FRANCE, SAS) 31 March 2022<br>(2022-03-31)<br>entire document | 1-126 |

Form PCT/ISA/210 (second sheet) (July 2022)

**INTERNATIONAL SEARCH REPORT**
Information on patent family members

International application No.

**PCT/CN2023/070230**

| Patent document cited in search report | | | Publication date (day/month/year) | Patent family member(s) | | | Publication date (day/month/year) |
|---|---|---|---|---|---|---|---|
| CN | 102067601 | A | 18 May 2011 | KR | 20110009141 | A | 27 January 2011 |
| | | | | KR | 101691199 | B1 | 30 December 2016 |
| | | | | EP | 2269379 | A1 | 05 January 2011 |
| | | | | EP | 2269379 | B1 | 27 February 2019 |
| | | | | WO | 2009126260 | A1 | 15 October 2009 |
| | | | | JP | 2011517227 | A | 26 May 2011 |
| | | | | JP | 5452584 | B2 | 26 March 2014 |
| | | | | BRPI | 0910477 | A2 | 29 September 2015 |
| | | | | US | 2011261882 | A1 | 27 October 2011 |
| CN | 114189688 | A | 15 March 2022 | None | | | |
| WO | 2022063729 | A1 | 31 March 2022 | EP | 4218240 | A1 | 02 August 2023 |

Form PCT/ISA/210 (patent family annex) (July 2022)